# EUROPÄISCHE PATENTSCHRIFT

(11) **EP 1 723 480 B1**
(45) Veröffentlichungstag und Bekanntmachung des Hinweises auf die Patenterteilung: **07.05.2008**
(21) Anmeldenummer: 05715957.6
(22) Anmeldetag: 11.03.2005
(51) Int. Cl.: G05D 16/06, F16K 7/17

(54) **PNEUMATISCHES DRUCKREGELVENTIL**
PNEUMATIC PRESSURE REGULATION VALVE
SOUPAPE PNEUMATIQUE DE REGULATION DE PRESSION

(30) Priorität: 12.03.2004 DE 202004003860 U; 20.08.2004 DE 202004013123 U
(43) Veröffentlichungstag der Anmeldung: 22.11.2006
(73) Patentinhaber: Hengst GmbH & Co. KG, 48147 Münster (DE)
(72) Erfinder: MEINIG, Uwe, 48161 Münster (DE); MAY, Thomas, 48565 Steinfurt (DE)
(74) Vertreter: Linnemann, Winfried
(86) Internationale Anmeldenummer: PCT/EP2005/002587
(87) Internationale Veröffentlichungsnummer: WO 2005/088417

(56) Entgegenhaltungen:
- DE-U1- 20 016 214
- US-A- 3 844 529

## Beschreibung

Die vorliegende Erfindung betrifft ein pneumatisches Druckregelventil, das im Verlauf einer Gasleitung angeordnet ist, deren Durchlaß mittels des Druckregelventils in Abhängigkeit vom Differenzdruck zwischen einem Referenzdruck und einem oder mehreren an mindestens einem Eingang des Druckregelventils anliegenden Gasdrücken selbsttätig veränderbar ist, wobei im Druckregelventil eine Stellmembran vorgesehen ist, die einerseits von dem Referenzdruck und andererseits von dem Gasdruck oder den Gasdrücken sowie von einer Regelfeder beaufschlagt ist, wodurch bei Veränderung des Differenzdrucks zwischen den an die Stellmembran angrenzenden Bereichen die Stellmembran verstellt wird und die Stellmembran selbst oder ein von der Stellmembran betätigter Schließkörper den Durchlaß durch einen Abströmquerschnitt des Druckregelventils vergrößert oder verkleinert, und wobei eine an den Abströmquerschnitt membranseitig angrenzende Struktur des Druckregelventils einen Anschlag für die Stellmembran oder für den von der Stellmembran betätigten Schließkörper in deren Schließstellung bildet.

Ein pneumatisches Druckregelventil in einer Ausführung als Drosselventil zur selbsttätigen Regelung des Drucks im Kurbelgehäuse einer Brennkraftmaschine, das die vorstehend genannten Merkmale aufweist, ist aus DE 200 16 214 U1 bekannt. Bei diesem bekannten Drosselventil ist vorgesehen, daß es zwei Kraftelemente zur Erzeugung der Rückstellkraft, die auf die Stellmembran wirkt, aufweist, wobei ein erstes Kraftelement seine Rückstellkraft über den gesamten Bewegungsweg der Stellmembran auf diese ausübt und wobei ein zweites Kraftelement seine Rückstellkraft nur über einen zweiten Teil des Bewegungsweges der Stellmembran auf diese ausübt, wobei dieser zweite Teil des Bewegungsweges der Weg zwischen einer Teilöffnungsstellung und der Schließstellung der Stellmembran ist. Bevorzugt ist weiter vorgesehen, daß die zwei Kraftelemente durch zwei Federn gebildet sind, von denen die erste in ständigem Wirkeingriff mit der Stellmembran steht und von denen die zweite erst nach einem ersten Teil des Bewegungsweges der Stellmembran in Schließrichtung in Wirkeingriff mit dieser gelangt. Die beiden Federn sind bevorzugt Schraubenfedern unterschiedlicher Länge.

Als nachteilig ist bei diesem bekannten Drosselventil anzusehen, daß durch den Einsatz von zwei Federn eine zusätzliche Feder erforderlich wird, die zusätzlich hergestellt und eingebaut werden muß. Die mit den zwei Kraftelementen erzielbare bessere Regelcharakteristik wird hier also mit einer höheren Zahl von Bauteilen und mit einem höheren Herstellungs- und Montageaufwand erkauft. Außerdem addieren sich nachteilig die Toleranzen der einzelnen Bauteile, hier der Federn, wodurch die Gesamtanordnung unpräziser wird.

Eine alternative Ausführung des bekannten Drosselventils gemäß DE 200 16 214 U1 sieht vor, daß das eine Kraftelement durch eine Feder gebildet ist und daß das andere Kraftelement die mit einer Eigenrückstellkraft oder mit einem integrierten Kraftelement versehener Stellmembran selbst ist. Hiermit wird zwar die Erfordernis einer separaten zweiten Feder vermieden, jedoch hat es sich herausgestellt, daß es schwierig ist, für diese Ventilausführung geeignete Stellmembranen herzustellen, die eine exakt definierte und dauerhaft konstante Eigenrückstellkraft bzw. ein entsprechend wirkendes, integriertes Kraftelement aufweisen.

Eine dritte Version des bekannten Drosselventils besitzt anstelle der zwei Kraftelemente ein mindestens zwei unterschiedliche Rückstellkräfte ausübendes Kraftelement, das über einen ersten Teil des Bewegungsweges der Stellmembran eine erste Rückstellkraft auf diese ausübt und das über einen zweiten Teil des Bewegungsweges der Stellmembran eine zweite, größere Rückstellkraft auf diese ausübt. Theoretisch ist diese Ausführung zwar eine elegantere Lösung, weil nur ein Kraftelement benötigt wird, jedoch hat es sich auch hier als schwierig herausgestellt, ein derartiges Kraftelement mit zwei wegabhängig unterschiedlichen Rückstellkräften reproduzierbar herzustellen und in das Drosselventil zu integrieren.

Für die vorliegende Erfindung stellt sich deshalb die Aufgabe, ein pneumatisches Druckregelventil der eingangs genannten Art zu schaffen, das die dargelegten Nachteile vermeidet und mit dem insbesondere bei einer einfachen Bauweise eine zuverlässige und dauerhaft gleichbleibende Funktion sowie eine gute Regelcharakteristik erzielt werden und das darüber hinaus die Möglichkeit einer Flüssigkeitsabscheidung aus dem das Druckregelventil durchströmenden Gasstrom bieten kann.

Die Lösung dieser Aufgabe gelingt erfindungsgemäß mit einem pneumatischen Druckregelventil der eingangs genannten Art, das dadurch gekennzeichnet ist, daß im Druckregelventil mindestens ein Voranschlag so angeordnet ist, daß bei Bewegung der Stellmembran in Schließrichtung die Stellmembran oder der von der Stellmembran betätigte Schließkörper zuerst in Kontakt mit dem Voranschlag gelangt und daß bei weiterer Bewegung der Stellmembran in Schließrichtung die Stellmembran oder der von der Stellmembran betätigte Schließkörper dann unter elastisch-flexibler Verformung oder unter weiterer elastisch-flexibler Verformung den Durchlaß weiter verkleinert und in einer Endstellung auch in Kontakt mit dem Anschlag gelangt.

Vorteilhaft benötigt dieses Druckregelventil keine zusätzliche Feder und kein sonstiges zusätzliches Kraftelement. Vielmehr genügt es, im Druckregelventil mindestens einen Voranschlag anzuordnen, der in der angegebenen Art und Weise mit der Stellmembran zusammenwirkt. Bei ihren Bewegungen vor einem Kontakt mit dem Voranschlag verhält sich die Stellmembran im erfindungsgemäßen Druckregelventil wie die Stellmembran in einem herkömmlichen Druckregelventil. Nach dem Kontakt der Stellmembran mit dem Voranschlag erfolgt die weitere Bewegung der Stellmembran unter einer durch den Voranschlag hervorgerufenen und beeinflußten geänderten Charakteristik, wodurch die gewünschte, verbesserte Regelcharakteristik des Druckregelventils erreicht wird. Die Änderung der Charakteristik in der Verstellung der Stellmembran hängt von den Eigenschaften der Stellmembran, vom Abstand zwischen dem Voranschlag und dem eigentlichen Anschlag für die Endstellung oder Schließstellung der Stellmembran und von der Gestaltung des Voranschlages ab. Durch Veränderung der Eigenschaften der Stellmembran und/oder des Abstandes zwischen Voranschlag und Anschlag und/oder der Gestaltung des Voranschlages kann eine Beeinflussung der Regelcharakteristik auf einfache Weise erreicht werden. Zusätzliche bewegliche Einzelteile werden für die Erzielung dieser Funktion nicht benötigt, so daß das Druckregelventil gemäß Erfindung nicht mit zusätzlichen Verschleißquellen belastet ist. Auch stellt die Integration eines Voranschlages in das Druckregelventil nur einen sehr geringen zusätzlichen Aufwand dar, der nicht zu einer Verteuerung der Herstellung des Druckregelventils und seiner Teile führt. Bei dem erfindungsgemäßen Druckregelventil wird also auf technisch besonders einfache und damit auch besonders kostengünstige Weise die gewünschte Verbesserung der Regelcharakteristik erreicht, wobei zugleich die Regelcharakteristik auch noch auf einfache Weise veränderbar und optimierbar ist.

In weiterer Ausgestaltung ist bevorzugt vorgesehen, daß die Stellmembran eine Elastomermembran ist und/oder daß der Schließkörper ein Elastomerkörper ist oder eine Elastomerauflage aufweist. Die Verwendung eines Elastomers für die Stellmembran und/oder den Schließkörper stellt zum einen die gewünschten elastisch-flexiblen Eigenschaften sicher und sorgt zum anderen für ein feinfühliges Ansprechen des Druckregelventils bei gleichzeitig langer Haltbarkeit.

Eine weitere Ausgestaltung sieht vor, daß der Voranschlag elastisch-flexibel ausgeführt und/oder gehaltert ist. In dieser Ausführung wird die Elastizität und Flexibilität der Stellmembran mit einer Elastizität und Flexibilität des Voranschlages überlagert, wodurch eine weitere Beeinflussung und Optimierung der Regelcharakteristik des Druckregelventils ermöglicht wird.

Eine Lösung, die einen besonders geringen technischen Aufwand erfordert, sieht vor, daß der Voranschlag durch wenigstens einen Stift gebildet ist, der im Anschlag, vorzugsweise konzentrisch zu diesem, angeordnet ist. Der Stift kann problemlos in den Anschlag, der üblicherweise durch einen Rohrstutzen gebildet ist, eingebaut werden, wobei eine einstückige Herstellung oder auch ein nachträgliches Einsetzen, z.B. mittels Verschraubung, Verklebung oder Verschweißung, möglich ist.

Alternativ kann der Voranschlag durch einen Kranz von radial außerhalb des Anschlages, vorzugsweise konzentrisch zu diesem, angeordneten Stiften gebildet sein. Auch hier ist nur ein geringer Herstellungsaufwand für die Integration des Voranschlages in das Druckregelventil nötig.

Eine weitere alternative Ausgestaltung sieht vor, daß der Voranschlag radial außerhalb des Anschlags angeordnet und, vorzugsweise konzentrisch zu diesem, ringförmig oder ringsegmentförmig ausgebildet ist.

Zwecks einfacher Herstellung des Druckregelventils ist weiterhin bevorzugt vorgesehen, daß der Voranschlag mit einem Gehäuse des Druckregelventils verbunden oder einstückig ausgeführt ist.

Damit die Stellmembran in dem erfindungsgemäßen Druckregelventil bei den auftretenden Belastungen eine möglichst lange Lebensdauer aufweist, wird vorgeschlagen, daß die Stellmembran mit einem Membrantragkörper verstärkt ist. Dabei besteht der Membrantragkörper zweckmäßig aus einem Material, das steifer ist als das Material der übrigen Stellmembran, um einen gewünschten Verstärkungseffekt in bestimmten, auswählbaren Bereichen der Stellmembran zu erzielen.

In einer ersten Weiterbildung ist dazu vorgesehen, daß der Membrantragkörper ein vorgefertigtes Einzelteil ist und daß die übrige Stellmembran um den Membrantragkörper herumgespritzt ist. Auf diese Weise wird eine besonders gute Verbindung von Membrantragkörper und übriger Stellmembran miteinander sichergestellt.

Eine alternative Ausgestaltung dazu sieht vor, daß der Membrantragkörper ein vorgefertigtes Einzelteil ist und daß er regelfederseitig mit der Stellmembran verbunden, insbesondere verknöpft oder verrastet, ist oder daß er lose ist und mittels der Regelfeder regelfederseitig an die Stellmembran angedrückt ist. Bei dieser Ausgestaltung ist die Fertigung einfacher und damit kostengünstiger.

Um zusätzliche Möglichkeiten zur gezielten Beeinflussung und Veränderung der Regelcharakteristik des Druckregelventils zur Verfügung zu stellen, wird weiterhin vorgeschlagen, daß an der dem Anschlag zugewandten Seite der Stellmembran ein oder mehrere Elemente angeformt oder angebracht sind, die mit dem Voranschlag zusammenwirken.

In bevorzugter Weiterbildung sind die zuvor erwähnten Elemente mit dem Membrantragkörper einstückige oder verbundene Vorsprünge. Der Membrantragkörper ist mechanisch stärker belastbar als die übrige Membran, so daß durch das Zusammenwirken der Elemente als Teil des Membrantragkörpers mit dem Voranschlag keine die Lebensdauer der Stellmembran vermindernden Einflüsse auf diese ausgeübt werden.

Eine alternative Maßnahme zur Schaffung von Einflußmöglichkeiten auf die Regelcharakteristik des Druckregelventils und zur Schonung der Stellmembran besteht darin, daß die Stellmembran oder der Schließkörper in ihrem/seinem mit dem Voranschlag zusammenwirkenden Oberflächenbereich mit einer Verdickung oder Auflage oder Einlage ausgeführt ist.

Statt die Stellmembran in bestimmten Bereichen zu verstärken oder zu versteifen, kann es alternativ zur Erzielung einer gewünschten Regelcharakteristik auch sinnvoll sein, daß die Stellmembran oder der Schließkörper in ihrem/seinem mit dem Voranschlag zusammenwirkenden Oberflächenbereich mit einer Dickenverminderung oder Materialschwächung ausgeführt ist.

Auch der Voranschlag kann dazu genutzt werden, die Regelcharakteristik des Druckregelventils in einer gewünschten Art und Weise zu beeinflussen. Hierzu ist insbesondere vorgesehen, daß der. Voranschlag stirnseitig ausgerundet oder linsenförmig oder ballig oder kegelig oder gestuft ausgebildet ist.

Im Bereich zwischen dem Anschlag einerseits und der Stellmembran oder dem Ventilkörper andererseits erfährt die Gasströmung insbesondere bei nur teilweise geöffnetem Zustand des Druckregelventils eine relativ scharfe Strömungsumlenkung. Um hier die Strömungsverhältnisse günstig zu beeinflussen, sieht eine Ausgestaltung vor, daß der im Anschlag angeordnete Stift mit einem in Gasströmungsrichtung durch den Anschlag gesehen abnehmenden Außendurchmesser ausgebildet ist. Die Kontur des Stifts kann dabei z.B. kegelförmig oder trompetenförmig verlaufen, um eine verbesserte Strömungsführung zu bewirken.

Um Funktionsstörungen des Druckregelventils infolge eines Haftens oder Anklebens der Stellmembran am Voranschlag und/oder am Anschlag sowie eine vorzeitige Abnutzung der Stellmembran zu vermeiden, schlägt eine weitere Ausgestaltung des Druckregelventils vor, daß der Voranschlag und/oder der Anschlag und/oder der mit dem Voranschlag und/oder dem Anschlag zusammenwirkende Flächenbereich der Stellmembran mit einer Anti-Haft-Schicht und/oder mit einer Verschleißschutzschicht versehen sind/ist.

Eine besonders kostengünstige Herstellung des Druckregelventils wird bei einer Ausführung erreicht, bei der das Gehäuse einschließlich des Anschlags und des Voranschlags ein einstückiges Spritzgußteil aus Kunststoff oder Druckgußteil aus Leichtmetall ist. In dieser Ausführung kann das Gehäuse mit Anschlag und Voranschlag werkzeugfallend hergestellt werden, so daß die Integration des zusätzlichen Voranschlags in das Gehäuse keinerlei zusätzlichen Herstellungsaufwand und auch nur einen minimalen zusätzlichen Materialaufwand an Kunststoff oder Leichtmetall erfordert.

Ein Druckregelventil, wie es vorstehend beschrieben und erläutert ist, ist für verschiedene Anwendungen nutzbringend einsetzbar. Besonders vorteilhaft ist das erfindungsgemäße Druckregelventil einsetzbar, wenn dieses ein Kurbelgehäusedruckregelventil für die Regelung des Gasdrucks im Kurbelgehäuse einer Brennkraftmaschine ist und wenn dabei das Druckregelventil im Verlauf einer Kurbelgehäuseentlüftungsleitung angeordnet ist. Gerade bei dieser Anwendung als Kurbelgehäusedruckregelventil ist eine günstige und gezielt beeinflußbare und optimierbare Regelcharakteristik wichtig, um einen störungsfreien und sauberen Betrieb einer zugehörigen Brennkraftmaschine zu gewährleisten.

Ein weiterer Beitrag für eine kostengünstige Herstellung des Druckregelventils besteht darin, daß in einer bevorzugten Ausgestaltung das Druckregelventil zusammen mit weiteren Komponenten der Brennkraftmaschine in einem mit der Brennkraftmaschine verbindbaren Modul angeordnet ist. Gleichzeitig wird so eine besonders platzsparende Bauweise und eine besonders einfache Montage bei der Anbringung der zu einer Brennkraftmaschine gehörenden Komponenten an dieser erreicht.

Eine konkrete Weiterbildung schlägt dazu bevorzugt vor, daß die weiteren Komponenten des Moduls Einrichtungen zur Ölnebelabscheidung aus Kurbelgehäuseentlüftungsgas der Brennkraftmaschine und/oder zur Filtration von Schmieröl und/oder Kraftstoff der Brennkraftmaschine sind. Hinsichtlich der Ölnebelabscheidung ergeben sich so vorteilhaft kurze Strömungswege für das Kurbelgehäuseentlüftungsgas. Außerdem sind so die regelmäßig zu wartenden oder auszutauschenden Teile, insbesondere Filtereinsätze, konzentriert angeordnet und gut zugänglich.

Weiter ist gemäß Erfindung für das Druckregelventil bevorzugt vorgesehen, daß das Druckregelventil oder das das Druckregelventil umfassende Modul in eine Zylinderkopfhaube der Brennkraftmaschine integriert ist. Neben dem Vorteil einer kompakten Bauweise wird so zusätzlich der Vorteil erreicht, daß kurze Wege für die Kurbelgehäuseentlüftung ausreichen, was für die Funktion des Druckregelventils und.der Brennkraftmaschine insgesamt vorteilhaft ist.

Eine andere Ausgestaltung des erfindungsgemäßen pneumatischen Druckregelventils ist dadurch gekennzeichnet, daß der Voranschlag durch mindestens eine im Abströmquerschnitt liegende, membran- oder schließkörperseitig flächige, durchbrochene Voranschlagstruktur gebildet ist.

Mit der flächigen, durchbrochenen Voranschlagstruktur wird eine Struktur geschaffen, an die sich die Stellmembran oder der Schließkörper bei Bewegung in Schließrichtung in zunehmendem Maße, d.h. mit zunehmender Flächenüberdeckung, anlegt. Mit stärker werdendem Unterdruck auf der Abströmseite des Druckregelventils ergeben sich insbesondere bei geringen Durchsatzmassenströmen durch das Druckregelventil hohe Unterdrücke auf der dem Abströmquerschnitt gegenüberliegenden Projektionsfläche der Stellmembran. Durch das zunehmende Anlegen der Stellmembran an die Voranschlagstruktur verringern sich entsprechend stetig die freien, in Schließrichtung der Stellmembran wirkenden Kräfte. Diese Wirkung tritt ein, weil sich die in Schließrichtung auf die Stellmembran wirkenden Kräfte in den bereits an der Voranschlagstruktur anliegenden Stellmembranbereichen über diese Voranschlagstruktur direkt am Gehäuse des Druckregelventils abstützen. Auf diese Weise wird mit einem geringen technischen Aufwand ein unerwünschtes vorzeitiges Schließen des Druckregelventils vermieden. Gleichzeitig wird eine erwünschte, vom jeweiligen Unterdruck auf der Abströmseite weitgehend unabhängige Ventilkennlinie des Druckregelventils für den Druck auf der Zuströmseite erreicht. Im Fall einer Verwendung des Druckregelventils für die Druckregelung im Kurbelgehäuse einer Brennkraftmaschine bedeutet dies, daß eine gute Entlüftung des Kurbelgehäuses über den gesamten Kennfeldbereich des Motors gewährleistet ist. Da der Druck im Kurbelgehäuse aufgrund der vorteilhaften Regelkennlinie des Druckregelventils über den gesamten Kennfeldbereich der Brennkraftmaschine gering unter dem Umgebungsluftdruck eingestellt werden kann, ist gleichzeitig die für eine Ölnebelabscheidung nutzbare Druckdifferenz vergleichsweise höher, was also zu einer höheren Abscheideleistung führt. Ein Druckregelventil gemäß Erfindung besitzt bei gleichen Abmessungen wie ein herkömmliches Druckregelventil eine deutlich verbesserte Kennlinie. Alternativ kann das Druckregelventil in seiner Baugröße verkleinert werden, womit dann immer noch eine Ventilkennlinie gleicher Güte wie bei einem größeren herkömmlichen Druckregelventil erreicht wird. Vorteilhaft ist auch, daß unter Beibehaltung der Baugröße bewährte Einzelteile, insbesondere die Membran, weiter verwendbar sind.

Um die Herstellung des Druckregelventils einfach zu halten und Montageschritte einzusparen, kann gemäß einer Weiterbildung des Druckregelventils die Voranschlagstruktur einstückig mit der den Anschlag bildenden Struktur des Druckregelventils ausgeführt sein.

Alternativ wird vorgeschlagen, daß die Voranschlagstruktur in Form eines oder mehrerer Einzelteile ausgeführt und mit der den Anschlag bildenden Struktur des Druckregelventils verbunden ist. In dieser Ausführung ist zwar ein etwas höherer Montageaufwand nötig, jedoch wird so eine wesentlich größere Freiheit hinsichtlich der Formgestaltung und Materialauswahl für die Voranschlagstruktur erreicht.

Bevorzugt ist weiter vorgesehen, daß die Stellmembran oder der von der Stellmembran betätigte Schließkörper an ihrer/seiner der Voranschlagstruktur zugewandten Seite konvex geformt ist oder bei Anliegen eines Differenzdrucks zu der konvexen Form verformbar ist. Die konvexe Form sorgt dafür, daß sich die Stellmembran oder der Schließkörper zunächst in seinem zentralen Bereich an die Voranschlagstruktur anlegt, wenn sich die Stellmembran oder der Schließkörper in Schließrichtung des Druckregelventils bewegt. Bei weiterer Bewegung der Stellmembran oder des Schließkörpers in Schließrichtung wird die Anlagefläche an der Voranschlagstruktur stetig größer, wobei die Vergrößerung dieser Fläche in Radialrichtung gesehen von innen nach außen erfolgt. Die Stellmembran oder der Schließkörper können die konvexe Form als dauerhaft vorgegebene Form aufweisen; alternativ besteht auch die Möglichkeit, daß sich die gewünschte konvexe Form erst bei Vorliegen von entsprechenden Druckverhältnissen einstellt, bevor die Stellmembran oder der Schließkörper in eine erste Anlage an der Voranschlagstruktur gelangt.

Da bei dem erfindungsgemäßen Druckregelventil eine Flexibilität der Stellmembran nicht nur nicht störend sondern sogar vorteilhaft ist, ist bevorzugt die Stellmembran eine Elastomermembran, die zumindest in ihrem mit der Voranschlagstruktur zusammenwirkenden Bereich tragkörperfrei ist. Eine derartige Membran hat auch noch den Vorteil einer einfachen Herstellbarkeit, wenn kein Tragkörper vorhanden ist.

In einer weiteren Ausgestaltung ist vorgesehen, daß die Voranschlagstruktur an ihrer der Stellmembran oder dem Schließkörper zugewandten Seite eben ist. In dieser Ausführung ist die Voranschlagstruktur geometrisch besonders einfach. In Verbindung mit einer konvex geformten Stellmembran oder Schließkörperoberfläche wird aber auch mit einer ebenen Voranschlagstruktur der gewünschte Effekt einer stetig zunehmenden Anlage der Stellmembran oder des Schließkörpers an der Voranschlagstruktur bei Verstellung des Ventils in Schließrichtung erreicht.

Alternativ besteht die Möglichkeit, daß die Voranschlagstruktur an ihrer der Stellmembran oder dem Schließkörper zugewandten Seite konvex ist. Bei dieser konvexen Gestaltung der Anschlagstruktur wird der zuvor beschriebene erwünschte Effekt auch im Zusammenwirken mit einer ebenen Stellmembran- oder Schließkörperoberfläche erreicht. Auch mit einer konvexen Stellmembran- oder Schließkörperoberfläche kann die konvexe Voranschlagstruktur zusammenwirken. Durch die Wahl der Gestaltungen und durch das Maß der Konvexität sowie auch der Stärke oder der Flexibilität der Membran in dem, dem Voranschlag zugewandten Bereich, läßt sich die Ventilcharakteristik in weiten Grenzen in gewünschter Weise beeinflussen und optimieren.

Eine weitere vorteilhafte Ausgestaltung des erfindungsgemäßen Druckregelventils sieht vor, daß die Voranschlagstruktur sich in Axialrichtung der den Anschlag bildenden Struktur in diese hinein erstreckt. Die Voranschlagstruktur bildet damit in Axialrichtung der den Anschlag für die Schließstellung des Ventils bildenden Struktur Strömungswege, die im wesentlichen rechtwinklig zur Oberfläche der Voranschlagstruktur verlaufen. Insbesondere bei teilweise geschlossenem Druckregelventil, also bei sehr nahe an der Voranschlagstruktur befindlicher oder schon teilweise an die Voranschlagstruktur angelegter Stellmembran oder entsprechend positioniertem Schließkörper erfährt der Gasstrom bei seinem Eintritt in die Durchbrechungen der Voranschlagstruktur eine sehr scharfe Umlenkung. Diese Umlenkung führt, in Verbindung mit einer aufgrund des verminderten Strömungsquerschnitts zwangsläufig auftretenden hohen Gasströmungsgeschwindigkeit, zu einer Fliehkraftabscheidung von im Gasstrom mitgeführten Flüssigkeitströpfchen, beispielsweise Öltröpfchen, die einen im Gasstrom mitgeführten Ölnebel bilden. Dadurch, daß sich die Voranschlagstruktur in Axialrichtung in die den Anschlag bildende Struktur hinein erstreckt, wird eine hohe Wahrscheinlichkeit erreicht, daß im Gasstrom mitgeführte Flüssigkeitströpfchen auf eine der die Voranschlagstruktur begrenzenden Oberflächen auftreffen und sich dort niederschlagen. Bei entsprechender räumlicher Anordnung und Ausrichtung des Druckregelventils kann die in der Voranschlagstruktur niedergeschlagene Flüssigkeit unter Schwerkraftwirkung und/oder Gasströmungswirkung in Auslaßrichtung abgeführt werden. In Strömungsrichtung gesehen hinter der Voranschlagstruktur kann dann durch geeignete Strömungsführung das Reingas getrennt von der abgeschiedenen Flüssigkeit aus dem Druckregelventil abgeführt werden. Bei geeigneter Ausgestaltung der Voranschlagstruktur lassen sich Abscheidegrade erreichen, die annähernd oder sogar weitestgehend den Abscheidegraden von herkömmlichen, separaten Flüssigkeitsabscheidern für Gasströme entsprechen.

Ein Vorteil besteht zudem darin, daß durch die Kombination der Druckregelung mit der Ölnebelabscheidung und durch Anpassung des Spalts zwischen Membran und Voranschlag möglichst hohe Gasgeschwindigkeiten weitgehend unabhängig von der Höhe des Gasvolumenstroms einer Ölnebelabscheidung erreicht werden können.

Um eine merkliche Flüssigkeitsabscheidung aus dem Gasstrom innerhalb des Druckregelventils zu erzielen, beträgt bevorzugt die Länge der axialen Erstreckung der Voranschlagstruktur wenigstens 25% eines lichten Innendurchmessers der den Anschlag bildenden Struktur.

Zur Erzielung eines besonders hohen Abscheidegrades an Flüssigkeitströpfchen aus dem Gasstrom ist weiter bevorzugt vorgesehen, daß die Länge der axialen Erstreckung der Voranschlagstruktur 50% bis mehr als 100% des lichten Innendurchmessers der Struktur beträgt.

Zur Erzielung eines hohen Abscheidegrades trägt weiter bei, daß bevorzugt die Durchbrechungen in der Voranschlagstruktur jeweils eine axiale Länge aufweisen, die groß ist im Verhältnis zum jeweiligen lichten Durchmesser der Durchbrechungen.

In weiterer Ausgestaltung wird vorgeschlagen, daß die Durchbrechungen in der Voranschlagstruktur jeweils eine axiale Länge aufweisen, die wenigstens 5 mal so groß ist wie der lichte Durchmesser der jeweiligen Durchbrechungen.

Wenn ein besonders hoher Abscheidegrad angestrebt wird, ist bevorzugt vorgesehen, daß die Durchbrechungen in der Voranschlagstruktur jeweils eine axiale Länge aufweisen, die 10 bis 20 mal so groß ist wie der lichte Durchmesser der jeweiligen Durchbrechungen. Bei derartigen Verhältnissen von Länge zu Durchmesser ist mit einer hohen Wahrscheinlichkeit gewährleistet, daß im Gasstrom mitgeführte Flüssigkeitströpfchen die Voranschlagstruktur nicht durchlaufen können, ohne sich an einer der Oberflächen der Voranschlagstruktur niederzuschlagen.

Eine weitere Steigerung der Abscheidung läßt sich erreichen, wenn sich die Durchbrechungen in der Voranschlagskontur in ihrem axialen Verlauf nicht gradlinig erstrekken, sondern der Kanal so verläuft, daß die Austrittsöffnung gegenüber der Eintrittsöffnung einen Versatz aufweist.

Damit auf der einen Seite die Voranschlagstruktur den Strömungsquerschnitt durch das Druckregelventil nicht unzulässig vermindert und damit auf der anderen Seite die Voranschlagstruktur mit einer ausreichenden mechanischen Stabilität hergestellt werden kann und die Membran durch das wiederholende Aufsetzen auf der Voranschlagstruktur nicht beschädigt wird, ist bevorzugt vorgesehen, daß die Durchbrechungen in der Voranschlagstruktur eine Gesamtfläche aufweisen, die zwischen 20% und 80% der Gesamtoberfläche der den Anschlag bildenden Struktur beträgt.

Für die Formgebung der den Anschlag bildenden Struktur und der darin vorgesehenen Voranschlagstruktur erlaubt das erfindungsgemäße Druckregelventil eine große Gestaltungsfreiheit. Bevorzugt haben die den Anschlag bildende Struktur und die darin vorgesehene Voranschlagstruktur eine runde, elliptische, ovale, eiförmige oder mehreckige äußere Umrißform. Auch durch die Variation und geeignete Auswahl der Umrißform läßt sich das Verhalten des Druckregelventils beeinflussen, wodurch die Ventilkennlinie in gewünschter Weise beeinflußt werden kann.

Auch die Voranschlagstruktur an sich kann in ihrer Formgebung vielfältig gestaltet sein. Eine erste bevorzugte Ausführung sieht vor, daß die Voranschlagstruktur die Form eines Gitters aus einander kreuzenden flachen ebenen Wänden oder aus einander kreuzenden radialen und konzentrischen Wänden hat. Durch die sich kreuzenden Wände hat hier die Voranschlagstruktur eine besonders hohe mechanische Stabilität, was auch mobile Anwendungen, z.B. an einer Brennkraftmaschine eines Kraftfahrzeuges, schadlos erlaubt.

In einer alternativen Gestaltung wird vorgeschlagen, daß die Voranschlagstruktur die Form eines Rostes aus zueinander parallelen flachen ebenen Wänden oder aus zueinander konzentrischen Wänden hat. Diese Ausgestaltung bietet den Vorteil, daß die Wände eine geringere Querschnittsfläche und ein geringeres Volumen innerhalb der Voranschlagstruktur einnehmen, was einem möglichst großen Strömungsquerschnitt bei vorgegebenen Abmessungen der den Anschlag bildenden Struktur bietet.

Ein besonders großer freier Strömungsquerschnitt bei vorgegebenen Abmessungen der den Anschlag bildenden Struktur wird dann erreicht, wenn gemäß einer weiteren Ausgestaltung die Voranschlagstruktur die Form eines gewellten, lagenförmigen oder gewickelten Wabenkörpers hat. Wabekörper sind an sich beispielsweise aus der Katalysatortechnik bekannt, wo große Strömungsquerschnitte in Verbindung mit großen Oberflächen benötigt werden; diese Gestaltung kommt auch der bei der vorliegenden Erfindung gewünschten wirksamen Flüssigkeitsabscheidung in der Voranschlagstruktur zugute.

Als weitere Gestaltungsmöglichkeit soll noch erwähnt werden, daß die Voranschlagstruktur die Form eines Betts aus mehreren parallelen, voneinander beabstandeten, länglichen Stiften oder Segmenten haben kann, deren freie Enden der Stellmembran oder dem Schließkörper zugewandt sind. Auch mit dieser Ausgestaltung läßt sich erreichen, daß mehr als 50% des Querschnitts der Voranschlagstruktur für die Gasströmung zur Verfügung stehen. Gleichzeitig bleibt aber im Bereich der freien Enden der Stifte oder Segmente die gewünschte flächige Ausgestaltung erhalten, um eine stetig zunehmende Anlage der Stellmembran oder des Schließkörpers an die Oberfläche der Voranschlagstruktur zu erlauben.

Auch bei der Ausgestaltung des Querschnitts der Durchbrechungen in der Voranschlagstruktur besteht eine sehr große Gestaltungsfreiheit. Bevorzugt haben die Durchbrechungen jeweils eine runde, elliptische, ovale, mehreckige, schlitzförmige, kreissektorförmige oder kreisringsektorförmige Querschnittsform.

Eine weitere Ausgestaltung des Druckregelventils sieht vor, daß die Durchbrechungen in der Voranschlagstruktur alle den gleichen Querschnitt aufweisen.

Alternativ dazu können die Durchbrechungen in der Voranschlagstruktur wenigstens zwei verschiedene Querschnitte aufweisen. Hiermit wird eine weitere Möglichkeit zur Beeinflussung der Regelcharakteristik und Ventilkennlinie geschaffen.

Eine konkrete Weiterbildung schlägt dazu vor, daß die Durchbrechungen in der Voranschlagstruktur in deren Radialrichtung gesehen innen größer und außen kleiner sind. Diese Ausgestaltung bietet den spezifischen Vorteil, daß gerade bei besonders kleinem Öffnungsquerschnitt, also bei einer Position der Stellmembran oder des Schließkörpers nahe seiner Schließstellung, noch eine feinfühlige Regelung des Drucks erfolgt.

Wenn innerhalb des Druckregelventils nicht die Stellmembran selbst sondern der von dieser betätigte Schließkörper mit dem Voranschlag und dem Anschlag zusammenwirkt, trägt zweckmäßig der Schließkörper an seiner der Voranschlagstruktur zugewandten Seite eine in Axialrichtung elastisch-flexible und/oder kompressible Auflage. Durch die Verwendung dieser Auflage kann der Schließkörper in seinen übrigen Teilen aus einem stabilen und starren Material gefertigt sein, damit er die von der Stellmembran ausgeführten Bewegungen ohne Verfälschungen übertragen kann.

Damit die im Druckregelventil aus dem Gasstrom abgeschiedene Flüssigkeit nicht in unerwünschter Weise wieder in den vom Druckregelventil weggeführten Gasstrom gelangt, ist zweckmäßig vorgesehen, daß das Druckregelventil auslaßseitig mit einem Flüssigkeitssammelraum ausgeführt ist, in dem zumindest die an der Voranschlagstruktur aus dem durch das Druckregelventil strömenden Gasstrom abgeschiedene Flüssigkeit in einem Flüssigkeitssammelbereich sammelbar ist.

Durch die Anordnung von Einbauten, wie z.B. Trennwände oder Strömungsleitwände in den Flüssigkeitssammelbereich, kann eine Wellenbildung oder ein sogenanntes Schwappen der abgeschiedenen Flüssigkeit, welches durch auf die Flüssigkeitssäule wirkende Beschleunigungen verursacht wird, unterdrückt werden. Bevorzugt können diese Wände gitterförmig ausgebildet sein oder aber konzentrisch angeordnet sein und einen kreisförmigen oder kreissegmentförmigen Querschnitt aufweisen.

Weiter können in den Trennwänden versetzt angeordnete Durchbrechungen vorgesehen sein, die eine gleichmäßige Verteilung der Flüssigkeit im Flüssigkeitssammelbereich gestatten. Alternativ können dort offenzellige, schwammartige Strukturen eingesetzt werden.

Um zusätzlich oder alternativ zu der Flüssigkeitsabscheidung in der Voranschlagstruktur innerhalb des Druckregelventils Flüssigkeit aus dem Gasstrom abscheiden zu können, sieht eine weitere Ausgestaltung des Druckregelventils vor, daß der Flüssigkeitssammelraum als im Querschnitt runder Wirbelraum ausgebildet ist, der einen Abscheider bildet, in welchem Flüssigkeitströpfchen, die hinter der Voranschlagstruktur noch in dem das Druckregelventil durchströmenden Gasstrom enthalten sind, aus diesem durch Zentrifugalkraft abscheidbar sind.

Eine diesbezügliche weitere Ausgestaltung sieht vor, daß der Flüssigkeitssammelraum in seinem in Einbaulage oberen Teil als Zyklon mit einem tangentialen Gaseinlaß, mit einem zentral und axial nach oben abgehenden Reingasauslaß und mit einem nach unten führenden, in den unter dem Zyklon liegenden Flüssigkeitssammelbereich mündenden Flüssigkeitsauslaß ausgebildet ist. In dieser Ausgestaltung des Druckregelventils ist in dieses ein Zyklonabscheider integriert, der für eine wirksame Abscheidung oder Nach-Abscheidung von Flüssigkeit, insbesondere in Form von feinen Tröpfchen, aus dem Gasstrom sorgt.

Wie vorstehend erwähnt, wird die abgeschiedene Flüssigkeit bevorzugt in einem Flüssigkeitssammelbereich gesammelt. Von dort kann die gesammelte Flüssigkeit entsprechend der gesammelten Menge bedarfsweise entsorgt werden, beispielsweise im Rahmen regelmäßiger Wartungen.

Alternativ besteht die Möglichkeit, daß der Flüssigkeitssammelbereich über ein Ventil, vorzugsweise ein differenzdruckgesteuertes Rückschlagventil, wie Blattventil, mit einer Flüssigkeitsabführ- oder Flüssigkeitsrückführleitung verbunden ist. Mit dieser Lösung wird eine automatische Entleerung des Flüssigkeitssammelbereichs erreicht, die immer dann stattfindet, wenn für eine Entleerung geeignete Druckverhältnisse vorliegen. Wenn das Druckregelventil beispielsweise als Kurbelgehäusedruckregelventil an einer Brennkraftmaschine eingesetzt wird, kann eine Entleerung des Flüssigkeitssammelbereichs, der dann ein Ölsammelbereich ist, jeweils bei Stillstand der zugehörigen Brennkraftmaschine erfolgen, wobei das gesammelte Öl zweckmäßig in die Ölwanne bzw. den Ölsumpf der Brennkraftmaschine geführt wird.

Um auch bei niedrigen Umgebungstemperaturen einen sicheren Betrieb des Druckregelventils zu gewährleisten, wird weiter vorgeschlagen, daß die Voranschlagstruktur und/oder die Stellmembran oder der Schließkörper mit einer Heizeinrichtung ausgestattet ist. Mit der Heizeinrichtung kann dafür gesorgt werden, daß die Voranschlagstruktur und/oder die Stellmembran oder der Schließkörper immer eine so hohe Temperatur aufweisen, daß ein Anfrieren von flüssigen Partikeln aus dem Gasstrom und ein dadurch verursachtes Einfrieren des Druckregelventils insgesamt nicht auftreten können.

Eine weitere Maßnahme zur Sicherstellung eines zuverlässigen Betriebes des Druckregelventils besteht darin, daß in Strömungsrichtung des Gases gesehen vor der Voranschlagstruktur ein grobe Öltröpfchen bzw. Verunreinigungen aus dem Gasstrom abfangender Vorabscheider, vorzugsweise ein Prallplattenabscheider oder ein Vorsieb, angeordnet ist. Das Vorsieb stellt sicher, daß grobe Verunreinigungen, die in der Lage wären, die Durchbrechungen in der Voranschlagstruktur zu verstopfen, nicht bis dorthin gelangen können, sondern schon vorher abgefangen werden. Der Prallplattenabscheider ermöglicht es, mit geringem Aufwand größere Öltröpfchen.abzuscheiden, die somit die in Strömungsrichtung nachfolgenden Bauteile in ihrer Funktion nicht mehr belasten.

Weiter kann vorgesehen sein, den Gaseintritt in die untere Kammer des Druckregelventils tangential anzuordnen und so das-einströmende Gas in Rotation zu versetzen. Beim Eintritt in die Durchbrechungen der Voranschlagstruktur überlagern sich dabei translatorische und rotatorische Bewegungen des Gases und der darin mitgeführten Öltröpfchen und erhöhen damit die Wahrscheinlichkeit, daß ein Öltröpfchen in den Durchbrechungen abgeschieden wird.

Im folgenden werden Ausführungsbeispiele des erfindungsgemäßen Druckregelventils anhand einer Zeichnung erläutert. Die Figuren der Zeichnung zeigen:
- Figur 1: ein Druckregelventil im Querschnitt in einer ersten Ausführung in offenem Zustand,
- Figur 2: das Druckregelventil aus Figur 1 in teilweise geschlossenem Zustand,
- Figur 3: das Druckregelventil aus Figur 1 und Figur 2 in vollständig geschlossenem Zustand,
- Figur 4: das Druckregelventil in einer zweiten Ausführung in offenem Zustand,
- Figur 5: das Druckregelventil aus Figur 4 in teilweise geschlossenem Zustand,
- Figur 6: das Druckregelventil aus Figur 4 und Figur 5 in vollständig geschlossenem Zustand,
- Figur 6a: eine Membran aus dem Druckregelventil gemäß den Figuren 4 bis 6 in Unteransicht,
- Figur 7: das Druckregelventil in einer dritten Ausführung in offenem Zustand,
- Figur 8: das Druckregelventil aus Figur 7 in teilweise geschlossenem Zustand,
- Figur 9: das Druckregelventil aus Figur 7 und Figur 8 in vollständig geschlossenem Zustand,
- Figur 10: das Druckregelventil in einer vierten Ausführung in offenem Zustand,
- Figur 11: das Druckregelventil aus Figur 10 in teilweise geschlossenem Zustand,
- Figur 12: das Druckregelventil aus Figur 10 und Figur 11 in vollständig geschlossenem Zustand,
- Figur 13: das Druckregelventil in einer fünften Ausführung in offenem Zustand,
- Figur 14: das Druckregelventil aus Figur 13 in teilweise geschlossenem Zustand,
- Figur 15: das Druckregelventil aus Figur 13 und Figur 14 in vollständig geschlossenem Zustand,
- Figur 16: ein Druckdiagramm für ein konventionelles Druckregelventil und für ein erfindungsgemäßes Druckregelventil im Vergleich,
- Figur 17: das Druckregelventil in einer sechsten Ausführung in offenem Zustand,
- Figur 18: das Druckregelventil in einer siebten Ausführung in offenem Zustand,
- Figur 19: das Druckregelventil in einer achten Ausführung in teilweise geschlossenem Zustand,
- Figur 20: das Druckregelventil in einer neunten Ausführung in teilweise geschlossenem Zustand,
- Figur 21: das Druckregelventil in einer zehnten Ausführung in teilweise geschlossenem Zustand und
- Figur 22: das Druckregelventil in einer elften Ausführung in teilweise geschlossenem Zustand.
- Figur 23: das Druckregelventil in einer weiteren Ausführung im Längsschnitt,
- Figur 23a bis Figur 23d: jeweils einen Ausschnitt aus dem Druckregelventil in vier verschiedenen Betriebszuständen,
- Figur 24: ein weiteres Druckregelventil, ebenfalls im Längsschnitt,
- Figur 24a: ein vergrößertes Detail aus dem Druckregelventil gemäß Figur 24, ebenfalls im Längsschnitt,
- Figur 25: einen Abströmquerschnitt zusammen mit einem Voranschlag als Teil eines Druckregelventils, im Längsschnitt,
- Figur 25a: bis Figur 25d vier verschiedene Vor-Anschläge in Draufsicht,
- Figur 26a: bis Figur 26d vier weitere verschiedene VorAnschläge, jeweils in Draufsicht,
- Figur 27: einen Abströmquerschnitt mit einem geänderten Voranschlag, in gleicher Darstellung wie in Figur 25,
- Figur 27a und Figur 27b: zwei weitere, verschiedene VorAnschläge, jeweils in Draufsicht,
- Figur 27c: einen Abströmquerschnitt mit einem geänderten Voranschlag, in gleicher Darstellung wie in Figur 27,
- Figur 28a: einen weiteren Abströmquerschnitt mit einem weiteren Voranschlag, im Längsschnitt,
- Figur 28b: den Abströmquerschnitt und den Voranschlag gemäß Figur 28a in Draufsicht,
- Figur 29a: einen weiteren Abströmquerschnitt mit einem Voranschlag, im Längsschnitt,
- Figur 29b: den Abströmquerschnitt und den Voranschlag aus Figur 29a in Draufsicht,
- Figur 30: einen Schließkörper zusammen mit einem Abschnitt eines Abströmquerschnitts mit Voranschlag, im Längsschnitt,
- Figur 30a: einen gegenüber der Figur 30 geänderten Schließkörper, ebenfalls im Längsschnitt,
- Figur 31a: ein weiteres Druckregelventil zusammen mit einem Flüssigkeitssammelraum, im Längsschnitt,
- Figur 31b: das Druckregelventil zusammen mit dem Flüssigkeitssammelraum aus Figur 31a, nun im Querschnitt,
- Figur 32a: ein weiteres Druckregelventil mit Flüssigkeitssammelraum, im Längsschnitt,
- Figur 32b: das Druckregelventil mit Flüssigkeitssammelraum aus Figur 32a, nun im Querschnitt,
- Figur 33a: das Druckregelventil mit einem Längsschnitt durch einen Vorabscheider,
- Figur 33b: das Druckregelventil mit einem Querschnitt durch den Vorabscheider,
- Figur 34: das Druckregelventil mit einem Siebkörper im Längsschnitt,
- Figur 35a: und Figur 35b den Rohrstutzen des Abströmquerschnitts zusammen mit einem Voranschlag als Teil eines Druckregelventils, im Längsschnitt,
- Figur 35c: und Figur 35d Vor-Anschläge des Druckregelventils in der Draufsicht, und
- Figur 36: eine letzte Variante des Druckregelventils, mit tangentialem Gaseintritt.

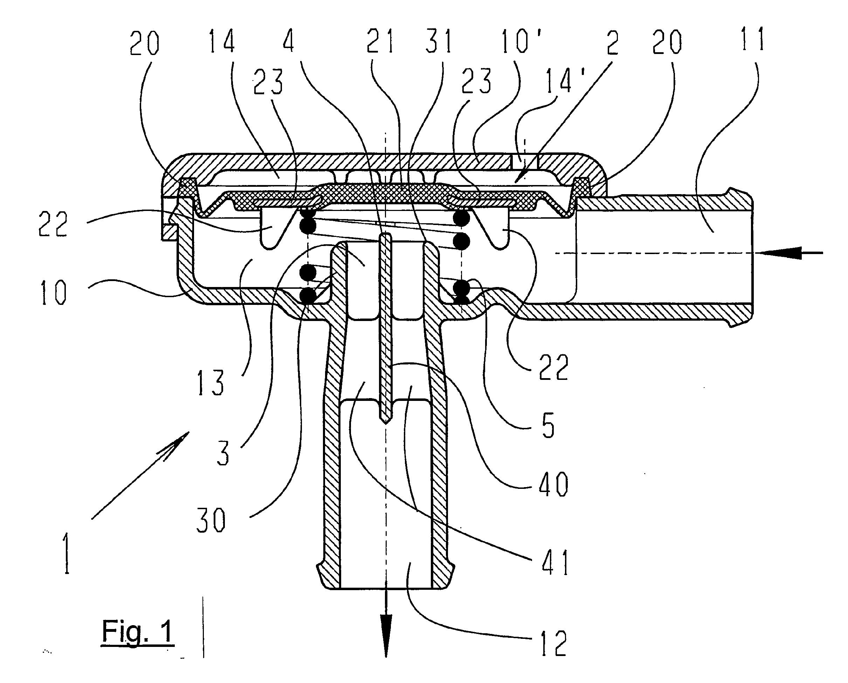

Figur 1 zeigt ein Druckregelventil 1 im Querschnitt. Das Ventil 1 besitzt ein Gehäuse 10, das oberseitig mit einem Deckel 10' verschlossen ist. Zwischen dem Gehäuse 10 und dem Deckel 10' ist eine Stellmembran 2 eingespannt, die das Innere des Gehäuses 10 in eine untere Kammer 13 und eine obere Kammer 14 unterteilt. Die obere Kammer 14 ist über eine Bohrung 14', mit abgestimmtem Querschnitt, im Deckel 10' mit der Atmosphäre verbunden.

Die untere Kammer 13 ist mit einem Gaseinlaß 11 in Form eines seitlichen Rohrstutzens verbunden. Der Gaseinlaß 11 ist beispielsweise mit einer Kurbelgehäuseentlüftungsleitung einer zugehörigen, nicht dargestellten Brennkraftmaschine verbindbar.

Weiterhin ist die untere Kammer 14 mit einem Gasauslaß 12 verbunden, der hier nach unten weist und ebenfalls die Form eines Rohrstutzens hat. Der Gasauslaß 12 ist beispielsweise mit dem Ansaugtrakt einer zugehörigen Brennkraftmaschine verbindbar.

Mit seinem oberen Teil ragt der Gasauslaß 12 in das Innere der unteren Kammer 13 hinein und bildet dort einen Abströmquerschnitt 3 in Form eines kurzen Rohrstutzens 30. Das nach oben weisende Stirnende des Rohrstutzens 30 bildet einen Anschlag 31 für die Stellmembran 2 bei deren Bewegung nach unten, also in Richtung zum Rohrstutzen 30.

Zwischen einem unteren, den Rohrstutzen 30 umgebenden Bereich des Gehäuses 10 und der Unterseite der Stellmembran 2 ist eine Regelfeder 5, hier in Form einer Schraubendruckfeder, angeordnet. Diese Feder 5 beaufschlagt die Stellmembran mit einer nach oben hin, also in Öffnungsrichtung des Druckregelventils 1 wirkenden Vorbelastungskraft.

Die Membran 2 besteht in ihrem überwiegenden Teil aus einem Elastomerkörper, in den hier ein Membrantragkörper 23 eingelassen ist. Dieser Membrantragkörper 23 dient einerseits zur Versteifung der Membran 2 in dem von der Regelfeder 5 beaufschlagten Membranbereich. Zum anderen weist der Membrantragkörper 23 mehrere nach unten hin aus der Unterseite der Membran 2 vorragende Vorsprünge auf, die zur Führung und Zentrierung der Regelfeder 5 relativ zur Membran 2 dienen.

Weiterhin ist bei diesem Druckregelventil 1 im Rohrstutzen 30 konzentrisch zu diesem ein Stift 40 angeordnet, der über mehrere Verbindungsflügel 41, die in Radialrichtung verlaufen, mit dem Innenumfang des Rohrstutzens 30 verbunden oder einstückig ausgeführt ist. Das obere Ende des Stifts 40 bildet einen Voranschlag 4, der über den am oberen Ende des Rohrstutzens 30 gebildeten Anschlag 31 nach oben hin vorragt.

Figur 1 zeigt das Druckregelventil 1 in seiner vollständig geöffneten Stellung. In dieser Stellung steht ein maximaler Abströmquerschnitt 3 durch den Rohrstutzen 30 für durch das Druckregelventil 1 hindurchströmendes Gas, beispielsweise Kurbelgehäuseentlüftungsgas, zur Verfügung. Dieser Zustand des Druckregelventils 1 stellt sich ein, wenn in der unteren Kammer 13 ein relativ geringer Unterdruck herrscht. In diesem Zustand wird die Stellmembran 2 durch die Regelfeder 5 in ihrer oberen Stellung, wie sie Figur 1 zeigt, gehalten.

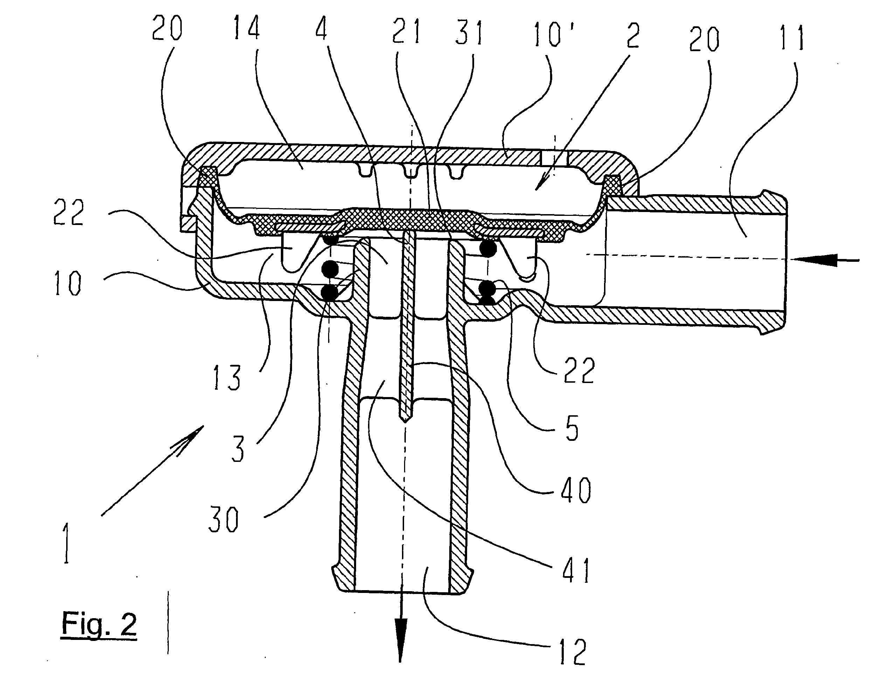

Figur 2 zeigt das Druckregelventil 1 aus Figur 1 nun in einer teilweise geschlossenen Stellung. In diesem Zustand ist die Stellmembran 2 aufgrund eines stärkeren Unterdrucks in der unteren Kammer 13 infolge der Druckdifferenz zwischen den beiden Kammern 13, 14 um einen gewissen Weg nach unten verschoben, hier bis zum Anlegen der Unterseite der Membran 2 an den Voranschlag 4. Die Membran 2 verformt sich dabei insbesondere in ihrem radial äußeren Randbereich elastisch-flexibel, wobei sie mit ihrem Einspannrand 20 dichtend zwischen Gehäuse 10 und Deckel 10' gehalten ist.

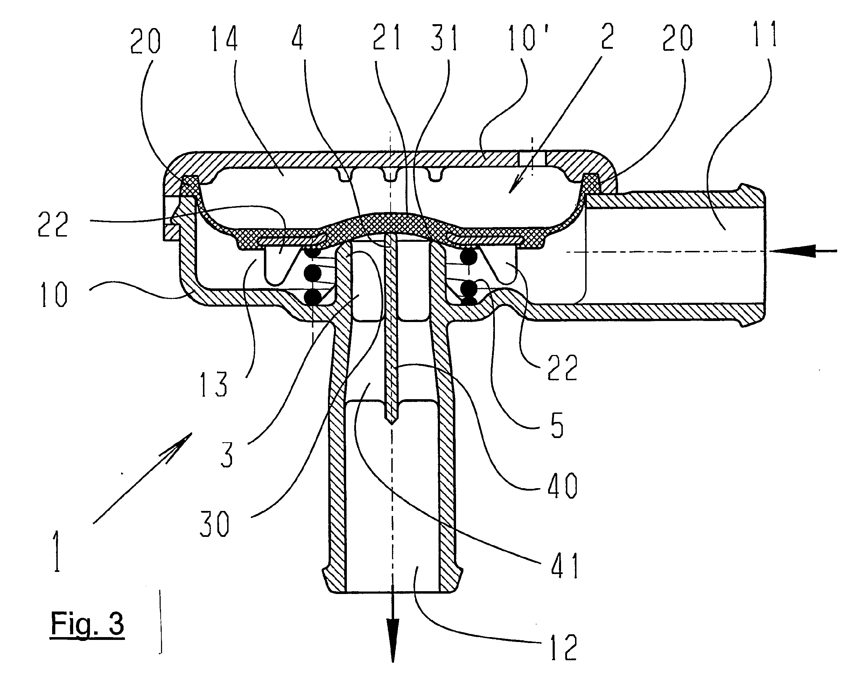

In Figur 3 ist das Druckregelventil 1 aus Figur 1 und Figur 2 in vollständig geschlossenem Zustand dargestellt. Dieser Zustand stellt sich ein, wenn in der unteren Kammer 13 ein noch stärkerer Unterdruck herrscht. Um die Schließstellung des Druckregelventils 1 zu erreichen, muß sich infolge der Druckdifferenz zwischen der unteren und der oberen Kammer 13, 14 die Stellmembran 2 auch in ihrem zentralen Bereich 21 elastisch flexibel verformen, bis sie die in Figur 3 sichtbare Form angenommen hat. In diesem Zustand liegt die Membran 2 mit ihrer Unterseite nicht nur am Voranschlag 4, sondern nun auch am Anschlag 31 an. Hierdurch ist der Abströmquerschnitt 3 nun vollständig verschlossen.

Um das Druckregelventil 1 aus dem Zustand gemäß Figur 2 in seinen Zustand gemäß Figur 3 zu überführen, muß neben der Kraft der Regelfeder 5 gleichzeitig auch die der Stellmembran 2 eigene Rückstellkraft zusätzlich überwunden werden, die erforderlich ist, um die Membran aus der in Figur 2 sichtbaren Form in die in Figur 3 sichtbare Form zu bringen. Damit wird also bei zunehmendem und stärker werdendem Unterdruck in der unteren Kammer 13 eine härtere Federcharakteristik des Druckregelventils erreicht, als dies zu Beginn der Verstellbewegung der Membran 2 der Fall ist, in dem sie nur von der Regelfeder 5 beaufschlagt ist. Hiermit läßt sich insbesondere ein in vielen Anwendungsfällen unerwünschtes, zu frühes vollständiges Schließen des Druckregelventils 1 vermeiden, ohne daß dafür z.B. eine zweite Regelfeder erforderlich wäre.

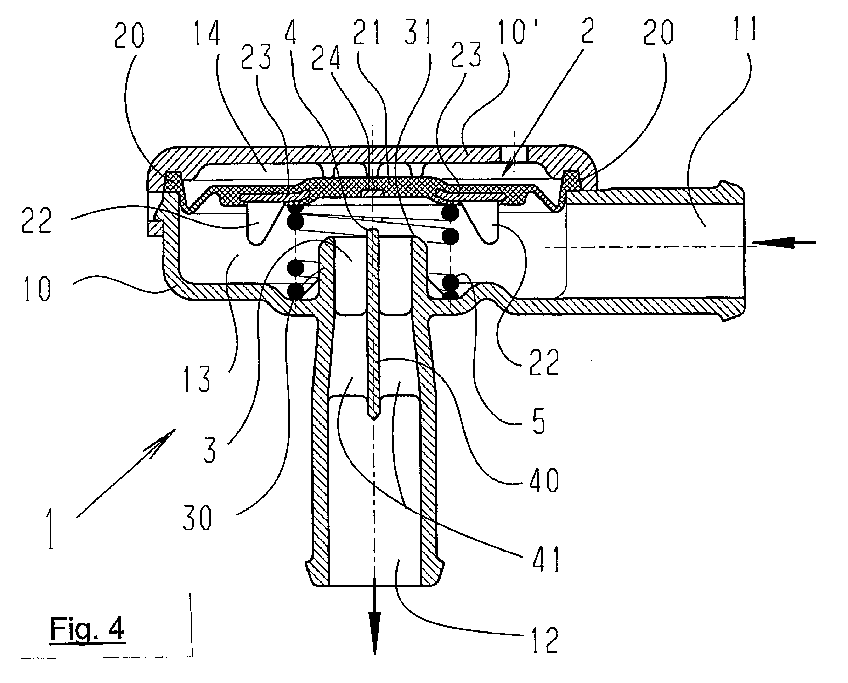

Figur 4 zeigt eine zweite Version des Druckregelventils 1, die in weiten Teilen mit der Ausführung des Druckregelventils 1 gemäß den Figuren 1 bis 3 übereinstimmt. Neu ist bei dem Druckregelventil 1 gemäß Figur 4, daß im Zentrum des zentralen Bereichs 21 an der Unterseite der Membran 2 eine Einlage 24 vorgesehen ist, die aus einem Material besteht, das härter und verschleißfester ist als das Elastomermaterial, aus dem die Membran 2 im übrigen überwiegend besteht.

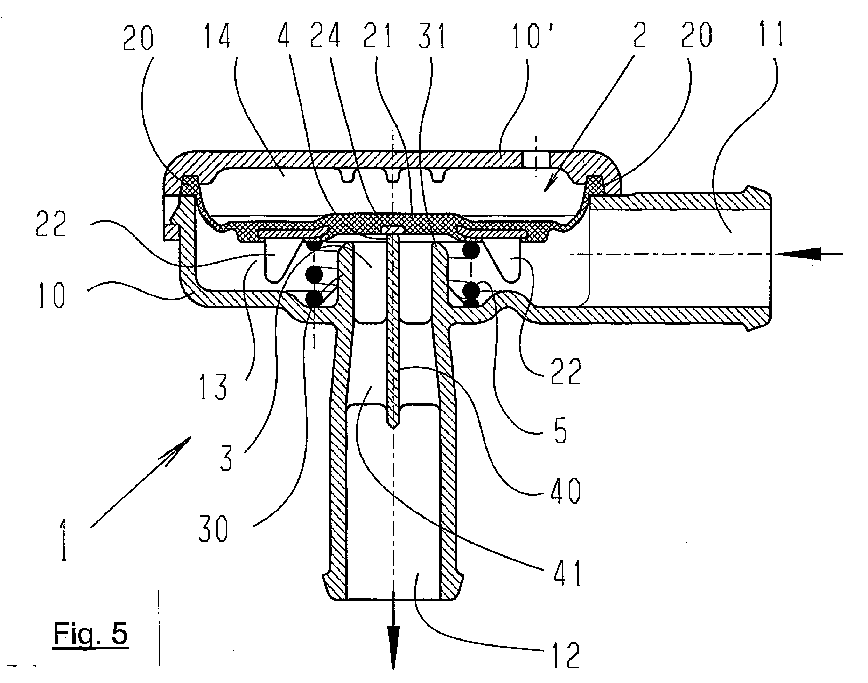

Figur 5 zeigt das Druckregelventil 1 aus Figur 4 nun in teilweise geschlossenem Zustand. In diesem Zustand ist die Stellmembran 2 so weit nach unten bewegt, daß die Einlage 24 an der Unterseite der Membran 2 an dem Voranschlag 4 am oberen Ende des Stifts 40 anliegt. Hier sorgt die Einlage 24 dafür, daß durch den Voranschlag 4 die Membran 2 auch bei langer Betriebsdauer keine mechanischen Schäden erleidet.

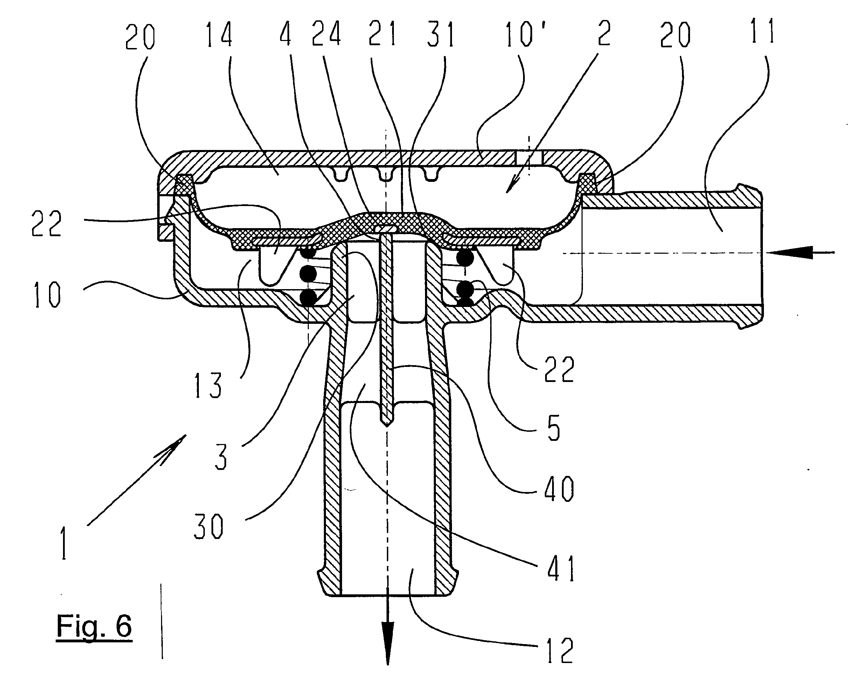

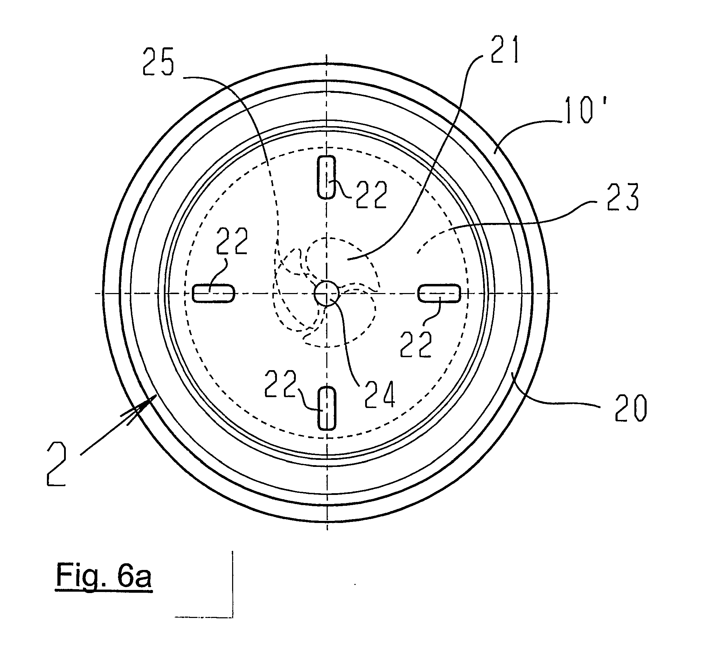

In Figur 6 ist das Druckregelventil 1 aus Figur 4 und Figur 5 nun in vollständig geschlossenem Zustand dargestellt. In ihrem zentralen Bereich 21 liegt die Membran 2 mit ihrer Einlage 24 weiterhin an dem Voranschlag 4 an. Radial außen von dieser Einlage 24 ist der zentrale Bereich 21 der Membran 2 unter weiterer elastisch, flexibler Verformung nach unten bewegt und liegt nun auch an dem Anschlag 31 am oberen Ende des Rohrstutzens 30 an. Somit ist nun der Abströmquerschnitt 3 vollständig verschlossen.

In seinen übrigen Teilen entspricht das Druckregelventil 1 gemäß den Figuren 4 bis 6 dem Druckregelventil 1 gemäß den Figuren 1 bis 3 und es wird deshalb hinsichtlich der weiteren Einzelteile des Druckregelventils 1 gemäß den Figuren 4 bis 6 auf die Beschreibung der Figuren 1 bis 3 verwiesen.

Figur 6a zeigt die Stellmembran 2 des Druckregelventils 1 aus den Figuren 4 bis 6 in einer Unteransicht. Radial ganz außen ist der Einspannrand 20 der Membran 2 sichtbar. Im Zentrum der Membran 2 liegt die Einlage 24, die mit dem Voranschlag 4 zusammenwirkt. Um die Einlage 24 herum liegt der zentrale Bereich 21 der Membran 2. Noch weiter radial nach außen sind die hier insgesamt vier nach unten, also zum Betrachter hin weisenden Vorsprünge 22 erkennbar, die zur Führung und Zentrierung der Regelfeder 5 relativ zur Membran 2 dienen.

In gestrichelten Linien ist in Figur 6a der Membrantragkörper 23 dargestellt, der in das Elastomermaterial der Membran 2 eingebettet ist. Die Vorsprünge 22 und die Einlage 24 sind dabei integrale Bestandteile des Membrantragkörpers 23 und mit diesem einstückig ausgeführt. Die Einlage 24 steht dabei über geschwungen verlaufende Verbindungsstege 25 mit dem übrigen Membrantragkörper 23 in Verbindung. Hierdurch wird eine ausreichende Elastizität und Flexibilität des zentralen Bereichs 21 der Membran 2 gewährleistet, die für die Funktion des Druckregelventils 1 erforderlich ist.

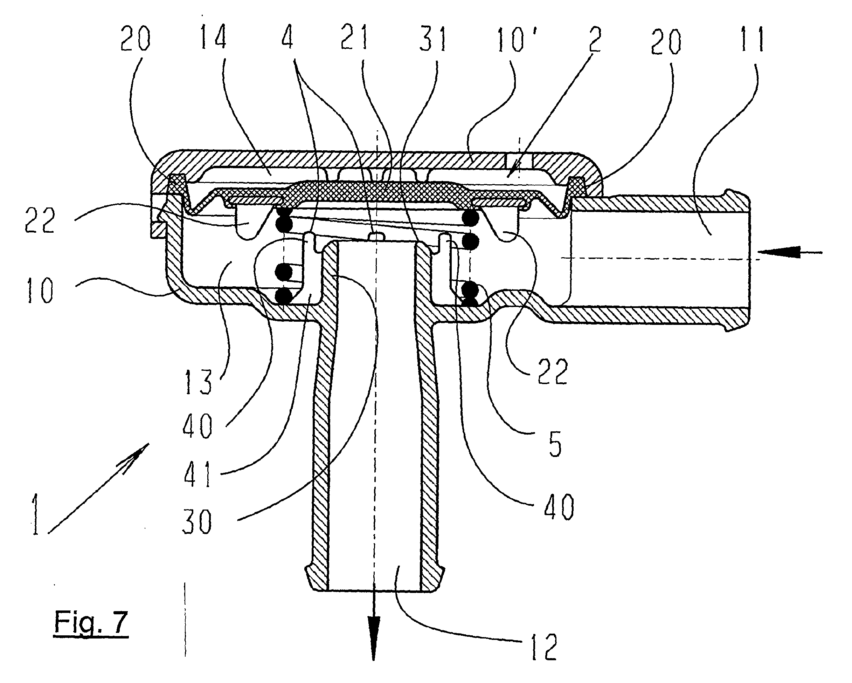

Eine dritte Version des Druckregelventils 1 ist in den Zuständen "offen", "teilweise geschlossen" und "geschlossen" in den Figuren 7, 8 und 9 dargestellt. Diese Version des Druckregelventils 1 unterscheidet sich von den beiden zuvor beschriebenen Versionen des Druckregelventils 1 dadurch, daß der Voranschlag 4 nun aus dem Rohrstutzen 30 heraus in eine Position radial außen vom Rohrstutzen 30 verlegt ist. Im dargestellten Beispiel wird der Voranschlag hier durch insgesamt vier Stifte 40 gebildet, die gleichmäßig beabstandet um das obere Ende des Rohrstutzens 30 herum angeordnet und über Verbindungsflügel 41 einstückig mit dem Gehäuse 10 ausgeführt sind. Auch hier ragen die oberen Enden der Stifte 40, die zusammen den Voranschlag 4 bilden, über das obere Stirnende des Rohrstutzens 30, das den Anschlag 31 bildet, vor.

In dem in Figur 7 gezeigten offenen Zustand des Druckregelventils 1 liegt die Membran 2 in ihrer oberen Endstellung und ist mit ihrer Unterseite sowohl von dem Voranschlag 4 als auch von dem Anschlag 31 abgehoben. Damit steht der maximal mögliche Strömungsquerschnitt durch das Druckregelventil 1 zur Verfügung.

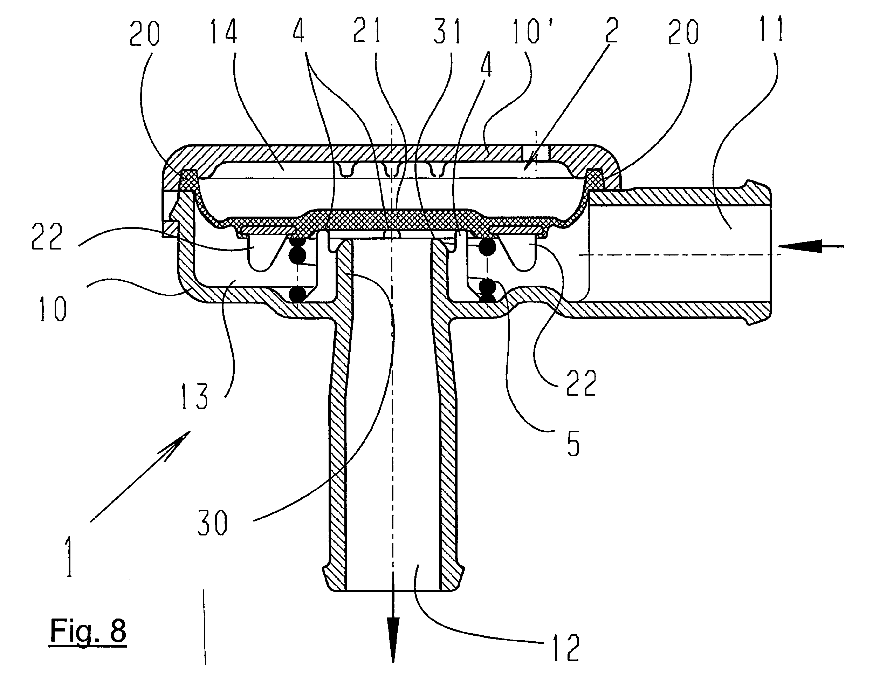

In der in Figur 8 dargestellten teilweise geschlossenen Stellung des Druckregelventils 1 liegt die Membran 2 nun nach unten verschoben mit ihrer Unterseite an dem Voranschlag 4 an. Es steht nun ein reduzierter Strömungsquerschnitt durch das Druckregelventil 1 zur Verfügung.

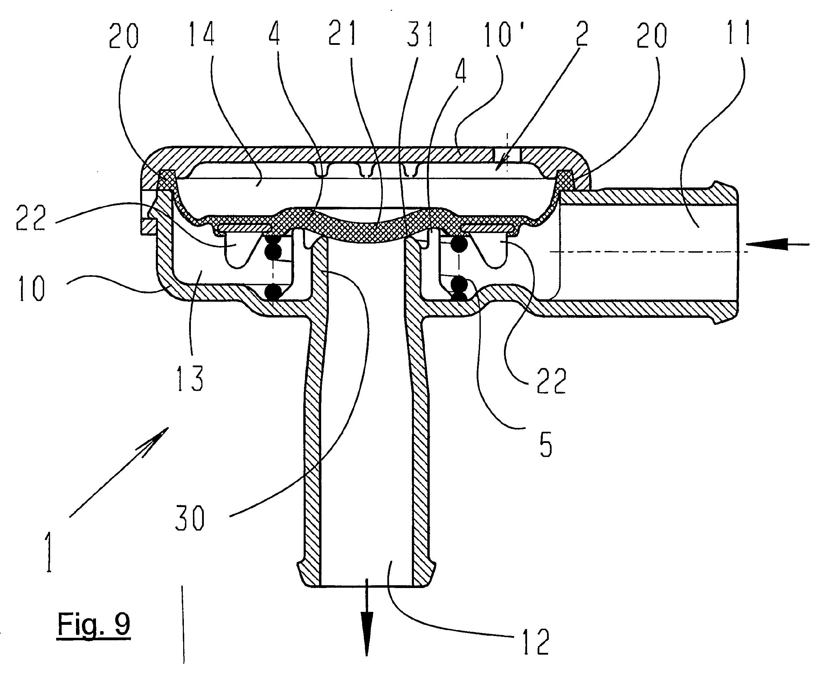

In Figur 9 hat eine weitere Bewegung der Stellmembran 2 nach unten hin stattgefunden, wonach nun die Unterseite der Membran 2 nicht nur am Voranschlag 4, sondern zugleich auch am Anschlag 31 anliegt. Wie die Figur 9 deutlich veranschaulicht, ist hierzu eine elastisch-flexible Verformung des zentralen Bereichs 21 der Membran 2 erforderlich. Auch hier wird also erreicht, daß für die weitere Verstellung der Membran 2 aus einer Position in Anlage nur an dem Voranschlag 4 bis in eine Position mit Anlage der Unterseite der Membran 2 auch an dem Anschlag 31 eine zusätzliche oder andere Verstellkraft aufgebracht werden muß, als sie für den ersten Teil des Verstellweges der Stellmembran 2 aufzubringen ist.

In seiner Funktion und auch in den übrigen Einzelteilen entspricht das Druckregelventil gemäß den Figuren 7 bis 9 den zuvor beschriebenen Versionen und hinsichtlich der weiteren Einzelteile des Druckregelventils 1 gemäß den Figuren 7 bis 9 wird auf die vorhergehende Beschreibung verwiesen.

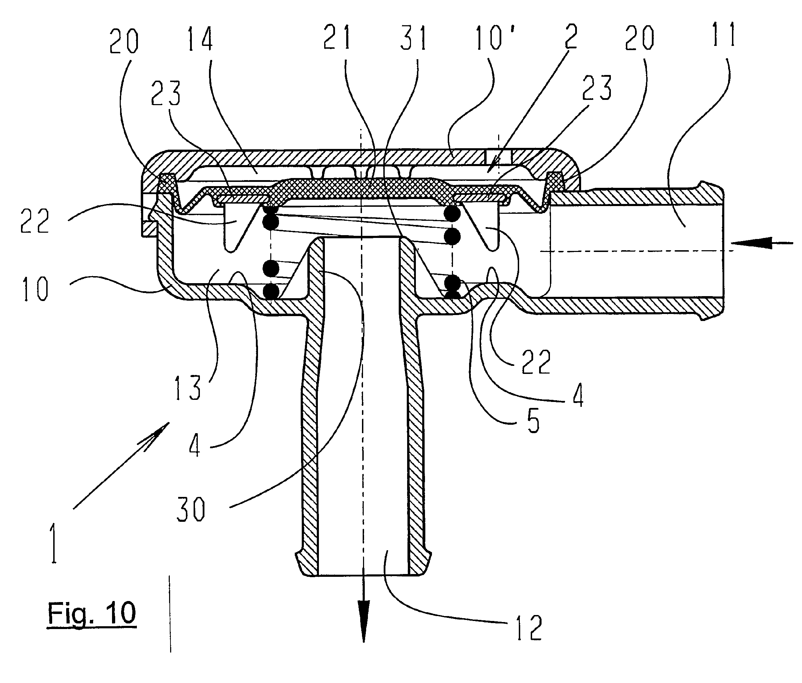

Die Figuren 10 bis 12 zeigen eine vierte Version des Druckregelventils 1. Bei dieser Version des Druckregelventils 1 ist der Voranschlag 4 durch einen ringförmigen, nach oben weisenden Bereich des Gehäuses 10 gebildet. Dieser Bereich, der den Voranschlag 4 bildet, liegt in Gegenüberstellung zu den Vorsprüngen 22, die aus der Unterseite der Stellmembran 2 nach unten hin vorragen.

In dem in Figur 10 gezeigten vollständig geöffneten Zustand des Druckregelventils 1 hat die Membran 2 ihre obere Stellung eingenommen und die nach unten weisenden Vorsprünge 22 weisen einen Abstand vom Voranschlag 4 auf.

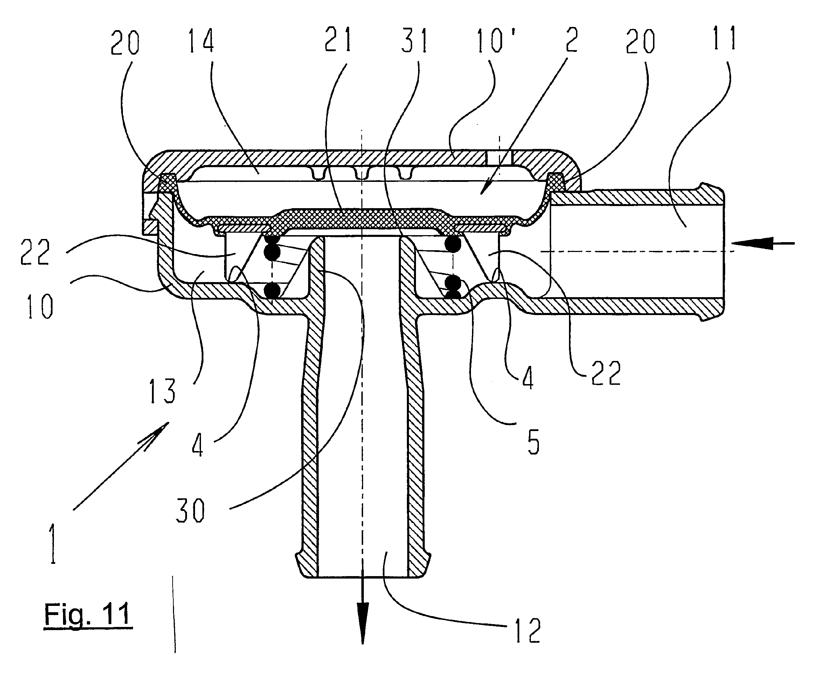

In dem in Figur 11 gezeigten teilweise geschlossenen Zustand des Druckregelventils 1 ist die Membran 2 infolge einer Druckdifferenz nach unten bewegt, bis die unteren Stirnenden der Vorsprünge 22 in Anlage an den Voranschlag 4 gelangen.

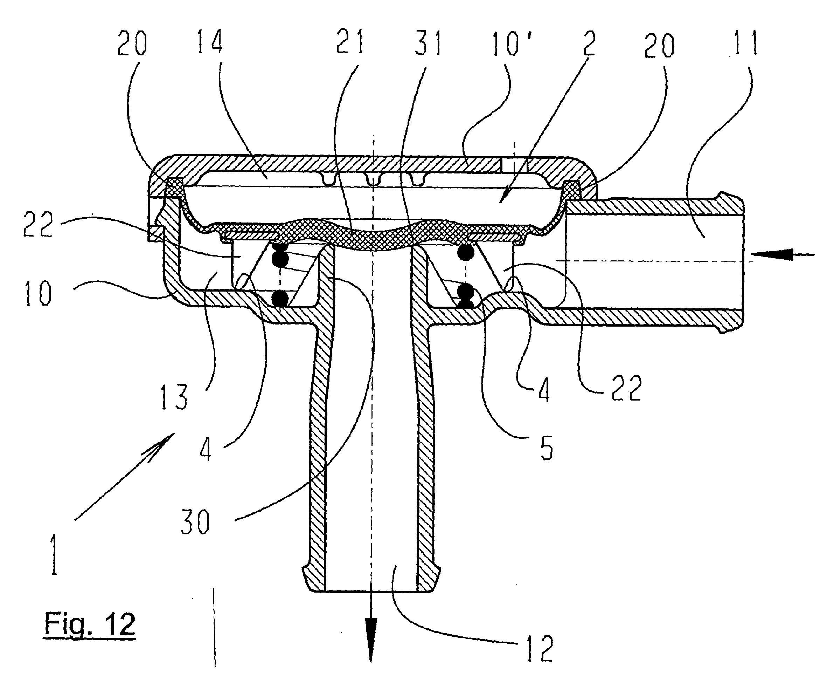

Figur 12 zeigt den geschlossenen Zustand des Druckregelventils 1 aus Figur 11, wobei nun der zentrale Bereich 21 der Membran 2 durch weitere elastisch-flexible Verformung soweit nach unten bewegt ist, daß seine Unterseite auch an dem Anschlag 31 am oberen Ende des Rohrstutzens 30 anliegt.

Auch bei dem Druckregelventil 1 gemäß den Figuren 10 bis 12 erfolgt die Verstellung der Membran 2 in Schließrichtung von der oberen Stellung der Membran bis zum Aufsetzen der Vorsprünge 22 auf dem Voranschlag 4 nur gegen die Kraft der Regelfeder 5. Für die weitere Verstellung muß die Membran 2 in sich in ihrem zentralen Bereich 21 zusätzlich elastisch-flexibel verformt werden, wofür eine höhere Kraft erforderlich ist, als für die Verstellung nur gegen die Rückstellkraft der Regelfeder 5. Damit wird auch hier eine Beeinflussung der Regelcharakteristik des Druckregelventils 1 ermöglicht, die ein frühzeitiges, unerwünschtes vollständiges Schließen des Druckregelventils 1 verhindert.

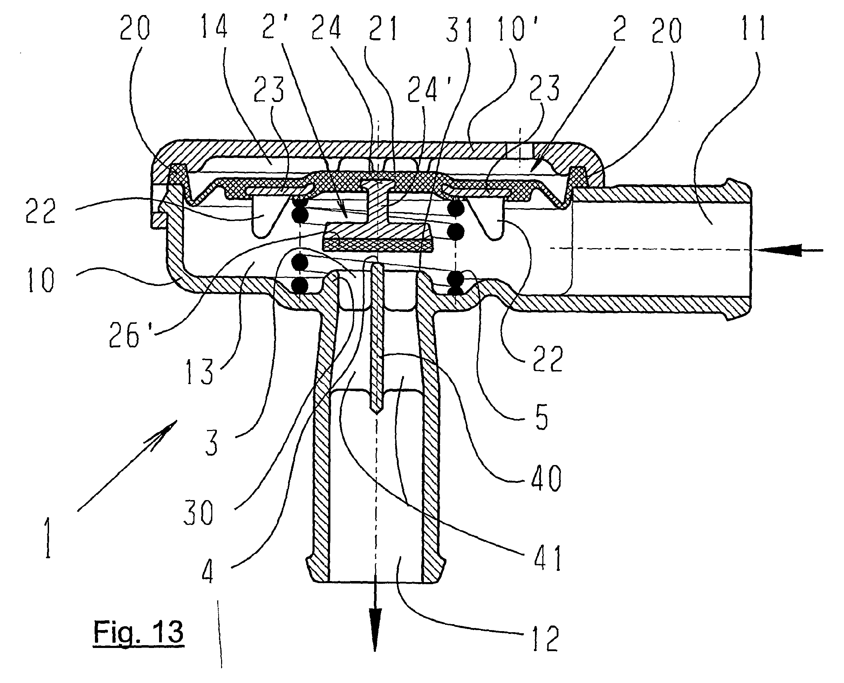

Bei den bisher beispielhaft beschriebenen Druckregelventilen 1 ist jeweils die Stellmembran 2 selbst das Element des Druckregelventils 1, das mit dem Rohrstutzen 30 und mit dem durch diesen verlaufenden Abströmquerschnitt 3 als Schließkörper zusammenwirkt. Bei der Version des Druckregelventils 1 gemäß den Figuren 13 bis 15 ist im Unterschied zu den vorherigen Versionen nun ein separater Schließkörper 2' vorgesehen. Dieser separate Schließkörper 2' ist im vorliegenden Beispiel stempelartig ausgeführt mit einem unteren, scheibenförmigen Teil, dessen Durchmesser etwas größer ist als der lichte Durchmesser des Abströmquerschnitts 3. Unterseitig ist der Schließkörper 2' mit einer Elastomerauflage 26' versehen. Über ein stielförmiges Verbindungselement 24' ist der Schließkörper 2' einstückig mit dem Membrantragkörper 23 und der ein Teil davon bildenden Einlage 24 ausgebildet.

Zentral im Rohrstutzen 30 liegt hier wieder ein Stift 40, dessen oberes Ende über das obere Ende des Rohrstutzens 30 vorragt und den Voranschlag 4 bildet.

In dem in Figur 13 gezeigten offenen Zustand liegt die Stellmembran 2 in ihrer oberen Position und der Schließkörper 2' ist um den maximal möglichen Weg von dem Voranschlag 4 und von dem Anschlag 31 nach oben hin abgehoben. Das Druckregelventil 1 hat nun also seinen maximalen freien Strömungsquerschnitt.

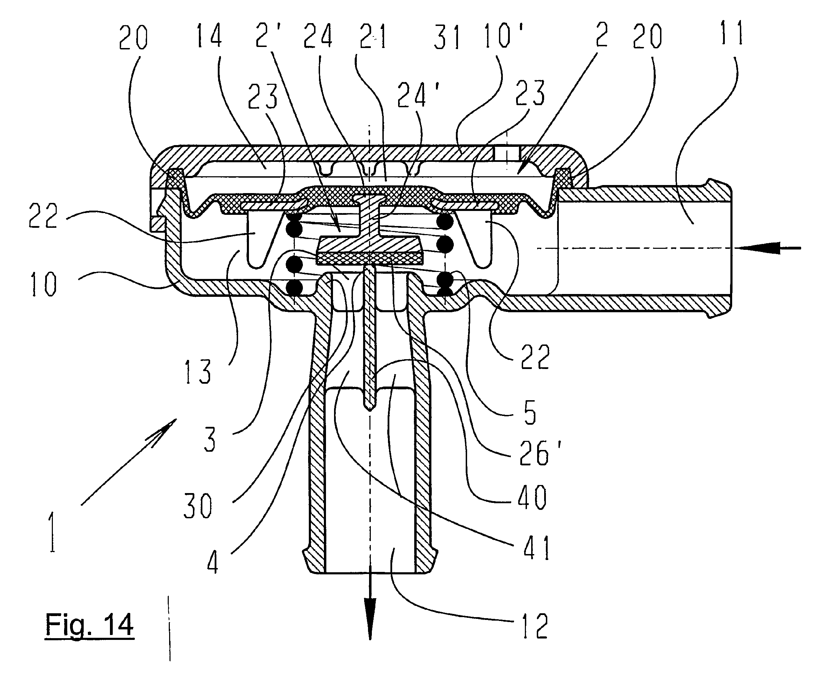

In Figur 14 ist das Druckregelventil 1 aus Figur 13 in teilweise geschlossenem Zustand gezeigt. Hier ist durch eine entsprechende Druckdifferenz die Stellmembran 2 so weit nach unten bewegt, daß die Unterseite der Elastomerauflage 26' des Schließkörpers 2' an dem Voranschlag 4 anliegt, nicht aber an dem Anschlag 31. Es steht nun also ein reduzierter Strömungsquerschnitt 3 durch das Druckregelventil 1 zur Verfügung.

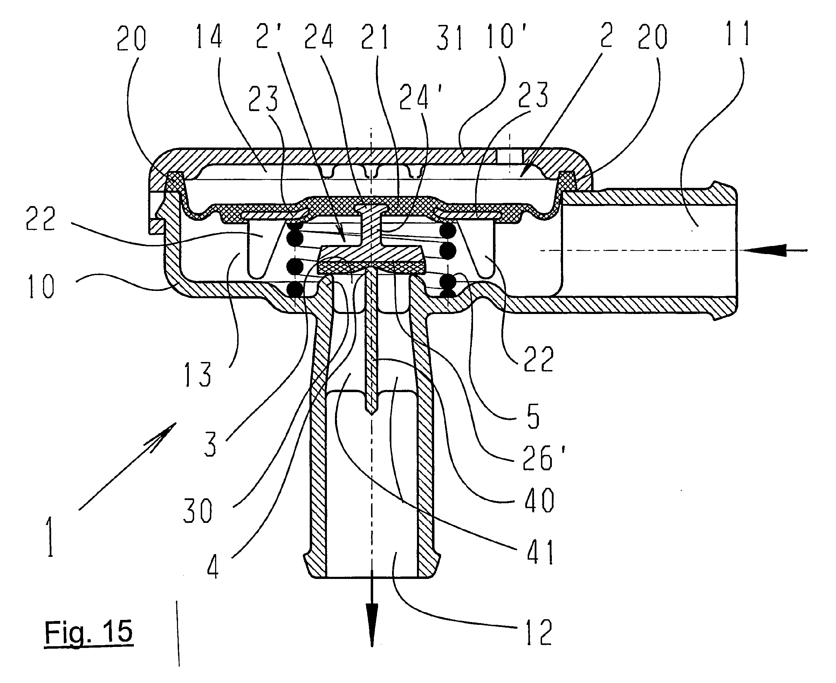

In Figur 15 ist das Druckregelventil 1 aus den Figuren 13 und 14 nun in vollständig geschlossenem Zustand gezeigt. Hier ist durch eine zunehmende Druckdifferenz die Stellmembran 2 noch weiter nach unten bewegt. Hierdurch wird die Elastomerauflage 26' in ihrem Berührungsbereich mit dem Voranschlag 4 komprimiert, bis der radial äußere Bereich der Elastomerauflage 26' des Schließkörpers 2' am Anschlag 31 anliegt. Hierdurch wird nun der Strömungsquerschnitt des Druckregelventils 1 verschlossen.

Auch bei dieser Version des Druckregelventils 1 erfolgt die Verstellbewegung der Stellmembran 2 in dem ersten Verstellbereich zwischen der vollständig geöffneten Stellung und zwischen der Stellung, in der die Elastomerauflage 26' des Schließkörpers 2' am Voranschlag 4 zur Anlage kommt, allein gegen die Kraft der Regelfeder 5. Für die weitere Verstellung muß zusätzlich zur Kraft der Regelfeder 5 die elastische Rückstellkraft der Elastomerauflage 26' des Schließkörpers 2' überwunden werden.

Auch bei dem Druckregelventil 1 gemäß den Figuren 13 bis 15 wird also eine Regelcharakteristik erreicht, die ein unerwünschtes frühzeitiges vollständiges Schließen des Druckregelventils 1 vermeidet.

In seinen übrigen Einzelteilen entspricht das Druckregelventil 1 gemäß den Figuren 13 bis 15 dem Druckregelventil gemäß den Figuren 1 bis 3 und es wird auf dessen Beschreibung verwiesen.

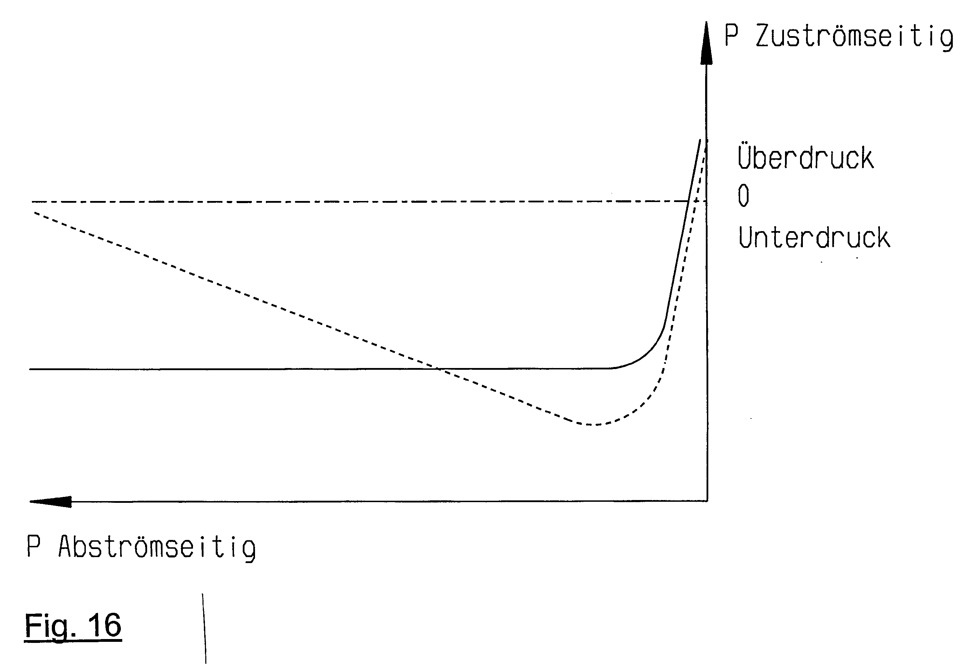

Die Figur 16 verdeutlicht anhand eines Druckdiagramms die Wirkung der zuvor beschriebenen Druckregelventile 1 im Vergleich zu einem konventionellen Druckregelventil. In dem Druckdiagramm ist der abströmseitige Druck in der unteren Kammer 13 dem zuströmseitigen Druck im Gaseinlaß 11 gegenübergestellt. Durch die strichpunktierte Linie ist der Referenzdruck, z.B. der Umgebungs- bzw. Atmosphärendruck, im Gaseinlaß 11 dargestellt.

Die gestrichelte Linie zeigt ein typisches Regelverhalten eines konventionellen Druckregelventils. Bei abnehmendem Druck in der unteren Kammer 13 kommt es zunächst zu einem raschen Abnehmen des Drucks im Gaseinlaß 11. Im Anschluß daran steigt aber bei weiterer Abnahme des Drucks in der unteren Kammer 13 der Druck im Gaseinlaß 11 wieder stetig an. Dieser Anstieg des Drucks im Gaseinlaß 11 bei abnehmendem Druck in der unteren Kammer 13 ist in vielen Anwendungsfällen nicht erwünscht.

Hier schafft das erfindungsgemäße Druckregelventil 1 Abhilfe, für das eine typische Regelkurve durch die durchgezogene Linie dargestellt ist. Auch hier kommt es zunächst bei abnehmendem Druck in der unteren Kammer 13 zu einem raschen Abfall des Drucks im Gaseinlaß 11. Nach Erreichen eines gewissen Unterdrucks im Gaseinlaß 11 wird aber das Druckniveau im Gaseinlaß 11 auf einem konstanten Wert gehalten, auch wenn der abströmseitige Druck in der unteren Kammer 13 weiter sinkt. Das Entstehen eines zu hohen, störenden oder sogar schädlichen Drucks auf der Zuströmseite im Gaseinlaß 11 wird mit dem Druckregelventil 1 gemäß Erfindung sicher vermieden.

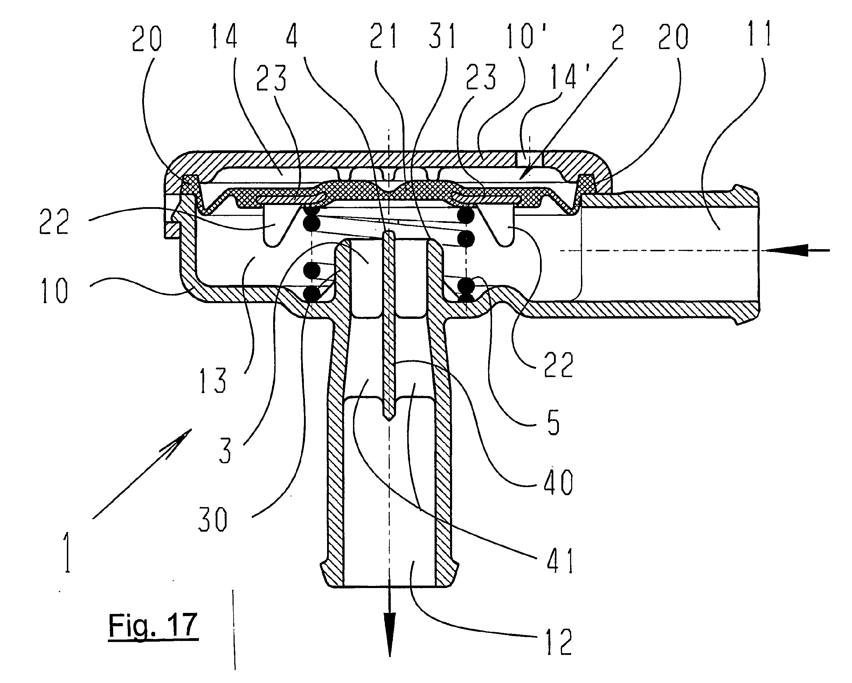

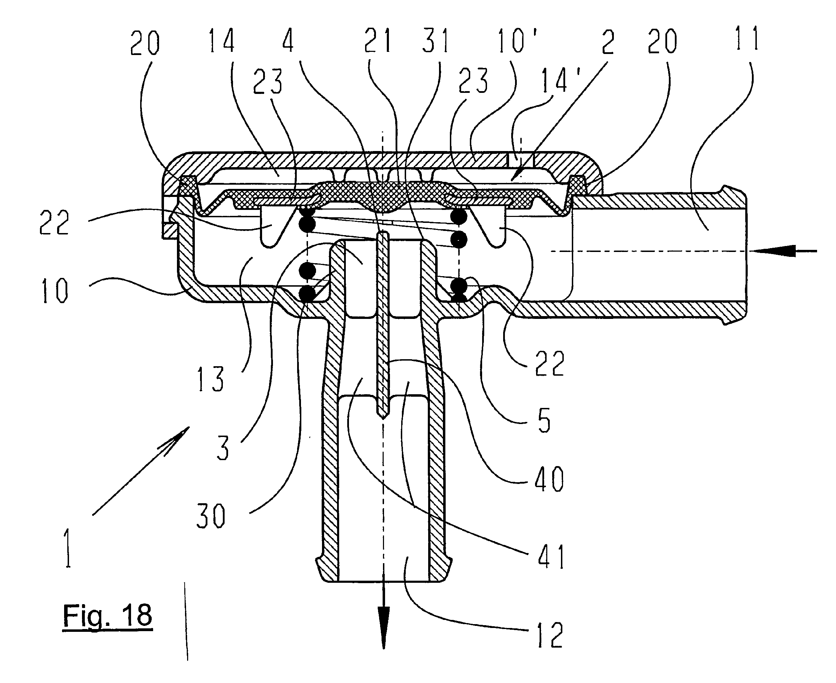

Die Figuren 17 und 18 zeigen zwei Abwandlungen des Druckregelventils 1 aus den Figuren 1 bis 3.

Bei dem Druckregelventil 1 gemäß Figur 17 ist im zentralen Bereich 21 der Stellmembran 2 eine oberseitige Materialschwächung vorgesehen, die in diesem Bereich die elastisch-flexiblen Eigenschaften der Stellmembran 2 verändert. Insbesondere wird in dieser Ausführung die Membran 2 in ihrem zentralen Bereich 21 mit geringerem Kraftaufwand verformbar.

Im Gegensatz dazu besitzt die Stellmembran 2 bei dem Druckregelventil 1 gemäß Figur 18 in ihrem zentralen Bereich 21 eine Materialverdickung. Hiermit wird erreicht, daß für die weitere Verformung des zentralen Bereichs 21 der Membran 2 ein höherer Kraftaufwand erforderlich wird. Durch diese beiden Maßnahmen kann der Kraftaufwand für die weitere Verstellung der Membran aus der Stellung mit Anlage am Voranschlag 4 bis in die Stellung mit Anlage am Anschlag 31 in unterschiedlicher Richtung verändert werden.

Zusätzlich oder alternativ ist es auch möglich, den Voranschlag 4 und den Anschlag 31 in ihrer Position relativ zueinander verstellbar zu machen. Auch mit dieser Maßnahme kann der Kraftaufwand für die weitere Verstellung der Stellmembran 2 beeinflußt werden, wodurch sich eine entsprechende Beeinflussung der Regelcharakteristik des Druckregelventils 1 ergibt.

In den vorstehend nicht erläuterten weiteren Einzelteilen entsprechen die Druckregelventile 1 gemäß den Figuren 17 und 18 dem Druckregelventil 1 gemäß den Figuren 1 bis 3.

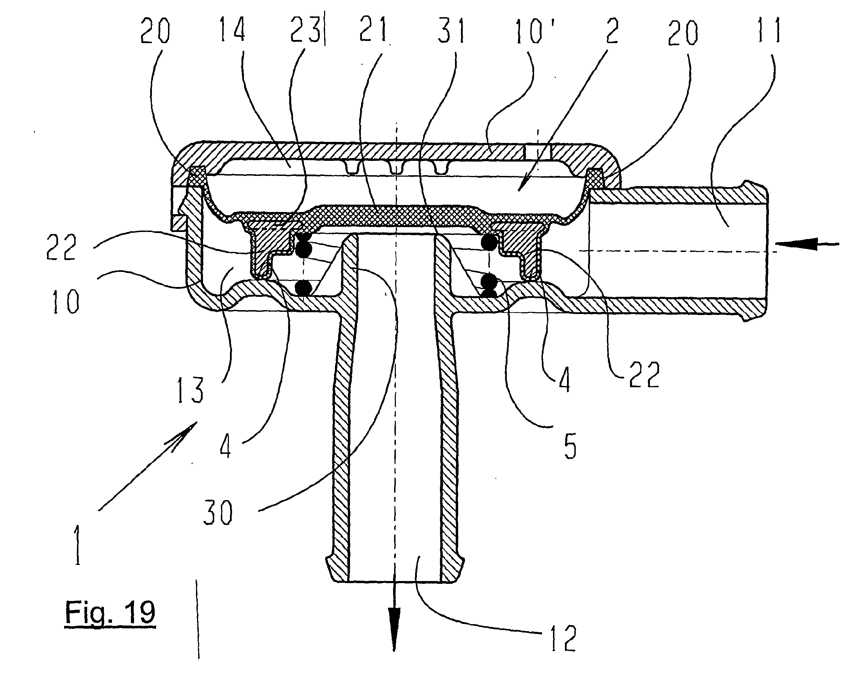

Figur 19 zeigt eine achte Version des Druckregelventils 1. Bei dieser Version ist, vergleichbar mit der vierten Version des Druckregelventils 1 gemäß den Figuren 10 bis 12, der Voranschlag 4 oberseitig an einer unteren Wandung des Gehäuses 10 vorgesehen, hier in Form einer ringförmig um den Rohrstutzen 30 herum verlaufenden, wulstartigen Erhöhung.

Die Stellmembran 2 ist hier mit einem integrierten Membrantragkörper 23 ausgebildet, von dem wieder Vorsprünge 22 nach unten hin abgehen. An ihrer äußeren Oberfläche sind die Vorsprünge 22 mit einem Elastomerüberzug versehen, der einstückig mit dem Elastomermaterial ist, aus dem die Membran 2 überwiegend besteht.

In dem in Figur 19 gezeigten teilweise geschlossenen Zustand des Druckregelventils 1 liegen die Vorsprünge 22 mit ihrem unteren Stirnende am Voranschlag 4 an. Der zentrale Bereich 21 der Membran 2 hat hier noch einen Abstand vom Anschlag 31 am oberen Stirnende des Rohrstutzens 30.

Um dieses Druckregelventil 1 in seine vollständig geschlossene Stellung zu bringen, muß der zentrale Bereich 21 der Stellmembran 2 soweit nach unten elastisch-flexibel verformt werden, daß sich die Unterseite des zentralen Bereichs 21 der Membran 2 an den Anschlag 31 anlegt. Auch hier besteht also die Möglichkeit, für den ersten Abschnitt des Verstellweges der Membran 2 und für den zweiten Abschnitt des Verstellweges der Membran 2 unterschiedliche Gegenkräfte zu erzeugen, wodurch eine entsprechende, gezielte Beeinflussung der Regelcharakteristik des Druckregelventils 1 ermöglicht wird. Im übrigen entspricht das Druckregelventil 1 gemäß Figur 19 in seinen weiteren Einzelteilen dem Druckregelventil gemäß den Figuren 10 bis 12.

Bei den vorstehend beschriebenen Ausführungen des Druckregelventils sind die Stellmembran 2 und deren Tragkörper 23 als integrales Spritzgußteil hergestellt. Dabei wird bei der Herstellung ein vorgefertigter Tragkörper 23 mit dem elastisch-flexiblen Membranmaterial in einer Spritzform umspritzt. Hierdurch wird der Membrantragkörper 23 in den dafür vorgesehen Bereichen in das elastisch-flexible Membranmaterial eingebettet.

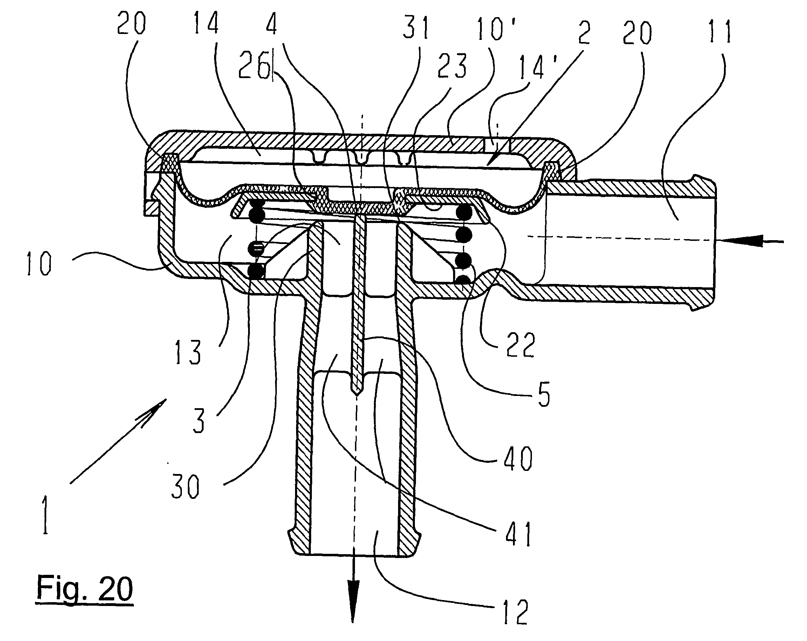

Die Figur 20 zeigt als weiteres Ausführungsbeispiel ein Druckregelventil 1, das sich von den zuvor beschriebenen Druckregelventilen hinsichtlich der Ausführung und Herstellung der Stellmembran 2 und ihres Stützkörpers 23 unterscheidet. Bei dem Druckregelventil 1 gemäß Figur 20 sind der Membrantragkörper 23 und der übrige, elastisch-flexible Teil der Stellmembran 2 zunächst separat hergestellte Einzelteile, hier Spritzgußteile. Diese beiden Teile 2, 23 sind nach ihrer Herstellung miteinander verbunden, um das in Figur 20 sichtbare komplette Bauteil aus Stellmembran 2 und zugehörigem Membrantragkörper 23 zu bilden.

Zur Verbindung des Membrantragkörpers 23 mit der übrigen Stellmembran 2 besitzt letztere in ihrem zentralen Bereich einen nach unten, also zum Tragkörper 23 hin, weisenden Vorsprung mit einem radial nach außen offenen, umlaufenden, nutförmigen Hinterschnitt 26. Der Membrantragkörper 23 ist hier ringförmig, also mit einer zentralen Durchbrechung ausgeführt. Durch diese Durchbrechung kann der zentrale, nach unten vorspringende Bereich der Stellmembran 2 aus dem elastisch-flexiblen Material unter Einfederung hindurchgedrückt werden, bis der radial innere Rand des Membrantragkörpers 23 in dem Hinterschnitt 26 zu liegen kommt. In diesem Zustand sind dann der Membrantragkörper 23 und die übrige Stellmembran 2 ausreichend fest und dauerhaft miteinander verbunden.

An der Unterseite des Membrantragkörpers 23, der seinerseits unter der elastisch-flexiblen Stellmembran 2 liegt, stützt sich die Regelfeder 5 mit ihrem oberen Ende ab.

Wie bei dem Ausführungsbeispiel des Druckregelventils 1 gemäß den Figuren 1 bis 3 ist auch bei dem Ausführungsbeispiel gemäß Figur 20 im Abströmquerschnitt 3 ein zentraler Stift 40 angeordnet, dessen oberes Ende einen Voranschlag 4 für die Stellmembran 2 bildet und der über den Anschlag 31 am oberen Ende des den Abströmquerschnitt 3 umgrenzenden Rohrstutzen 30 hinausragt.

In Figur 20 ist das Druckregelventil 1 in seinem teilweise geschlossenen Zustand dargestellt, in welchem die Stellmembran 2 mit ihrem zentralen Bereich gerade an dem Voranschlag 4 anliegt. Bis zu dieser Stellung mußte die Stellmembran 2 aus ihrer vollständigen Öffnungsstellung nur gegen die Kraft der Regelfeder 5 in Schließrichtung bewegt werden. Die Kraft für diese Verstellung wird auch hier durch einen gewissen Unterdruck in der unteren Kammer 13 des Gehäuses 10 bewirkt, also einen Druck, der niedriger ist als der Referenzdruck, hier der Atmosphäredruck, in der oberen Kammer 14.

Bei stärker werdendem Unterdruck in der unteren Kammer 13 verformt sich der zentrale Bereich der Stellmembran 2 radial außerhalb des Voranschlages 4 elastisch-flexibel, bis schließlich die Unterseite der Stellmembran 2 auch in Anlage an den Anschlag 31 gelangt. In dieser Stellung der Stellmembran 2 ist das Druckregelventil 1 vollständig geschlossen. Für diesen zweiten Teil der Bewegung der Stellmembran 2 muß zusätzlich zur Kraft der Regelfeder 5 die elastisch-flexible Rückstellkraft des zentralen Bereichs der Stellmembran 2 überwunden werden, wodurch sich eine Veränderung der Regelcharakteristik im Verhältnis zu dem ersten Verstellbereich der Stellmembran 2 zwischen vollständiger Öffnungsstellung und teilweise geschlossener Stellung ergibt.

In seinen übrigen Teilen und in seiner Funktion entspricht das Druckregelventil 1 gemäß Figur 20 ansonsten dem Ausführungsbeispiel des Druckregelventils 1 gemäß den Figuren 1 bis 3.

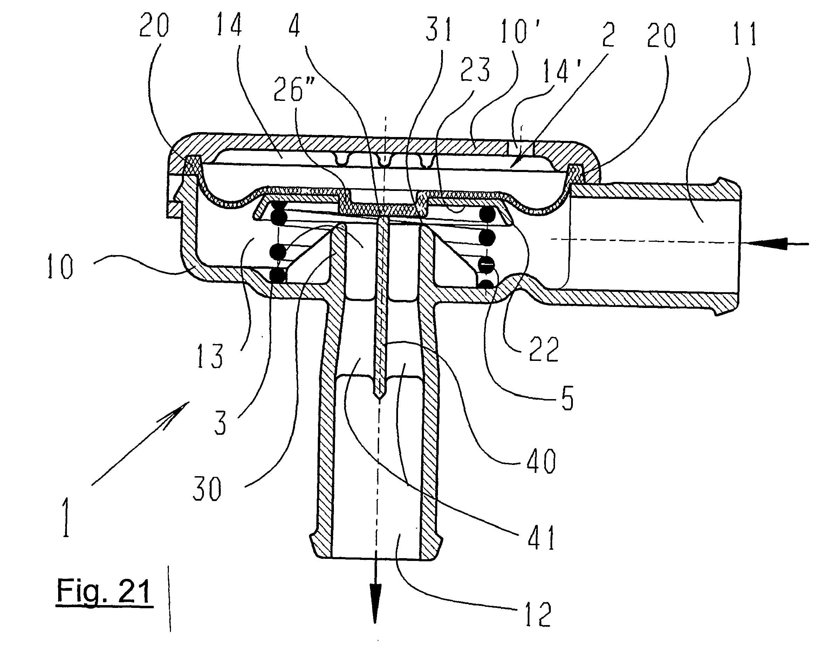

Bei dem Ausführungsbeispiel des Druckregelventils 1 gemäß Figur 21 sind wieder der Membrantragkörper 23 und die übrige Stellmembran 2 zunächst als separate Einzelteile gefertigt. Die elastisch-flexible Stellmembran 2 besitzt in ihrem zentralen Bereich einen nach unten, also in Richtung zum Anschlag 31 weisenden Vorsprung 26", der aber im Unterschied zu der Ausführung gemäß Figur 20 keinen Hinterschnitt aufweist. Mit diesem Vorsprung 26" ragt die Stellmembran 2 durch eine zentrale Durchbrechung im auch hier ringförmigen Membrantragkörper 23. Von unten her stützt sich die Regelfeder 5 mit ihrem oberen Ende an der Unterseite des Membrantragkörpers 23 ab. Auf diese Weise wird der Membrantragkörper 23 stets in Anlage an der Unterseite der Stellmembran 2 gehalten, auch ohne daß zwischen dem Membrantragkörper 23 und der übrigen Stellmembran 2 eine gesonderte Verbindung vorgesehen ist. Die Anlage des Membrantragkörpers 23 an der Unterseite der Stellmembran 2 bleibt bei jeder Bewegung der Stellmembran 2 nach oben oder unten erhalten, da das obere Ende der Regelfeder 5 jeder Verstellbewegung der Stellmembran 2 folgt.

In seinen übrigen Einzelteilen und Funktionen entspricht Druckregelventil 1 gemäß Figur 21 dem Druckregelventil 1 gemäß den Figuren 1 bis 3.

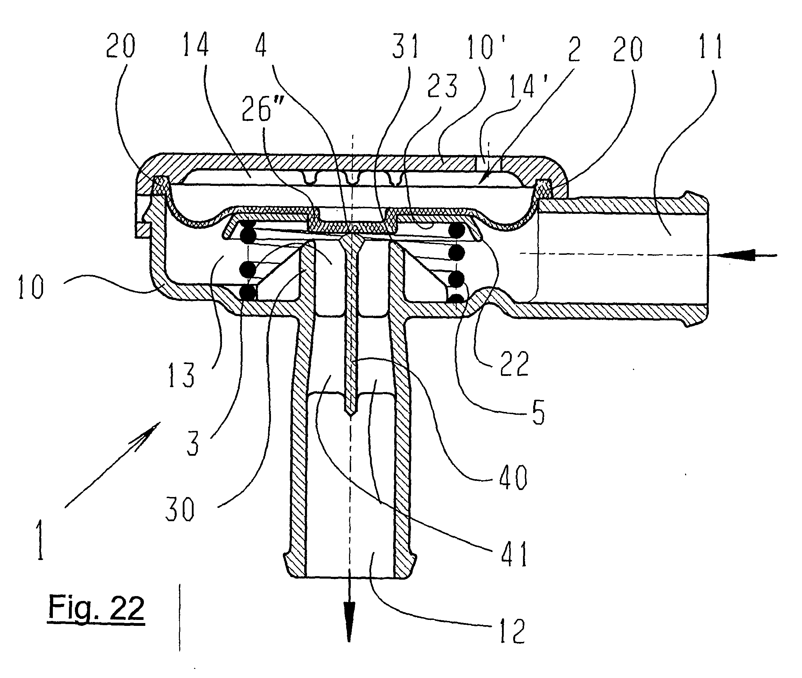

Ein weiteres Ausführungsbeispiel eines Druckregelventils 1 ist in Figur 22 dargestellt. Bei diesem Ausführungsbeispiel sind die Stellmembran 2 und der Membrantragkörper 23 in gleicher Weise gestaltet wie bei dem Ausführungsbeispiel gemäß Figur 21.

Eine gegenüber den zuvor beschriebenen Ausführungsbeispielen geänderte Ausgestaltung weist der obere Bereich des Stifts 40 auf, der konzentrisch im Abströmquerschnitt 3 angeordnet ist und dessen oberes Ende den Voranschlag 4 bildet. In seinem oberen Endbereich besitzt hier der Stift 40 eine kegelförmige äußere Kontur, wobei der Durchmesser des Stifts 40 von oben nach unten, also in Strömungsrichtung des Gases durch den Abströmquerschnitt 3 gesehen, kleiner wird. An seiner der Stellmembran 2 zugewandten Seite ist der Voranschlag 4 hier linsenförmig mit einer gerundeten Kuppe ausgeführt.

Die in Figur 22 dargestellte Kontur des Stifts 40 sorgt für eine verbesserte Strömungsführung bei der Strömung des Gases aus der Kammer 13 zwischen der Stellmembran 2 und dem Anschlag 31 hindurch in den Abströmquerschnitt 3. Dabei wird die Kontur des Stifts 40 insbesondere für die Gasströmung vorteilhaft wirksam, wenn das Druckregelventil 1, wie in Figur 22 dargestellt, sich in seiner teilweise geschlossenen Stellung befindet. Hier sorgt die Kontur des Stifts 40 für eine günstige Strömungsführung und -umlenkung der zunächst radial von außen nach innen und dann axial nach unten verlaufenden Gasströmung.

In seinen weiteren Einzelteilen und Funktionen entspricht das Druckregelventil 1 gemäß Figur 22 dem Ausführungsbeispiel gemäß Figur 21 und dem Ausführungsbeispiel gemäß in Figuren 1 und 3.

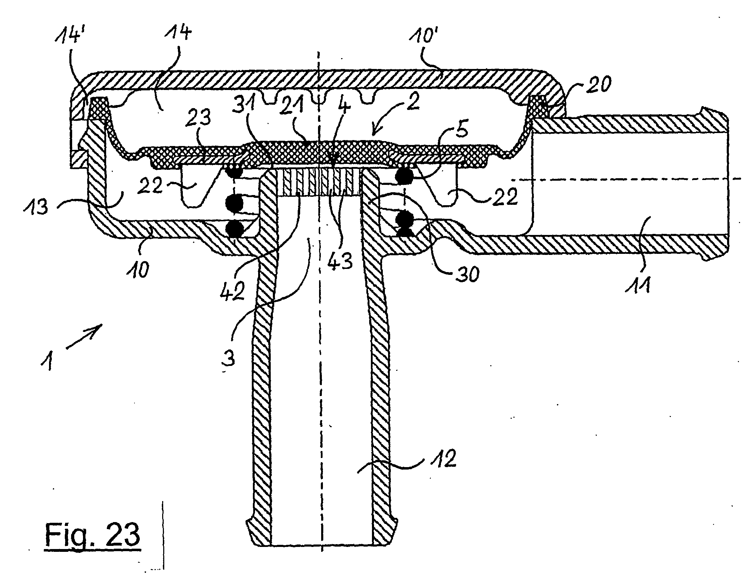

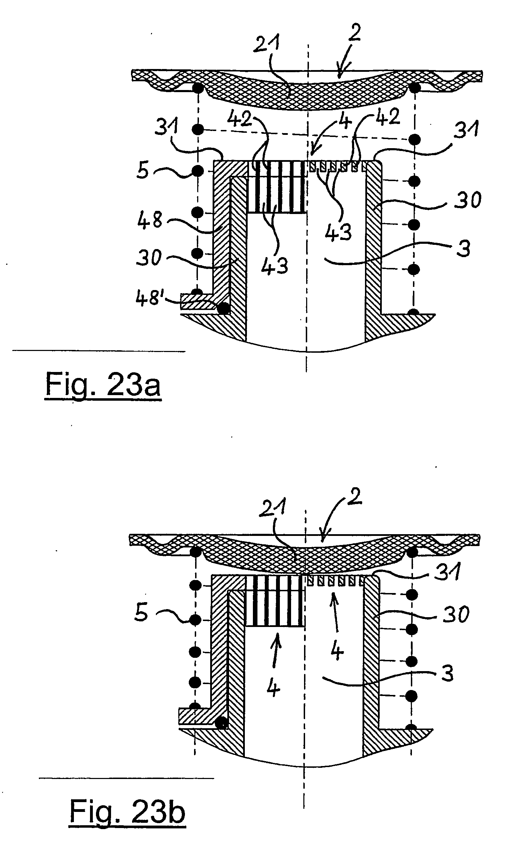

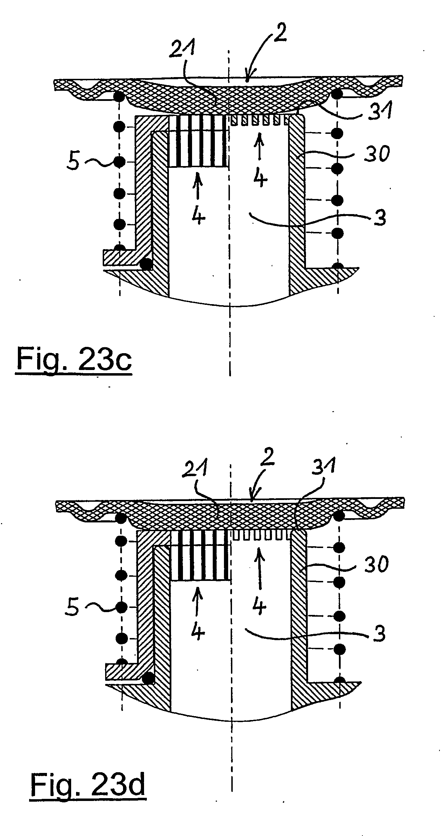

Wie die Figur 23 zeigt, besitzt das hier dargestellte weitere Ausführungsbeispiel eines Druckregelventils 1 ein Gehäuse 10, das oberseitig mit einem Deckel 10' verschlossen ist. Zwischen dem Gehäuse 10 und dem Deckel 10' ist eine elastisch-flexible Stellmembran 2 mittels eines Einspannrandes 20 dichtend eingespannt.

Durch die Stellmembran 2 wird das Innere des Gehäuses 10 in eine untere Kammer 13 und eine obere Kammer 14 unterteilt. Die untere Kammer 13 ist mit einem Gaseinlaß 11 verbunden, der seinerseits mit einer Quelle eines Gasstroms, beispielsweise dem Kurbelgehäuse einer Brennkraftmaschine, verbunden ist. Die obere Kammer 14 steht über einen kleinen Kanal 14' mit der freien Atmosphäre in Verbindung.

Weiterhin führt aus der unteren Kammer 13 ein Abströmquerschnitt 3 heraus, der durch einen kurzen Rohrstutzen 30 gebildet ist, dessen obere Stirnseite einen Anschlag 31 für die Stellmembran 2 bildet, wenn die Stellmembran 2 den Abströmquerschnitt 3 vollständig verschließt. In dem in Figur 23 dargestellten Betriebszustand des Druckregelventils 1 liegt die Stellmembran 2 von dem Anschlag 31 beabstandet, so daß ein Gasstrom, der durch den Gaseinlaß 11 in die Kammer 13 strömt, durch den Abströmquerschnitt 3 und nachfolgend durch einen Gasauslaß 12 abströmen kann. Der Gasauslaß 12 ist beispielsweise mit dem Ansaugtrakt einer zugehörigen Brennkraftmaschine verbunden.

Zwischen der Unterseite der Stellmembran 2 und einer nach oben weisenden Fläche des Gehäuses 10 ist eine Regelfeder 5 in Form einer den Rohrstutzen 30 umgebenden Schraubenfeder angeordnet, die die Stellmembran 2 mit einer nach oben, also in Öffnungsrichtung weisenden Kraft vorbelastet.

Wie die Figur 23 weiter zeigt, ist im Rohrstutzen 30 ein Voranschlag 4 angeordnet, dessen Oberkante in Höhe des Anschlages 31 liegt und der hier durch eine Voranschlagstruktur 42 gebildet ist. Diese Voranschlagstruktur 42 weist parallel zueinander in Axialrichtung des Abströmquerschnitts 3 verlaufende Durchbrechungen 43 auf, wobei jede Durchbrechung 43 einen kleinen Kanal bildet.

Innerhalb der Stellmembran 2 ist in deren zentralem Bereich 21 nur ein Elastomermaterial vorgesehen, das elastisch und flexibel ist. Radial außerhalb des zentralen Bereichs 21 ist hier in der Stellmembran 2 ein Membrantragkörper 23 angeordnet, der über seinen Umfang verteilt mehrere nach unten weisende Vorsprünge 22 aufweist. Diese Vorsprünge 22 dienen zur Zentrierung des oberen Endes der Regelfeder 5 relativ zur Stellmembran 2.

Im Betrieb des Druckregelventils 1 kommt es aufgrund von Druckdifferenzen infolge eines niedrigeren Drucks in der unteren Kammer 13 und eines höheren, hier atmosphärischen Drucks in der oberen Kammer 14 zu einer Verstellung und zugleich auch zu einer Verformung der Stellmembran 2. Dabei bildet sich insbesondere im zentralen Bereich 21 der Stellmembran 2 ein nach unten weisender konvexer Membranbereich aus. Dies führt dazu, daß sich bei Verstellung der Stellmembran 2 in Schließrichtung, also hier nach unten und in Richtung zum Rohrstutzen 30 hin, zunächst der zentrale Bereich 21 der Stellmembran 2 an den zentralen Bereich der Voranschlagstruktur 42 anlegt, während radial außen von dem bereits angelegten Membranbereich die Membran 2 noch Abstand von der Voranschlagstruktur 42 und von dem Anschlag 31 aufweist. Erst bei weiter sinkendem Druck in der unteren Kammer 13 legt sich die Stellmembran 2 radial von innen nach außen fortschreitend zunächst zunehmend an die Voranschlagstruktur 42 und schließlich auch an den Anschlag 31 an.

Dieser Vorgang ist in den Figuren 23a bis 23d mit verschiedenen Positionen der Stellmembran 2 veranschaulicht. Dabei ist jeweils nur die Stellmembran 2 zusammen mit dem Abströmquerschnitt 3 ausschnittsweise dargestellt.

In Figur 23a ist die Stellmembran 2 in ihrer Öffnungsendstellung gezeigt, in der sie so weit wie möglich von dem Anschlag 31 und dem darin angeordneten Voranschlag 4 entfernt ist. Die Stellmembran 2 besitzt hier einen zentralen Bereich 21, der mit einer nach unten, also in Richtung zum Abströmquerschnitt 3 weisenden konvexen Wölbung ausgeführt ist.

Jeweils in der linken und in der rechten Hälfte der Figuren 23a bis 23d sind zwei unterschiedliche Ausführungen des Abströmquerschnitts 3 und des Voranschlages 4 gezeigt. Jeweils in der rechten Hälfte ist der Rohrstutzen 30 an seinem oberen Ende, also in Höhe des Anschlages 31, einstückig mit der den Voranschlag 4 bildenden Voranschlagstruktur 42 ausgebildet. Die Voranschlagstruktur 42 ist hier durch parallel zueinander und senkrecht zur Zeichnungsebene verlaufende Stege gebildet, die zwischen sich Durchbrechungen 43 freilassen.

Jeweils in der linken Hälfte ist eine zweiteilige Ausführung gezeigt, wobei auf den Rohrstutzen 30 als separates Einzelteil ein Hülsenteil 48 unter Zwischenlage eines Dichtrings 48' aufgesteckt ist. Der obere Bereich des Hülsenteils 48 bildet den Anschlag 31 und zugleich auch den Voranschlag 4 mit der Voranschlagstruktur 42. Auch hier besteht die Voranschlagstruktur 42 aus parallel zueinander und senkrecht zur Zeichnungsebene verlaufenden Stegen oder Wänden, die hier allerdings eine größere axiale Länge aufweisen als in der Voranschlagstruktur 42 jeweils in der rechten Hälfte. Zwischen den die Voranschlagstruktur 42 bildenden Wänden sind auch jeweils in der linken Hälfte Durchbrechungen 43 für die Gasführung freigehalten.

In dem in der Figur 23a gezeigten Zustand steht der volle Strömungsquerschnitt durch alle Durchbrechungen 43 in der Voranschlagstruktur 42 zur Verfügung.

In dem in Figur 23b gezeigten Zustand hat sich die Stellmembran 2 aufgrund geänderter Druckverhältnisse unterhalb und oberhalb der Stellmembran 2 dem Voranschlag 4 angenähert, wobei im Zentrum des zentralen Bereichs 21 der Stellmembran 2 soeben eine erste Berührung zwischen der Stellmembran 2 und der Voranschlagstruktur 42 erfolgt. Der Strömungsquerschnitt durch den Voranschlag 4 wird damit schon etwas verkleinert.

In Figur 23c hat sich die Stellmembran 2 noch weiter in Richtung zum Voranschlag 4 bewegt, wobei sich der zentrale Bereich 21 der Stellmembran 2 ausgehend von seinem Zentrum radial nach außen fortschreitend weiter an den Voranschlag 4 angelegt hat und nun einen Teil der Durchbrechungen 43 verschließt, während die radial außen liegenden Durchbrechungen 43 noch frei sind. Aufgrund seiner Elastizität und Flexibilität legt sich dabei der zentrale Bereich 21 der Stellmembran 2 an die hier ebene Oberfläche der Voranschlagstruktur 42 an. Auf diese Weise wird ein Teil der auf die Membran 2 wirkenden Kraft, nämlich der in dem Flächenbereich, der schon an der Voranschlagstruktur 42 anliegt, wirkende Teil der Kraft unmittelbar auf den Rohrstutzen 30 und damit auf das Gehäuse 10 des Druckregelventils 1 abgeleitet. Hierdurch wird eine erwünschte und vom Unterdruck im Gasauslaß weitgehend unbeeinflußte Regelcharakteristik des Druckregelventils 1 gefördert.

In Figur 23d hat sich die Stellmembran 2 vollständig an die Voranschlagstruktur 4 sowie an den Anschlag 31 des Abströmquerschnitts 3 angelegt, wodurch nun die Schließstellung erreicht ist, in der keinerlei Gasstrom mehr fließt.

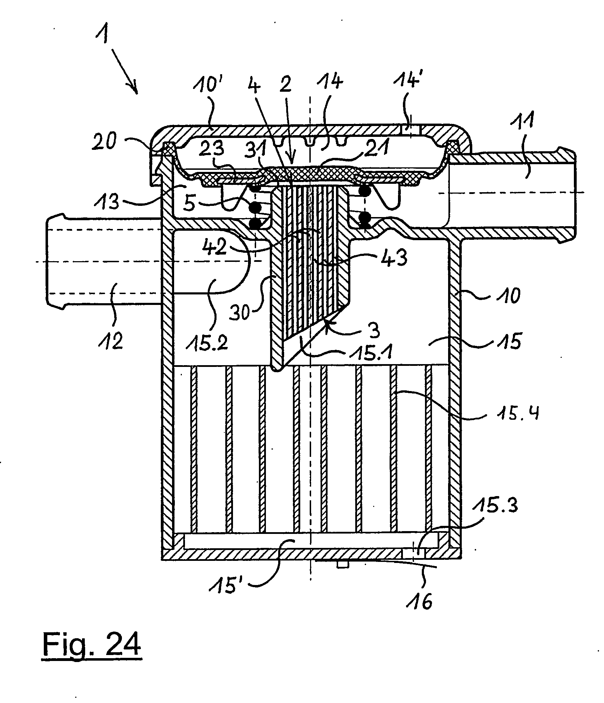

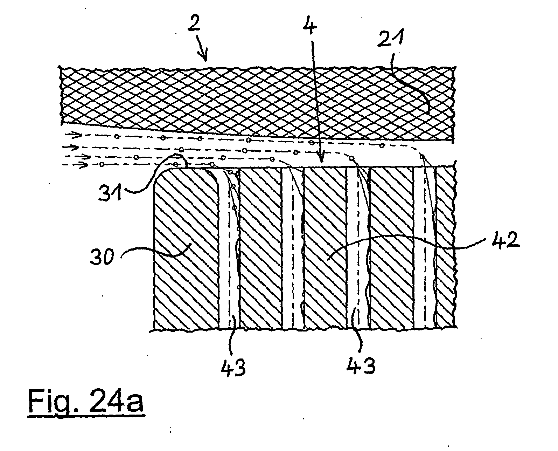

Figur 24 zeigt ein zweites Druckregelventil 1, das im Unterschied zu dem Beispiel gemäß Figur 23 nun zusätzlich über einen Flüssigkeitssammelraum 15 verfügt.

In dem Flüssigkeitssammelraum 15 befindet sich ein gitterförmiger Einsatz 15.4, der ein Schwappen und Mitreißen von abgeschiedener Flüssigkeit in den Gasaustrittsstutzen 12 verhindert.

Das Gehäuse 10 besitzt auch hier einen Deckel 10', der die Stellmembran 2 mittels eines Einspannrandes 20 dichtend im Gehäuse 10 hält. Die Membran 2 trennt auch hier das Innere des Gehäuses 10 in eine untere Kammer 13 und eine obere Kammer 14. Die untere Kammer 13 steht mit dem Gaseinlaß 11 in Verbindung. Die obere Kammer 14 steht über eine kleine Bohrung 14' mit der freien Atmosphäre in Verbindung.

Auch hier ist der zentrale Bereich 21 der Stellmembran 2 aus einem elastisch-flexiblen Material, wie Elastomer, gebildet. Radial außen vom zentralen Bereich 21 liegt in der Stellmembran 2 ein ringförmiger Membrantragkörper 23, der zur Zentrierung und Abstützung des oberen Endes der Regelfeder 5 dient.

In der unteren Kammer 13 liegt auch hier ein Rohrstutzen 30, der einen Abströmquerschnitt 3 umschließt. Das obere Stirnende des Rohrstutzens 30 bildet auch hier einen Anschlag 31 für die Stellmembran 2.

Im Abströmquerschnitt 3 ist auch hier ein Voranschlag 4 angeordnet, der wieder durch eine Voranschlagstruktur 42 gebildet ist, die sich praktisch über die gesamte axiale Länge des Abströmquerschnitts 3 erstreckt. Die Voranschlagstruktur 42 besitzt auch hier wieder eine Anzahl von parallel zueinander und in Axialrichtung des Abströmquerschnitts 3 verlaufenden, kanalförmigen Durchbrechungen 43.

Den unteren Teil des Gehäuses nimmt der Flüssigkeitssammelraum 15 ein, dessen unterer Teil einen Flüssigkeitssammelbereich 15' bildet. Der obere Bereich des Flüssigkeitssammelraums 15 dient zur Trennung von Gas und Flüssigkeit. Die Abtrennung von im Gas mitgeführten Flüssigkeitsanteilen, z.B. Ölnebel oder Öltropfen, erfolgt im Bereich der Voranschlagstruktur 42 durch die zwangsläufig auftretende scharfe Strömungsumlenkung beim Einströmen des Gases aus der unteren Kammer 13 unter der Stellmembran 2 hindurch in die Durchbrechungen 43. Diese scharfe Umlenkung führt infolge von Massenträgheit zu einem Aufprallen der mitgeführten Flüssigkeitströpfchen auf die Voranschlagstruktur 42, die die kanalförmigen Durchbrechungen 43 begrenzt. Die niedergeschlagene Flüssigkeit folgt der Schwerkraft und der Gasströmung nach unten und gelangt über einen Gaseinlaß 15.1 in den Flüssigkeitssammelraum 15. Von dort tropft die Flüssigkeit nach unten und fällt in den Flüssigkeitssammelbereich 15'. Die kanalförmigen Durchbrechungen 43 haben bei diesem Ausführungsbeispiel eine unterschiedliche axiale Ausdehnung, in der Form, daß das geodätisch untere Ende der kanalförmigen Durchbrechungen eine Ebene aufspannt, die zur Horizontalen geneigt verläuft. Das untere Stirnende des Rohrstutzens 30 kann dabei ebenfalls eine Neigung zur Mittelachse des Rohrstutzens aufweisen. Dadurch kann die niedergeschlagene Flüssigkeit gezielt zur geodätisch tiefsten Stelle des Abströmquerschnitts 3 geleitet werden und von dort in den Flüssigkeitssammelbereich 15' abtropfen. Auf diese Weise wird verhindert, daß abgeschiedene Öltröpfchen von der Strömung mitgerissen werden.

Das von den Flüssigkeitsanteilen befreite Gas gelangt durch den Reingasauslaß 15.2 links oben im Flüssigkeitssammelraum 15 in den Gasauslaß 12 und von dort beispielsweise in den Ansaugtrakt einer zugehörigen Brennkraftmaschine.

Zur Entleerung des Flüssigkeitssammelbereichs 15' von angesammelter Flüssigkeit dient hier ein Blattventil 16, das unter einem Flüssigkeitsauslaß 15.3 liegt. Von dort führt zweckmäßig eine hier nicht dargestellte Leitung die bei geöffnetem Ventil 16 abfließende Flüssigkeit ab und beispielsweise in das Kurbelgehäuse einer zugehörigen Brennkraftmaschine zurück.

Figur 24a veranschaulicht in einer vergrößerten Detaildarstellung die Abscheidung von mitgeführten Flüssigkeitströpfchen aus dem Gasstrom im Bereich des Voranschlages 4. Ganz oben in Figur 24a ist ein Ausschnitt der Stellmembran 2, hier ihres zentralen Bereichs 21 sichtbar. Der Abscheidemechanismus ähnelt dabei dem eines Impaktors.

Im unteren Teil der Figur 24a ist der Rohrstutzen 30 erkennbar; dessen obere, der Stellmembran 2 zugewandte Stirnseite den Anschlag 31 bildet.

Im Rohrstutzen 30 liegt der Voranschlag 4, bestehend aus der die Durchbrechungen 43 aufweisenden Voranschlagstruktur 42.

Durch gestrichelte Linien ist die Strömung eines mit Flüssigkeitströpfchen befrachtete Gases angedeutet, das von radial außen, gemäß Figur 24a von links her, unter die Stellmembran 2 strömt, dort unter einer scharfen Ablenkung um etwa 90° in die Durchbrechungen 43 einströmt und durch diese nach unten weiterströmt. Wie die zeichnerische Darstellung veranschaulicht, können die im Gasstrom mitgeführten Flüssigkeitströpfchen der scharfen Umlenkung beim Eintritt des Gases in die Durchbrechungen 43 nur unvollkommen folgen, was dazu führt, daß die Flüssigkeitströpfchen auf die die Durchbrechungen 43 begrenzende Voranschlagstruktur 42 aufprallen. An der Voranschlagstruktur 42 sammeln sich die Flüssigkeitströpfchen und fließen als Flüssigkeitsfilm der Schwerkraft und der Gasströmung in den Durchbrechungen 43 folgend nach unten.

Auf diese Weise wird neben der Druckregelung im Druckregelventil 1 gleichzeitig eine Flüssigkeitsabscheidung aus dem das Druckregelventil 1 durchströmenden Gasstrom ohne einen aufwendigen separaten Flüssigkeitsabscheider erzielt.

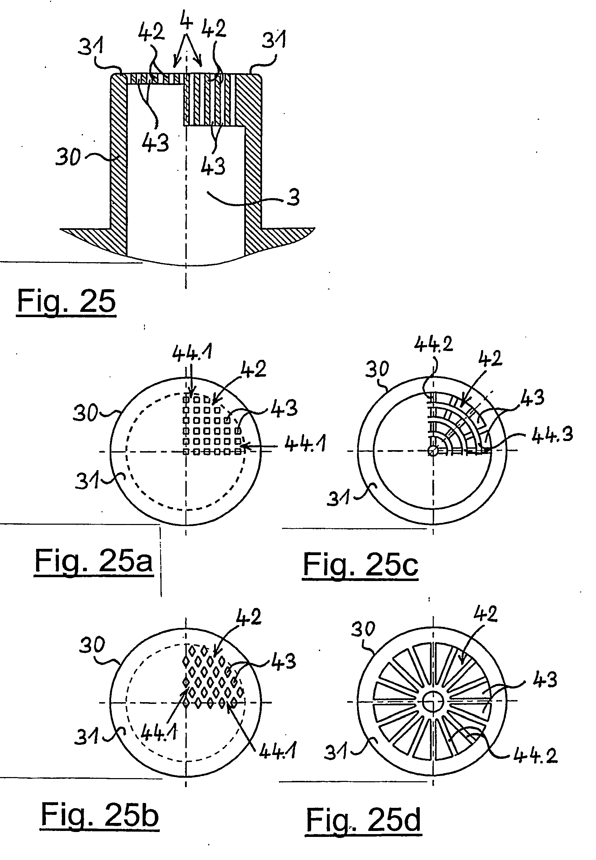

Figur 25 zeigt einen Rohrstutzen 30 als Einzelteil eines Druckregelventils in einer Längsschnittdarstellung. In der linken Hälfte der Figur 25 befindet sich im Abströmquerschnitt 3 eine in Axialrichtung relativ kurze Voranschlagstruktur 42, während in der rechten Hälfte der Figur 25 eine Voranschlagstruktur 42 dargestellt ist, die in Axialrichtung eine wesentlich größere Länge aufweist. Durch geeignete Wahl der axialen Länge der Voranschlagstruktur und damit der Durchbrechungen 43 läßt sich die gewünschte Flüssigkeitsabscheidung aus dem durchströmenden Gas beeinflussen und optimieren.

Die Figuren 25a bis 25d zeigen jeweils in Draufsicht auf den Rohrstutzen 30 verschiedene Ausführungen des Voranschlages 4 und seiner Voranschlagstruktur 42.

In Figur 25a wird die Voranschlagstruktur durch sich rechtwinklig kreuzende, ebene Wände 44.1 gebildet, zwischen denen die im Querschnitt quadratischen Durchbrechungen 43 verlaufen.

In Figur 25b besteht die Voranschlagstruktur 42 ebenfalls aus einander kreuzenden ebenen Wänden 44.1, wobei aber hier ein spitzer Kreuzungswinkel gewählt ist, der zu einem rautenförmigen Querschnitt der Durchbrechungen 43 führt.

In Figur 25c setzt sich die Voranschlagstruktur 42 aus in Radialrichtung verlaufenden Wänden 44.2 und in Umfangsrichtung verlaufenden Wänden 44.3 zusammen, zwischen denen-die Durchbrechungen 43 liegen.

Figur 25d zeigt ein Beispiel für eine Voranschlagstruktur 42, bei der im wesentlichen in Radialrichtung verlaufende Wände 44.2 vorgesehen sind, die radial innen in einem Ring kleineren Durchmessers zusammenlaufen.

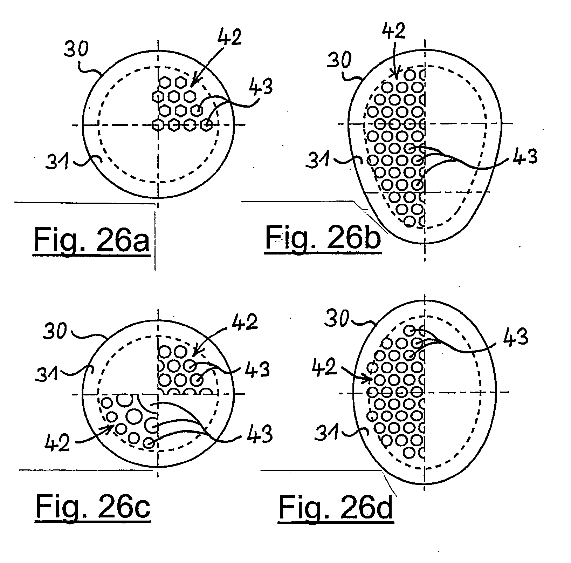

Die Figuren 26a bis 26d zeigen weitere geeignete Ausführungen des Rohrstutzens 30 und des darin vorgesehenen Voranschlages 4.

Gemäß Figur 26a sind die Durchbrechungen 43 in der Voranschlagstruktur 42 mit einem sechseckigen Querschnitt ausgeführt, wodurch sich eine Art Wabenstruktur ergibt.

In Figur 26b sind die Durchbrechungen 43 in der Voranschlagstruktur 42 als kreisrunde Bohrungen ausgeführt. Charakteristisch ist für dieses Beispiel, daß der Rohrstutzen 30 im Querschnitt gesehen hier nicht kreisrund ist, sondern eiförmig verläuft. Auch durch diese spezielle Formgebung kann die Regelcharakteristik des Druckregelventils 1 gezielt beeinflußt werden.

In Figur 26c sind rechts oben und links unten zwei unterschiedliche Ausführungen gezeigt. Rechts oben sind die Durchbrechungen 43 als kreisrunde Bohrungen mit untereinander gleichem Durchmesser ausgeführt. Links unten in Figur 26c sind die Durchbrechungen 43 als Bohrungen mit unterschiedlichen Durchmessern ausgeführt, wobei der Durchmesser von radial innen nach radial außen kleiner wird. Der äußere Umriß des Rohrstutzens 30 ist in Figur 26c wieder kreisrund.

Figur 26d zeigt eine Ausführung, bei der der Rohrstutzen 30 einen elliptischen Umriß hat. Die Durchbrechungen 43 in der Voranschlagstruktur 42 sind hier wieder als kreisrunde, untereinander gleichgroße Bohrungen ausgeführt.

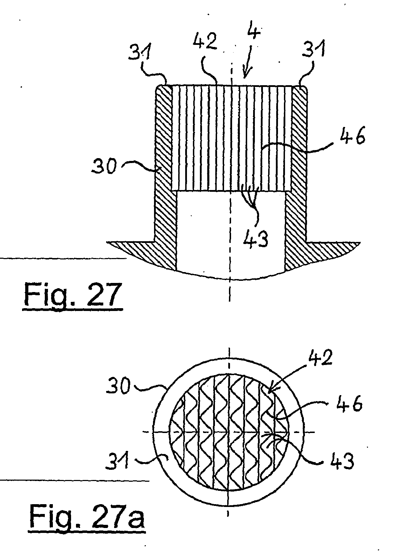

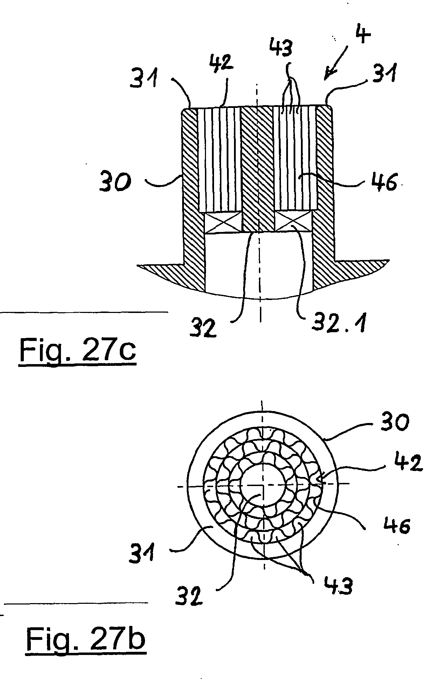

Die Figuren 27, 27a, 27b und 27c zeigen wieder einen Rohrstutzen 30 mit drei weiteren Ausführungen der Voranschlagstruktur 42. In Figur 27 ist im Längsschnitt der Rohrstutzen 30 mit seinem oberseitigen Anschlag 31 und mit dem eingesetzten Voranschlag 4 zu sehen. Die Voranschlagstruktur 42 ist hier oberseitig wieder ebenflächig ausgebildet. Die damit zusammenwirkende Stellmembran 2, die hier nicht dargestellt ist, sollte deshalb vorzugsweise eine konvexe Form haben.

Auch die Voranschlagstruktur 42 gemäß Figur 27 bildet wieder parallel zueinander und in Axialrichtung des Rohrstutzens 30 verlaufende Durchbrechungen 43. Die Voranschlagstruktur 42 ist hier durch einen Wabenkörper 46 gebildet.

Zwei mögliche Ausführungen dieses Wabenkörpers 46 sind in Figur 27a und Figur 27b in Draufsicht gezeigt. In Figur 27a handelt es sich bei dem Wabenkörper 46 um eine lagenförmige Wabenstruktur. Bei dem Beispiel nach Figur 27b ist die Wabenstruktur 46 konzentrisch zum Zentrum des Rohrstutzens 30 ausgeführt.

Figur 27c zeigt einen Rohrstutzen 30 mit einem zentralen Dorn 32, der über Rippen 32.1 mit dem Rohrstutzen 30 verbunden bzw. einstückig mit diesem ausgebildet ist. Auf den zentralen Dorn 32 ist ein Wabenkörper 46 aufgesteckt.

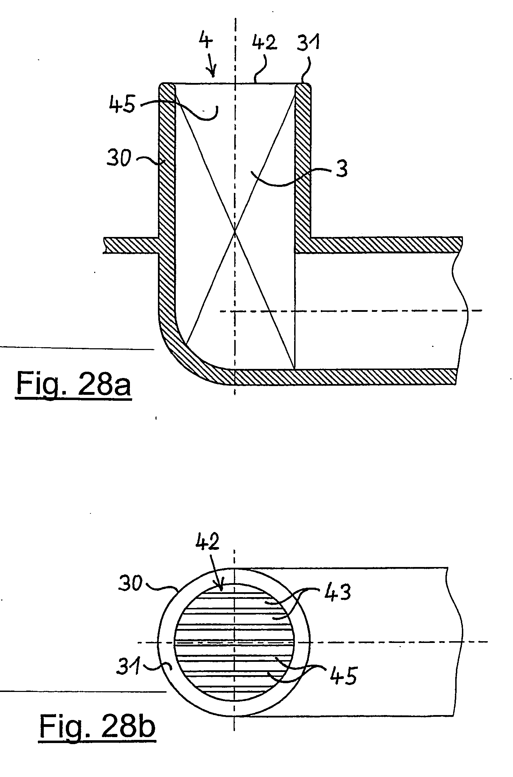

In Figur 28a und Figur 28b ist ein weiteres Beispiel für einen Rohrstutzen 30 für den Abströmquerschnitt 3 mit dem Voranschlag 4 gezeigt. Der Längsschnitt in Figur 28a zeigt den Rohrstutzen 30, der den Abströmquerschnitt 3 begrenzt. Über die gesamte vertikale Länge ist hier im Abströmquerschnitt 3 die Voranschlagstruktur 42 angeordnet, wobei die Voranschlagstruktur 42 hier durch zueinander parallel und parallel zur Zeichnungsebene verlaufende ebene Wände 45 gebildet ist.

Die parallele Anordnung der Wände 45 wird in Figur 28b in der Draufsicht besonders deutlich. Jeweils zwischen zwei Wänden 45 liegt eine freie Durchbrechung 43 für die Führung des Gasstroms.

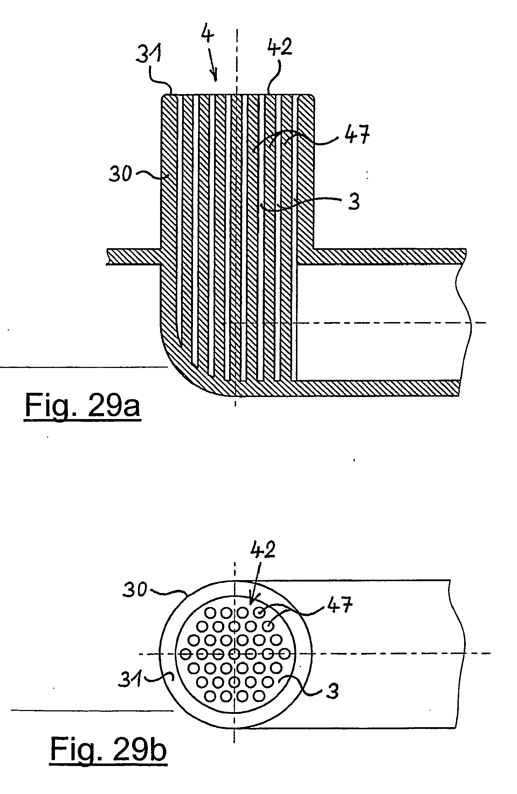

Die Figuren 29a und 29b zeigen jeweils in gleicher Darstellungsweise wie die Figuren 28a und 28b ein weiteres Beispiel eines Rohrstutzens 30 für den Abströmquerschnitt 3 mit dem darin vorgesehenen Voranschlag 4. Charakteristisch für dieses Beispiel ist, daß die Voranschlagstruktur 42 aus einer Anzahl von parallel zueinander und in Axialrichtung des Rohrstutzens 30 verlaufenden Stiften 47 gebildet ist, die bei Herstellung des Rohrstutzens 30 einstückig mit diesem gebildet sind. Eine solche Herstellung ist beispielsweise bei Verwendung von thermoplastischem Kunststoff ohne weiteres möglich.

Figur 29b zeigt die Draufsicht auf den Rohrstutzen 30 mit Voranschlag 4. Die parallelen Stifte 47 bilden die Voranschlagstruktur 42, an deren durch die freien Stiftenden gebildete Oberfläche sich die Membran 2 in der zuvor anhand der Figuren 23a bis 23d beschriebenen Art und Weise mehr oder weniger weit anlegen kann. Zwischen den Stiften 47 verbleibt ein freier Strömungsquerschnitt für das Gas als Abströmquerschnitt 3.

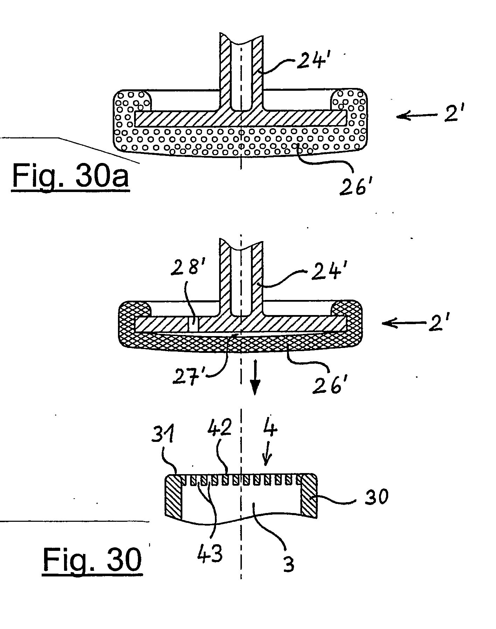

Figur 30 zeigt als Teil-Schnittdarstellung eine Ausführung eines Druckregelventils, bei der nicht die Stellmembran 2 selbst, sondern ein von dieser betätigter Schließkörper 2' mit dem Abströmquerschnitt 3 und dem darin vorgesehenen Voranschlag 4 zusammenwirkt.

In Figur 30 ist unten der obere Endbereich des Rohrstutzens 30 erkennbar, der den Abströmquerschnitt 3 einschließt und dessen obere Stirnseite den Anschlag 31 bildet. Im Abströmquerschnitt 3 ist zur Bildung des Voranschlages 4 auch hier eine Voranschlagstruktur 42 angeordnet. Diese besteht hier aus parallel zueinander und senkrecht zur Zeichnungsebene verlaufenden kurzen Stegen, zwischen denen Durchbrechungen 43 für die Führung des Gases freigehalten sind.

Der Schließkörper 2' besteht hier aus einem unten tellerförmig vergrößerten Verbindungselement 24', das an seinem oberen, hier nicht sichtbaren Ende mit der Stellmembran 2 verbunden ist. Der untere Teil des Schließkörpers 2' ist mit einer Elastomerauflage 26' versehen, die eine in unbelastetem Zustand nach unten weisende konvexe Form hat. Die Auflage 26' ist elastisch und flexibel und legt sich bei Annäherung an den Voranschlag 4 zunächst mit ihrem Zentrum an. Bei weiterer Annäherung legt sich dann die Auflage 26' radial von innen nach außen fortschreitend in zunehmendem Maße an den Voranschlag 4 an, bis sie schließlich auch an dem Anschlag 31 anliegt und so die Schließstellung erreicht.

In dem unbelasteten Zustand der Elastomerauflage 26', wie ihn die Figur 30 zeigt, besteht zwischen der Oberseite der Elastomerauflage 26' und der Unterseite des Verbindungselements 24' ein Hohlraum 27'. Damit das in diesem Hohlraum befindliche Gas bei der Annäherung und beim Anlegen der Elastomerauflage 26' an den Voranschlag 4 entweichen kann, ist eine Bohrung 28' vorgesehen, die von dem Hohlraum 27' durch das tellerförmige vergrößerte untere Ende des Verbindungselements 24' zu dessen Oberseite führt.

Figur 30a zeigt eine abgewandelte Elastomerauflage 26'. Diese zweite Elastomerauflage 26' ist in ihrem unbelasteten Zustand an ihrer nach unten, also zum Voranschlag 4 weisenden Seite ebenfalls konvex ausgeführt. Auch hier ist die Elastomerauflage 26' elastisch und flexibel, gleichzeitig aber auch noch kompressibel. Auf diese Weise wird der Hohlraum 27' mit der Bohrung 28' nicht benötigt.

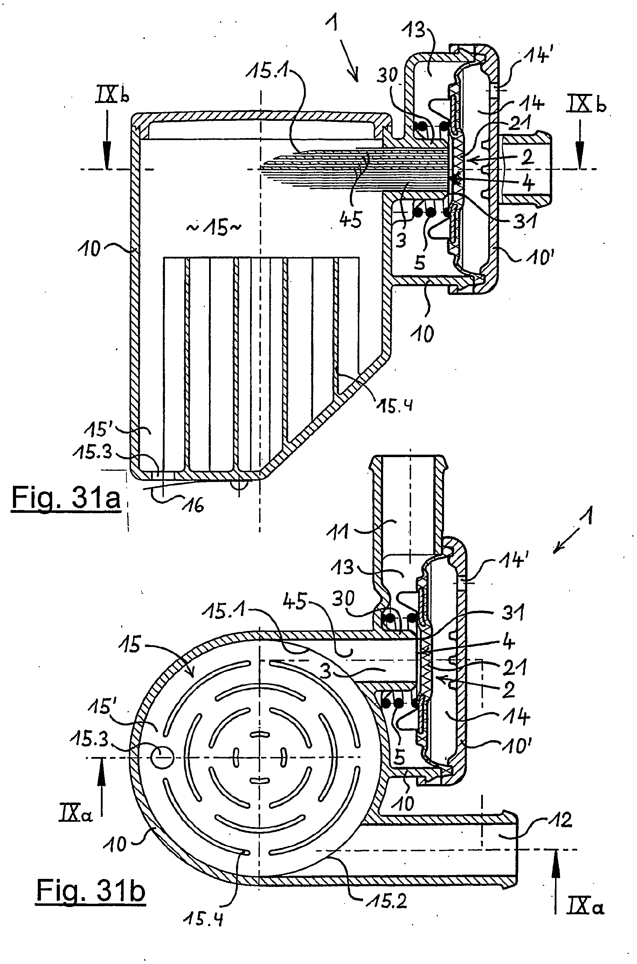

Die Figuren 31a und 31b zeigen ein weiteres, mit einem Flüssigkeitssammelraum 15 ausgestattetes Druckregelventil 1, einmal im Längsschnitt und einmal im Querschnitt.

Im Längsschnitt gemäß Figur 31a liegt rechts oben im Gehäuse 10 die Stellmembran 2, die hier in einer vertikalen Ebene liegt, was für die Funktion der Stellmembran 2 ohne Belang ist. In diesem Beispiel liegt links von der Stellmembran im Gehäuse 10 die Kammer 13, die über einen in Figur 31a nicht sichtbaren Gaseinlaß mit einer Quelle eines Gases verbunden ist. Rechts von der Stellmembran 2 liegt die Kammer 14, die über die Bohrung 14' mit der freien Atmosphäre verbunden ist. Die Stellmembran 2 entspricht hier der Ausführung gemäß Figur 23. Auch hier wird die Stellmembran 2 von der Regelfeder 5 in Öffnungsrichtung beaufschlagt.

In dem von der Regelfeder 5 umgrenzten Bereich liegt koaxial zu dieser der Rohrstutzen 30, der den Abströmquerschnitt 3 für das aus der Kammer 13 geregelt abströmende Gas bildet. Im Rohrstutzen 30 ist auch hier eine Voranschlagstruktur angeordnet, die hier aus parallelen, senkrecht zur Zeichnungsebene verlaufenden Wänden 45 besteht.

Die der Stellmembran 2 zugewandte Stirnseite des Rohrstutzens 30 bildet auch hier den Anschlag 31 für die Schließstellung der Stellmembran 2. Radial innen vom Anschlag 31 liegt der Voranschlag 4, an den sich die Stellmembran bei ihrer Annäherung an den Abströmquerschnitt 3 radial innen beginnend und dann radial nach außen fortschreitend anlegen kann.

Der Flüssigkeitssammelraum 15 ist hier als Flüssigkeitsabscheider ausgebildet und besitzt dazu, wie die Figur 31b im Querschnitt verdeutlicht, eine runde Form. Das durch den Abströmquerschnitt 3 abströmende Gas gelangt durch einen Gaseinlaß 15.1 tangential in den Flüssigkeitssammelraum 15, wodurch das Gas in eine rotierende Strömung versetzt wird. Diese rotierende Strömung führt durch Fliehkraftwirkung zu einem Niederschlag von mitgeführten Flüssigkeitströpfchen an der inneren Oberfläche des Teils des Gehäuses 10, der den Flüssigkeitssammelraum 15 begrenzt. Die niedergeschlagene Flüssigkeit strömt unter Schwerkraftwirkung nach unten und sammelt sich im Flüssigkeitssammelbereich 15'. Von dort kann die gesammelte Flüssigkeit über den Flüssigkeitsauslaß 15.3 bei geöffnetem Blattventil 16 abgeführt werden. Einbauten 15.4 verhindern ein Schwappen der abgeschiedenen Flüssigkeit.

Das Gas verläßt den Flüssigkeitssammelraum 15 durch einen ebenfalls tangential verlaufenden Reingasauslaß 15.2 und strömt durch den Gasauslaß 12 ab.

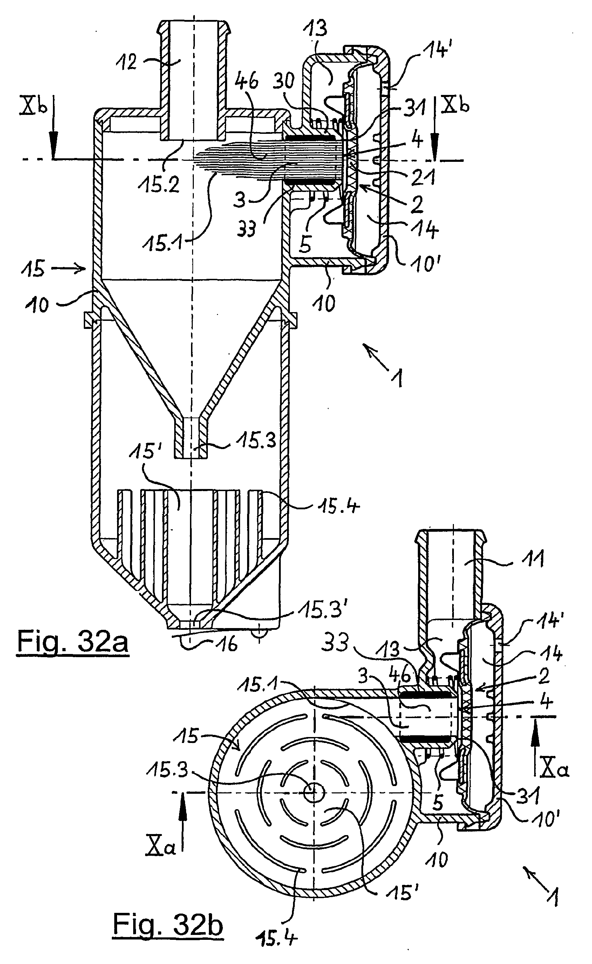

Ein anderes Beispiel eines Druckregelventils 1 mit integriertem Flüssigkeitssammelraum 15 ist in den Figuren 32a und 32b gezeigt, in Figur 32a im Längsschnitt und in Figur 32b im Querschnitt.

Die Stellmembran 2 und der diese aufnehmende Teil des Gehäuses 10 stimmen mit der Ausführung gemäß den Figuren 31a und 31b überein. In den Rohrstutzen 30, der den Abströmquerschnitt 3 umgrenzt, ist hier ein Wabenkörper 46 als Einsatzteil eingefügt, der zumindest einen Teil der Flüssigkeitströpfchen aus dem durchströmenden Gas abscheidet, wie weiter oben schon erläutert.

Der Abströmquerschnitt 3 geht, wie Figur 32b besonders deutlich zeigt, in einen tangentialen Gaseinlaß 15.1 über, der in den auch hier im Querschnitt kreisrund ausgeführten Flüssigkeitssammelraum 15 mündet. Der Teil des Gehäuses 10, der den Flüssigkeitssammelraum 15 bildet, ist in der Form eines Zyklons ausgeführt, um eine weitere Flüssigkeitsabscheidung aus dem Gasstrom zu ermöglichen. Durch den tangentialen Einlaß 15.1 wird die Gasströmung innerhalb des Flüssigkeitssammelraums 15 in eine rotierende Richtung gezwungen, wodurch mitgeführte Flüssigkeitströpfchen sich infolge der Zentrifugalkraft an der inneren Oberfläche des Flüssigkeitssammelraums 15 niederschlagen.

Das Reingas verläßt den als Zyklon wirkenden Flüssigkeitssammelraum 15 durch einen zentral in dessen oberem Bereich liegenden Reingasauslaß 15.2, der in den Gasauslaß 12 übergeht.

Die niedergeschlagene Flüssigkeit fließt durch Schwerkraftwirkung innerhalb des Flüssigkeitssammelraums 15 nach unten und gelangt durch den Flüssigkeitsauslaß 15.3 in den Flüssigkeitssammelbereich 15'. Auch hier können Einbauten 15.4 vorgesehen sein, um ein Schwappen der abgeschiedenen Flüssigkeit zu verhindern. Durch einen weiteren Flüssigkeitsauslaß 15.3' am tiefsten Punkt des Flüssigkeitssammelbereichs 15' kann über ein Blattventil 16 die gesammelte Flüssigkeit abgeführt werden. Um unter ungünstigen Betriebsbedingungen ein Einfrieren der Kanäle des Wabenkörpers 46 zu verhindern, ist um den Abströmstutzen 30 ein elektrisch erwärmbares Heizelement 33 angeordnet, dessen elektrische Zuleitung hier nicht dargestellt ist.

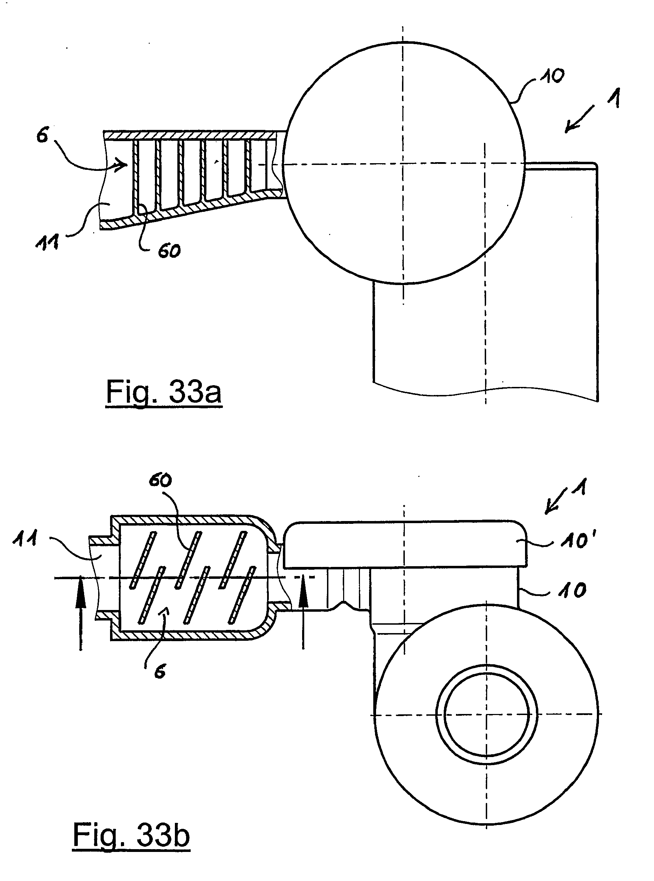

In den Figuren 33a und 33b ist ein weiteres Beispiel eines Druckregelventils 1 dargestellt. Dabei zeigt Figur 33a die Anordnung mit einem Vorabscheider 6 im Längsschnitt und die Figur 33b den Vorabscheider 6 im Querschnitt. Bei dieser Variante ist im Gaseinlaß 11 ein Prallplatten- oder Lamellenabscheider als Vorabscheider 6 angeordnet. Dieser kann vorteilhaft dann vorgesehen sein, wenn der Gasstrom eine hohe Konzentration relativ großer Öltröpfchen enthält. Durch die Anordnung der Prallflächen 60 im Gaseinlaß 11 können die Grobanteile des Ölnebels wirkungsvoll abgeschieden werden. Vorteilhaft kann dabei vorgesehen werden, daß zumindest die geodätisch untere Wandung des Gaseinlaßkanals 11 gegen die Horizontale geneigt ist, derart, daß im Vorabscheider 6 abgeschiedene Öltröpfchen entgegen der Strömungsrichtung in das Kurbelgehäuse zurücklaufen können.

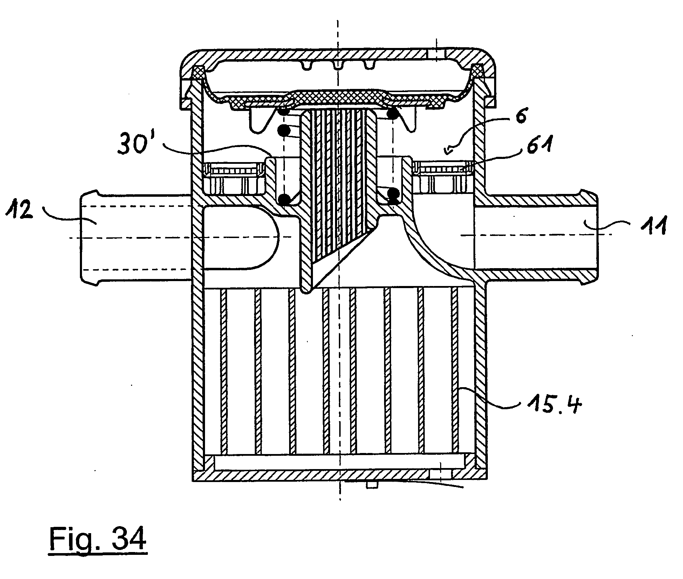

Eine weitere Variante eines Vorabscheiders ist in der Fig. 34 im Längsschnitt dargestellt. Hier ist der Vorabscheider 6 als Siebstruktur 61 ausgeführt, die konzentrisch um den Rohrstutzen 30' und in Strömungsrichtung zwischen dem Gaseinlaß 11 und dem Voranschlag 4 angeordnet ist. Die Poren der Siebstruktur 61 können dabei so bemessen sein, daß Partikel aus dem Gasstrom zurückgehalten werden, die die Kanäle 43 der Voranschlagstruktur verschließen könnten.

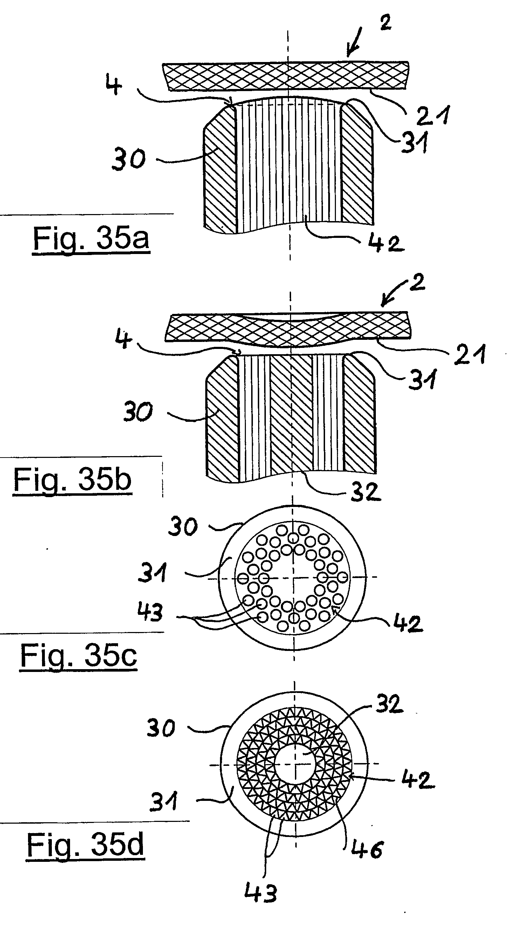

In den Figuren 35a und 35b sind zwei weitere Formen des Voranschlags 4 gezeigt. Fig. 35a weist dabei eine konvexe Ausbildung der Voranschlagsstruktur 42 auf, was z.B. bei Verwendung einer etwas steiferen Membran vorteilhaft sein kann. In der Ausführung gem. Fig. 35b ist zentral im Rohrstutzen 30 des Abströmquerschnitts 3 ein Dorn 32 angeordnet.

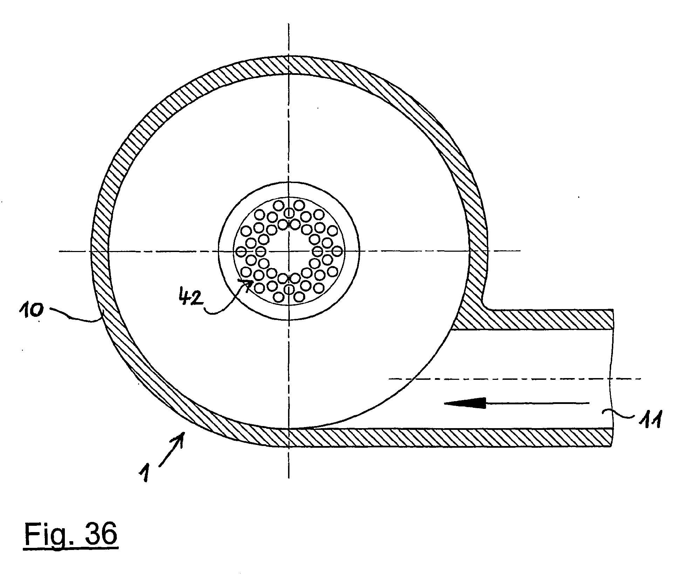

Bei einem tangential angeordneten Gaseintritt 11 gemäß der Figur 36 wird die Luftsäule innerhalb der oberen Kammer 13 in Rotation versetzt. Der so entstehende Gaswirbel sorgt beim Eintritt in die Durchbrechungen 43 der Voranschlagstruktur 42 für eine optimierte Abscheidung der im Gasstrom mitgeführten Öltröpfchen, auch bei größeren Spalten zwischen der Membran und der Voranschlagstruktur.

## Patentansprüche

1. Pneumatisches Druckregelventil (1), das im Verlauf einer Gasleitung angeordnet ist, deren Durchlaß mittels des Druckregelventils (1) in Abhängigkeit vom Differenzdruck zwischen einem Referenzdruck und einem oder mehreren an mindestens einem Eingang (11) des Druckregelventils (1) anliegenden Gasdrücken selbsttätig veränderbar ist, wobei im Druckregelventil (1) eine Stellmembran (2) vorgesehen ist, die einerseits von dem Referenzdruck und andererseits von dem Gasdruck oder den Gasdrücken sowie von einer Regelfeder (5) beaufschlagt ist, wodurch bei Veränderung des Differenzdrucks zwischen den an die Stellmembran (2) angrenzenden Bereichen die Stellmembran (2) verstellt wird und die Stellmembran (2) selbst oder ein von der Stellmembran (2) betätigter Schließkörper (2') den Durchlaß durch einen Abströmquerschnitt (3) des Druckregelventils (1) vergrößert oder verkleinert, und wobei eine an den Abströmquerschnitt (3) membranseitig angrenzende Struktur (30) des Druckregelventils (1) einen Anschlag (31) für die Stellmembran (2) oder für den von der Stellmembran (2) betätigten Schließkörper (2') in deren Schließstellung bildet,
**dadurch gekennzeichnet,**
- **daß** im Druckregelventil (1) mindestens ein Voranschlag (4) so angeordnet ist, daß bei Bewegung der Stellmembran (2) in Schließrichtung die Stellmembran (2) oder der von der Stellmembran (2) betätigte Schließkörper (2') zuerst in Kontakt mit dem Voranschlag (4) gelangt und
- **daß** bei weiterer Bewegung der Stellmembran (2) in Schließrichtung die Stellmembran (2) oder der von der Stellmembran (2) betätigte Schließkörper (2') dann unter elastisch-flexibler Verformung oder unter weiterer elastisch-flexibler Verformung den Durchlaß weiter verkleinert und in einer Endstellung auch in Kontakt mit dem Anschlag (31) gelangt.

2. Druckregelventil nach Anspruch 1, **dadurch gekennzeichnet, daß** die Stellmembran (2) eine Elastomermembran ist und/oder daß der Schließkörper (2') ein Elastomerkörper ist oder eine Elastomerauflage aufweist.

3. Druckregelventil nach Anspruch 1 oder 2, **dadurch gekennzeichnet, daß** der Voranschlag (4) elastisch-flexibel ausgeführt und/oder gehaltert ist.

4. Druckregelventil nach Anspruch 1, 2 oder 3, **dadurch gekennzeichnet, daß** der Voranschlag (4) durch wenigstens einen Stift (40) gebildet ist, der im Anschlag (31), vorzugsweise konzentrisch zu diesem, angeordnet ist.

5. Druckregelventil nach Anspruch 1, 2 oder 3, **dadurch gekennzeichnet, daß** der Voranschlag (4) durch einen Kranz von radial außerhalb des Anschlags (31), vorzugsweise konzentrisch zu diesem, angeordneten Stiften (40) gebildet ist.

6. Druckregelventil nach Anspruch 1, 2 oder 3,**dadurch gekennzeichnet, daß** der Voranschlag (4) radial außerhalb des Anschlags (31) angeordnet und, vorzugsweise konzentrisch zu diesem, ringförmig oder ringsegmentförmig ausgebildet ist.

7. Druckregelventil nach einem der vorangehenden Ansprüche, **dadurch gekennzeichnet, daß** der Voranschlag (4) mit einem Gehäuse (10) des Druckregelventils (1) verbunden oder einstückig ausgeführt ist.

8. Druckregelventil nach einem der vorangehenden Ansprüche, **dadurch gekennzeichnet, daß** die Stellmembran (2) mit einem Membrantragkörper (23) verstärkt ist.

9. Druckregelventil nach Anspruch 8, **dadurch gekennzeichnet, daß** der Membrantragkörper (23) ein vorgefertigtes Einzelteil ist und daß die übrige Stellmembran (2) um den Membrantragkörper (23) herumgespritzt ist.

10. Druckregelventil nach Anspruch 8, **dadurch gekennzeichnet, daß** der Membrantragkörper (23) ein vorgefertigtes Einzelteil ist und daß er regelfederseitig mit der Stellmembran (2) verbunden, insbesondere verknöpft oder verrastet, ist oder daß er lose ist und mittels der Regelfeder (5) regelfederseitig an die Stellmembran (2) angedrückt ist.

11. Druckregelventil nach einem der vorangehenden Ansprüche, **dadurch gekennzeichnet, daß** an der dem Anschlag (31) zugewandten Seite der Stellmembran (2) ein oder mehrere Elemente (22) angeformt oder angebracht sind, die mit dem Voranschlag (4) zusammenwirken.

12. Druckregelventil nach Anspruch 11, **dadurch gekennzeichnet, daß** die Elemente (22) mit einem einen Teil der Stellmembran (2) bildenden Membrantragkörper (23) einstückige oder verbundene Vorsprünge sind.

13. Druckregelventil nach einem der Ansprüche 1 bis 7, **dadurch gekennzeichnet, daß** die Stellmembran (2) oder der Schließkörper (2') in ihrem/seinem mit dem Voranschlag (4) zusammenwirkenden Oberflächenbereich mit einer Verdickung oder Auflage oder Einlage (24) ausgeführt ist.

14. Druckregelventil nach einem der Ansprüche 1 bis 7, **dadurch gekennzeichnet, daß** die Stellmembran (2) oder der Schließkörper (2') in ihrem/seinem mit dem Voranschlag (4) zusammenwirkenden Oberflächenbereich mit einer Dickenverminderung oder Materialschwächung ausgeführt ist.

15. Druckregelventil nach einem der vorangehenden Ansprüche, **dadurch gekennzeichnet, daß** der Voranschlag (4) stirnseitig ausgerundet oder linsenförmig oder ballig oder kegelig oder gestuft ausgebildet ist.

16. Druckregelventil nach Anspruch 4 und einem der Ansprüche 7 bis 15, **dadurch gekennzeichnet, daß** der im Anschlag (31) angeordnete Stift (40) mit einem in Gasströmungsrichtung durch den Anschlag gesehen abnehmenden Außendurchmesser ausgebildet ist.

17. Druckregelventil nach einem der vorangehenden Ansprüche, **dadurch gekennzeichnet, daß** der Vor-Anschlag (4) und/oder der Anschlag (31) und/oder der mit dem Voranschlag (4) und/oder dem Anschlag (31) zusammenwirkende Flächenbereich der Stellmembran (2) mit einer Anti-Haft-Schicht und/oder mit einer Verschleißschutzschicht versehen sind/ist.

18. Druckregelventil nach einem der Ansprüche 7 bis 17, **dadurch gekennzeichnet, daß** das Gehäuse (10) einschließlich des Anschlags (31) und des Voranschlags (4) ein einstückiges Spritzgußteil aus Kunststoff oder Druckgußteil aus Leichtmetall ist.

19. Druckregelventil nach einem der vorangehenden Ansprüche, **dadurch gekennzeichnet, daß** das Druckregelventil (1) ein Kurbelgehäusedruckregelventil für die Regelung des Gasdrucks im Kurbelgehäuse einer Brennkraftmaschine ist und daß das Druckregelventil (1) im Verlauf einer Kurbelgehäuseentlüftungsleitung angeordnet ist.

20. Druckregelventil nach Anspruch 19, **dadurch gekennzeichnet, daß** das Druckregelventil (1) zusammen mit weiteren Komponenten der Brennkraftmaschine in einem mit der Brennkraftmaschine verbindbaren Modul angeordnet ist.

21. Druckregelventil nach Anspruch 20, **dadurch gekennzeichnet, daß** die weiteren Komponenten des Moduls Einrichtungen zur Ölnebelabscheidung aus Kurbelgehäuseentlüftungsgas der Brennkraftmaschine und/oder zur Filtration von Schmieröl und/oder Kraftstoff der Brennkraftmaschine sind.

22. Druckregelventil nach Anspruch 19, 20 oder 21, **dadurch gekennzeichnet, daß** das Druckregelventil (1) oder das das Druckregelventil (1) umfassende Modul in eine Zylinderkopfhaube der Brennkraftmaschine integriert ist.

23. Druckregelventil nach Anspruch 1, **dadurch gekennzeichnet, daß** der Voranschlag (4) durch mindestens eine im Abströmquerschnitt (3) liegende, membran- oder schließkörperseitig flächige, durchbrochene Voranschlagstruktur (42) gebildet ist.

24. Druckregelventil nach Anspruch 23, **dadurch gekennzeichnet, daß** die Voranschlagstruktur (42) einstükkig mit der den Anschlag (31) bildenden Struktur (30) des Druckregelventils (1) ausgeführt ist.

25. Druckregelventil nach Anspruch 23, **dadurch gekennzeichnet, daß** die Voranschlagstruktur (42) in Form eines oder mehrerer Einzelteile ausgeführt und mit der den Anschlag (31) bildenden Struktur (30) des Druckregelventils (1) verbunden ist.

26. Druckregelventil nach einem der Ansprüche 23 bis 25, **dadurch gekennzeichnet, daß** die Stellmembran (2) oder der von der Stellmembran (2) betätigte Schließkörper (2') an ihrer/seiner der Voranschlagstruktur (42) zugewandten Seite konvex geformt ist oder bei Anliegen eines Differenzdrucks zu der konvexen Form verformbar ist.

27. Druckregelventil nach einem der Ansprüche 23 bis 26, **dadurch gekennzeichnet, daß** die Stellmembran (2) eine Elastomermembran ist, die zumindest in ihrem mit der Voranschlagstruktur (42) zusammenwirkenden Bereich tragkörperfrei ist.

28. Druckregelventil nach einem der Ansprüche 23 bis 27, **dadurch gekennzeichnet, daß** die Voranschlagstruktur (42) an ihrer der Stellmembran (2) oder dem Schließkörper (2') zugewandten Seite eben ist.

29. Druckregelventil nach einem der Ansprüche 23 bis 27, **dadurch gekennzeichnet, daß** die Voranschlagstruktur (42) an ihrer der Stellmembran (2) oder dem Schließkörper (2') zugewandten Seite konvex ist.

30. Druckregelventil nach einem der Ansprüche 23 bis 29, **dadurch gekennzeichnet, daß** die Voranschlagstruktur (42) sich in Axialrichtung der den Anschlag (31) bildenden Struktur (30) in diese hinein erstreckt.

31. Druckregelventil nach Anspruch 30, **dadurch gekennzeichnet, daß** die Länge der axialen Erstreckung der Voranschlagstruktur (42) wenigstens 25% eines lichten Innendurchmessers der den Anschlag (31) bildenden Struktur (30) beträgt.

32. Druckregelventil nach Anspruch 31, **dadurch gekennzeichnet, daß** die Länge der axialen Erstreckung der Voranschlagstruktur (42) 50% bis mehr als 100% des lichten Innendurchmessers der Struktur (30) beträgt.

33. Druckregelventil nach einem der Ansprüche 23 bis 32, **dadurch gekennzeichnet, daß** die Durchbrechungen (43) in der Voranschlagstruktur (42) jeweils eine axiale Länge aufweisen, die groß ist im Verhältnis zum jeweiligen lichten Durchmesser der Durchbrechungen (43).

34. Druckregelventil nach Anspruch 33, **dadurch gekennzeichnet, daß** die Durchbrechungen (43) in der Voranschlagstruktur (42) jeweils eine axiale Länge aufweisen, die wenigstens 5 mal so groß ist wie der lichte Durchmesser der jeweiligen Durchbrechungen (43).

35. Druckregelventil nach Anspruch 34, **dadurch gekennzeichnet, daß** die Durchbrechungen (43) in der Voranschlagstruktur (42) jeweils eine axiale Länge aufweisen, die 10 bis 20 mal so groß ist wie der lichte Durchmesser der jeweiligen Durchbrechungen (43).

36. Druckregelventil nach einem der Ansprüche 23 bis 35, **dadurch gekennzeichnet, daß** die Durchbrechungen (43) in der Voranschlagstruktur (42) eine Gesamtfläche aufweisen, die zwischen 20% und 80% der Fläche der den Anschlag (31) bildenden Struktur (30) beträgt.

37. Druckregelventil nach einem der Ansprüche 23 bis 36, **dadurch gekennzeichnet, daß** die den Anschlag (31) bildenden Struktur (30) und die darin vorgesehene Voranschlagstruktur (42) eine runde, elliptische, ovale, eiförmige oder mehreckige äußere Umrißform haben.

38. Druckregelventil nach einem der Ansprüche 23 bis 37, **dadurch gekennzeichnet, daß** die Voranschlagstruktur (42) die Form eines Gitters aus einander kreuzenden flachen ebenen Wänden (44.1) oder aus einander kreuzenden radialen und konzentrischen Wänden (44.2, 44.3) hat.

39. Druckregelventil nach einem der Ansprüche 23 bis 37, **dadurch gekennzeichnet, daß** die Voranschlagstruktur (42) die Form eines Rostes aus zueinander parallelen flachen ebenen Wänden (45) oder aus zueinander konzentrischen Wänden hat.

40. Druckregelventil nach einem der Ansprüche 23 bis 37, **dadurch gekennzeichnet, daß** die Voranschlagstruktur (42) die Form eines gewellten, lagenförmigen oder gewickelten Wabenkörpers (46) hat.

41. Druckregelventil nach Anspruch 40, **dadurch gekennzeichnet, daß** der gewickelte Wabenkörper (46) oder die Voranschlagstruktur (42) um einen zentralen Dorn (32) befestigt ist.

42. Druckregelventil nach Anspruch 41, **dadurch gekennzeichnet, daß** der Dorn (32) ein massiver, für das strömende Medium undurchlässiger Körper ist.

43. Druckregelventil nach Anspruch 41, **dadurch gekennzeichnet, daß** der Dorn (32) in seiner Axialrichtung eine Waben- oder Kanalstruktur aufweist.

44. Druckregelventil nach Anspruch 41, **dadurch gekennzeichnet, daß** der Dorn (32) einstückig mit dem Gehäuse (10) ist.

45. Druckregelventil nach einem der Ansprüche 23 bis 41, **dadurch gekennzeichnet, daß** die Voranschlagstruktur (42) die Form eines Betts aus mehreren parallelen, voneinander beanstandeten, länglichen Stiften (47) oder Segmenten hat, deren freie Enden der Stellmembran (2) oder dem Schließkörper (2') zugewandt sind.

46. Druckregelventil nach einem der Ansprüche 23 bis 45, **dadurch gekennzeichnet, daß** die Durchbrechungen (43) in der Voranschlagstruktur (42) jeweils eine runde, elliptische, ovale, mehreckige, schlitzförmige, kreissektorförmige oder kreisringsektorförmige Querschnittsform haben.

47. Druckregelventil nach einem der Ansprüche 23 bis 46, **dadurch gekennzeichnet, daß** die Durchbrechungen (43) in der Voranschlagstruktur (42) alle den gleichen Querschnitt aufweisen.

48. Druckregelventil nach einem der Ansprüche 23 bis 46, **dadurch gekennzeichnet, daß** die Durchbrechungen (43) in der Voranschlagstruktur (42) wenigstens zwei verschiedene Querschnitte aufweisen.

49. Druckregelventil nach Anspruch 48, **dadurch gekennzeichnet, daß** die Durchbrechungen (43) in der Voranschlagstruktur (42) in deren Radialrichtung gesehen innen größer und außen kleiner sind.

50. Druckregelventil nach einem der Ansprüche 23 bis 49, **dadurch gekennzeichnet, daß** der Schließkörper (2') an seiner der Voranschlagstruktur (42) zugewandten Seite eine in Axialrichtung elastisch-flexible und/oder kompressible Auflage (26') trägt.

51. Druckregelventil nach einem der Ansprüche 23 bis 50, **dadurch gekennzeichnet, daß** dieses auslaßseitig mit einem Flüssigkeitssammelraum (15) ausgeführt ist, in dem zumindest die an der Voranschlagstruktur (42) aus dem durch das Druckregelventil (1) strömenden Gasstrom abgeschiedene Flüssigkeit in einem Flüssigkeitssammelbereich (15') sammelbar ist.

52. Druckregelventil nach Anspruch 51, **dadurch gekennzeichnet, daß** der Flüssigkeitssammelraum (15) als im Querschnitt runder Wirbelraum ausgebildet ist, der eine zweite Abscheidestufe bildet, in der Flüssigkeitströpfchen, die hinter der Voranschlagstruktur (42) noch in dem das Druckregelventil (1) durchströmenden Gasstrom enthalten sind, aus diesem durch Zentrifugalkraft abscheidbar sind.

53. Druckregelventil nach Anspruch 52, **dadurch gekennzeichnet, daß** der Flüssigkeitssammelraum (15) in seinem in Einbaulage oberen Teil als Zyklon mit einem tangentialen Gaseinlaß (15.1), einem zentral und axial nach oben abgehenden Reingasauslaß (15.2) und einem nach unten führenden, in den unter dem Zyklon liegenden Flüssigkeitssammelbereich (15') mündenden Flüssigkeitsauslaß (15.3) ausgebildet ist.

54. Druckregelventil nach einem der Ansprüche 51 bis 53, **dadurch gekennzeichnet, daß** der Flüssigkeitssammelbereich (15') über ein Ventil (16), vorzugsweise ein differenzdruckgesteuertes Rückschlagventil, wie Blattventil, mit einer Flüssigkeitsabführ- oder Flüssigkeitsrückführleitung verbunden ist.

55. Druckregelventil nach einem der Ansprüche 23 bis 54, **dadurch gekennzeichnet, daß** die Voranschlagstruktur (42) und/oder die Stellmembran (2) oder der Schließkörper (2') mit einer Heizeinrichtung ausgestattet sind/ist.

56. Druckregelventil nach einem der Ansprüche 23 bis 55, **dadurch gekennzeichnet, daß** in Strömungsrichtung des Gases gesehen vor der Voranschlagstruktur (42) ein grobe Verunreinigungen aus dem Gasstrom abfangender Vorabscheider, vorzugsweise ein Vorsieb (61) und/oder ein Zyklon oder Prallplatten- oder Lamellenabscheider (60), angeordnet ist.

57. Druckregelventil nach einem der Ansprüche 23 bis 56, **dadurch gekennzeichnet, daß** im Ölsammelbehälter (15, 15') Strömungsleitelemente (15.4) angeordnet sind.

58. Druckregelventil nach Anspruch 57, **dadurch gekennzeichnet, daß** die Strömungsleitelemente (15.4) als konzentrisch zueinander angeordnete Leitwände ausgebildet sind und einen kreisförmigen oder kreissegmentförmigen Querschnitt aufweisen.

59. Druckregelventil nach einem der Ansprüche 57 bis 58, **dadurch gekennzeichnet, daß** die Strömungsleitelemente (15.4) Durchbrechungen aufweisen, die in radialer Richtung versetzt zueinander angeordnet sind.

60. Druckregelventil nach einem der Ansprüche 23 bis 59, **dadurch gekennzeichnet, daß** das Druckregelventil in ein Modul zur Reinigung der Kurbelgehäuseentlüftungsgase und/oder in die Zylinderkopfhaube einer Brennkraftmaschine integriert ist.

61. Druckregelventil nach einem der Ansprüche 23 bis 60, **dadurch gekennzeichnet, daß** die untere Kammer (13) eine im Querschnitt runde Wirbelkammer ist, in der der Gaseintritt (11) tangential angeordnet ist und die Gassäule in Rotation versetzbar ist.

## Claims

1. A pneumatic pressure regulating valve (1) arranged in the path of a gas line, the opening of which can be automatically changed by means of said pressure regulating valve (1) in relation to the differential pressure between a reference pressure and one or more gas pressures applied to at least one inlet (11) of said pressure regulating valve (1), wherein a control diaphragm (2) is provided in the pressure regulating valve (1), said control diaphragm (2) being, on the one hand, subjected to the reference pressure and, on the other hand, to the gas pressure or gas pressures as well as to a governor spring (5), wherein a change in the differential pressure between the regions adjacent to the control diaphragm (2) causes an adjustment of the control diaphragm (2) and the control diaphragm (2) itself or a closing element (2') actuated by the control diaphragm (2) increases or reduces the opening through an outflow cross-section (3) of the pressure regulating valve (1), and wherein a structure (30) of the pressure regulating valve (1) that is arranged adjacent to the outflow cross-section (3) on the diaphragm side forms a stop (31) for the control diaphragm (2) or for the closing element (2') actuated by the control diaphragm (2) in the latter's closed position,
**characterized in that**
- at least one preliminary stop (4) is arranged in the pressure regulating valve (1) such that, when the control diaphragm (2) is moving in its closing direction, the control diaphragm (2) or the closing element (2') actuated by the control diaphragm (2) first comes into contact with the preliminary stop (4) and
- that, when the control diaphragm (2) is moving further in its closing direction, the control diaphragm (2) or the closing element (2') actuated by the control diaphragm (2) will then, while being subjected to elastic and flexible deformation or being further subjected to elastic and flexible deformation respectively, further reduces the opening and, in a final position, also comes into contact with the stop (31).

2. A pressure regulating valve according to Claim 1, **characterized in that** the control diaphragm (2) is an elastomeric diaphragm and/or that the closing element (2') is an elastomeric element or comprises an elastomeric lining.

3. A pressure regulating valve according to Claim 1 or 2, **characterized in that** the preliminary stop (4) is designed and/or retained in an elastic and flexible manner.

4. A pressure regulating valve according to Claim 1, 2 or 3, **characterized in that** the preliminary stop (4) is formed by at least one pin (40) which is arranged in, preferrably concentrically to the stop (31).

5. A pressure regulating valve according to Claim 1, 2 or 3, **characterized in that** the preliminary stop (4) is formed by a circle of pins (40) arranged in a radially outward direction from, preferrably concentrically to the stop (31).

6. A pressure regulating valve according to Claim 1, 2 or 3, **characterized in that** the preliminary stop (4) is arranged in a radially outward direction from the stop (31) and is designed in the form of a ring or ring segment, preferrably concentrically to said stop (31).

7. A pressure regulating valve according to anyone of the preceding claims, **characterized in that** the preliminary stop (4) is connected to or formed integrally with a casing (10) of the pressure regulating valve (1).

8. A pressure regulating valve according to anyone of the preceding claims, **characterized in that** the control diaphragm (2) is reinforced with a diaphragm supporting body (23).

9. A pressure regulating valve according to Claim 8, **characterized in that** the diaphragm supporting body (23) is a prefabricated component part and that the remaining control diaphragm (2) is molded around the diaphragm supporting body (23).

10. A pressure regulating valve according to Claim 8, **characterized in that** the diaphragm supporting body (23) is a prefabricated component part and that it is connected, particularly buttoned or engaged to the control diaphragm (2) on the side of the governor spring or that it is loose and pressed onto the control diaphragm (2) by means of and on the side of the governor spring (5).

11. A pressure regulating valve according to anyone of the preceding claims, **characterized in that** one or more elements (22) are formed to fit to or are attached to the control diaphragm (2) side facing the stop (31), said elements (22) cooperating with the preliminary stop (4).

12. A pressure regulating valve according to Claim 11, **characterized in that** the elements (22) are projections formed integrally with or connected to a diaphragm supporting body (23) forming a part of the control diaphragm (2).

13. A pressure regulating valve according to anyone of Claims 1 to 7, **characterized in that** the region of the surface of the control diaphragm (2) or the closing element (2') that cooperates with the preliminary stop (4) is designed with a thickening or a lining or an insert (24).

14. A pressure regulating valve according to anyone of Claims 1 to 7, **characterized in that** the region of the surface of the control diaphragm (2) or the closing element (2') that cooperates with the preliminary stop (4) is designed with a reduction in thickness or a weakening of the material.

15. A pressure regulating valve according to anyone of the preceding claims, **characterized in that** the preliminary stop (4) is rounded or lenticular or spherical or conical or stepped on its front face.

16. A pressure regulating valve according to Claim 4 and to anyone of Claims 7 to 15, **characterized in that** the pin (40) arranged in the stop (31) is designed with a diminishing outside diameter, as seen in the direction of the gas flow through the stop.

17. A pressure regulating valve according to anyone of the preceding claims, **characterized in that** the preliminary stop (4) and/or the stop (31) and/or the region of the surface of the control diaphragm (2) that cooperates with the preliminary stop (4) and/or the stop (31) are/is provided with an anti-stick lining and/or an antiabrasion layer.

18. A pressure regulating valve according to anyone of Claims 7 to 17, **characterized in that** the casing (10) including stop (31) and preliminary stop (4) is a one-piece injection-molded part of plastic or a one-piece die casting of light metal.

19. A pressure regulating valve according to anyone of the preceding claims, **characterized in that** the pressure regulating valve (1) is a crankcase pressure regulating valve for regulating the gas pressure in the crankcase of an internal combustion engine and that the pressure regulating valve (1) is arranged in the path of a crankcase ventilation line.

20. A pressure regulating valve according to Claim 19, **characterized in that** the pressure regulating valve (1), together with further components of the internal combustion engine, is arranged in a module that can be connected to the internal combustion engine.

21. A pressure regulating valve according to Claim 20, **characterized in that** the further components of the module are devices for separating oil mist from the crankcase ventilation gas of the internal combustion engine and/or for filtering lubricating oil and/or fuel of the internal combustion engine.

22. A pressure regulating valve according to Claim 19, 20 or 21, **characterized in that** the pressure regulating valve (1) or the module comprising the pressure regulating valve (1) is integrated in a cylinder head cover of the internal combustion engine.

23. A pressure regulating valve according to Claim 1, **characterized in that** the preliminary stop (4) is formed by at least one preliminary stop structure (42) that is positioned in the outflow cross-section (3) and is flat and perforated on the side of the diaphragm or closing element.

24. A pressure regulating valve according to Claim 23, **characterized in that** the preliminary stop structure (42) is formed integrally with the structure (30) of the pressure regulating valve (1) that forms the stop (31).

25. A pressure regulating valve according to Claim 23, **characterized in that** the preliminary stop structure (42) is designed in the form of one or more component parts and is connected to the structure (30) of the pressure regulating valve (1) that forms the stop (31).

26. A pressure regulating valve according to anyone of Claims 23 to 25, **characterized in that** the control diaphragm (2) or the closing element (2') actuated by the control diaphragm (2) has a convex shape on its side facing the preliminary stop structure (42) or can be deformed to be convex when a differential pressure is applied.

27. A pressure regulating valve according to anyone of Claims 23 to 26, **characterized in that** the control diaphragm (2) is an elastomeric diaphragm, which is free from any supporting body at least in its region cooperating with the preliminary stop structure (42).

28. A pressure regulating valve according to anyone of Claims 23 to 27, **characterized in that** the preliminary stop structure (42) is flat on its side facing the control diaphragm (2) or the closing element (2').

29. A pressure regulating valve according to anyone of Claims 23 to 27, **characterized in that** the preliminary stop structure (42) is convex on its side facing the control diaphragm (2) or the closing element (2').

30. A pressure regulating valve according to anyone of Claims 23 to 29, **characterized in that** the preliminary stop structure (42) extends into the structure (30) forming the stop (31) in axial direction of said structure (30).

31. A pressure regulating valve according to Claim 30, **characterized in that** the length of the axial extension of the preliminary stop structure (42) preferrably amounts to at least 25 percent of a clear inside diameter of the structure (30) forming the stop (31).

32. A pressure regulating valve according to Claim 31, **characterized in that** the length of the axial extension of the preliminary stop structure (42) amounts to 50 percent up to more than 100 percent of the clear inside diameter of the structure (30).

33. A pressure regulating valve according to anyone of Claims 23 to 32, **characterized in that** the breakthroughs (43) in the preliminary stop structure (42) each comprise an axial length that is great in relation to the respective clear diameter of the breakthroughs (43).

34. A pressure regulating valve according to Claim 33, **characterized in that** the breakthroughs (43) in the preliminary stop structure (42) each comprise an axial length that is at least five times as great as the clear diameter of the particular breakthroughs (43).

35. A pressure regulating valve according to Claim 34, **characterized in that that** the breakthroughs (43) in the preliminary stop structure (42) each comprise an axial length that is ten to twenty times as great as the clear diameter of the particular breakthroughs (43).

36. A pressure regulating valve according to anyone of Claims 23 to 35, **characterized in that** the breakthroughs (43) in the preliminary stop structure (42) comprise an overall surface ranging from 20 percent to 80 percent of the surface of the structure (30) forming the stop (31).

37. A pressure regulating valve according to anyone of Claims 23 to 36, **characterized in that** the structure (30) forming the stop (31) and the preliminary stop structure (42) provided therein have a circular, elliptical, oval, ovoid, or polygonal outer contour outline.

38. A pressure regulating valve according to anyone of Claims 23 to 37, **characterized in that** the preliminary stop structure (42) has the form of a lattice of flat and plane walls (44.1) that are intersecting each other or of radial and concentric walls (44.2, 44.3) that are intersecting each other.

39. A pressure regulating valve according to anyone of Claims 23 to 37, **characterized in that** the preliminary stop structure (42) has the form of a grating of flat and plane walls (45) extending in parallel to each other or of walls extending concentrically to each other.

40. A pressure regulating valve according to anyone of Claims 23 to 37, **characterized in that** the preliminary stop structure (42) has the form of a corrugated, layered or wound honeycomb (46).

41. A pressure regulating valve according to Claim 40, **characterized in that** the wound honeycomb (46) or the preliminary stop structure (42) is attached around a central core (32).

42. A pressure regulating valve according to Claim 41, **characterized in that** the core (32) is a solid body that is impermeable to the flowing medium.

43. A pressure regulating valve according to Claim 41, **characterized in that** the core (32) comprises a honeycomb or duct structure in its axial direction.

44. A pressure regulating valve according to Claim 41, **characterized in that** the core (32) is formed integrally with the casing (10).

45. A pressure regulating valve according to anyone of Claims 23 to 41, **characterized in that** the preliminary stop structure (42) has the form of a bed of a plurality of parallel longitudinal pins (47) or segments that are spaced apart from each other and the free ends of which are facing the control diaphragm (2) or the closing element (2').

46. A pressure regulating valve according to anyone of Claims 23 to 45, **characterized in that** the breakthroughs (43) in the preliminary stop structure (42) each have a cross-section that is circular, elliptical, oval, polygonal or slotted or have the shape of a circular sector or circular-ring sector.

47. A pressure regulating valve according to anyone of Claims 23 to 46, **characterized in that** the breakthroughs (43) in the preliminary stop structure (42) all have the same cross-section.

48. A pressure regulating valve according to anyone of Claims 23 to 46, **characterized in that** the breakthroughs (43) in the preliminary stop structure (42) comprise at least two different cross-sections.

49. A pressure regulating valve according to Claim 48, **characterized in that** the breakthroughs (43) in the preliminary stop structure (42) are greater on their inside and smaller on their outside, as seen in the radial direction of said breakthroughs (43).

50. A pressure regulating valve according to anyone of Claims 23 to 49, **characterized in that** the closing element (2') carries on its side facing the preliminary stop structure (42) a lining (26') that is elastic and flexible and/or compressible in axial direction.

51. A pressure regulating valve according to anyone of Claims 23 to 50, **characterized in that** the pressure regulating valve (1) is designed with a liquid collection chamber (15) on its outlet side, wherein at least the liquid separated from the gas flow flowing through the pressure regulating valve (1) at the preliminary stop structure (42) can be collected in a liquid collection region (15').

52. A pressure regulating valve according to Claim 51, **characterized in that** the liquid collection chamber (15) is designed as a vortex chamber that is circular in cross-section and that forms a second separator stage in which liquid droplets still contained in the gas flow through the pressure regulating valve (1) downstream of the preliminary stop structure (42) can be separated from said gas flow by centrifugal force.

53. A pressure regulating valve according to Claim 52, **characterized in that** the part of the liquid collection chamber (15) that is at the top when the latter is in its installation position is designed as a cyclone with a tangential gas inlet (15.1), with a cleaned-gas outlet (15.2) outgoing towards the top both centrally and axially, and with a liquid outlet (15.3) going down and ending in the liquid collection region (15') positioned underneath the cyclone.

54. A pressure regulating valve according to anyone of Claims 51 to 53, **characterized in that** the liquid collection region (15') can be connected to a liquid discharge line or liquid return line via a valve (16), such as a check valve that is controlled by differential pressure, for example a reed valve.

55. A pressure regulating valve according to anyone of Claims 23 to 54, **characterized in that** the preliminary stop structure (42) and/or the control diaphragm (2) or the closing element (2') is/are provided with a heating device.

56. A pressure regulating valve according to anyone of Claims 23 to 55, **characterized in that** a preseparator, preferrably a prescreen (61) and/or a cyclone or an impingement or lamellar separator (60), capturing coarse contaminants from the gas flow, is arranged upstream of the preliminary stop structure (42) as seen in the direction of the gas flow.

57. A pressure regulating valve according to anyone of Claims 23 to 56, **characterized in that** flow guide elements (15.4) are arranged in the oil collection container (15, 15').

58. A pressure regulating valve according to claim 57, **characterized in that** the flow guide elements (15.4) are designed as guide walls that are arranged concentrically to each other and comprise a cross-section that has the shape of a circular sector or circular-ring sector.

59. A pressure regulating valve according to anyone of Claims 57 to 58, **characterized in that** the flow guide elements (15.4) comprise breakthroughs which are arranged staggered in radial direction.

60. A pressure regulating valve according to anyone of Claims 23 to 59, **characterized in that** the pressure regulating valve is integrated in a module for cleaning the crankcase ventilation gases and/or in the cylinder head cover of an internal combustion engine.

61. A pressure regulating valve according to anyone of Claims 23 to 60, **characterized in that** the lower chamber (13) is a vortex chamber that is circular in cross-section and in which the gas inlet (11) is arranged tangentially and the gas column can be caused to rotate.

## Revendications

1. Soupape pneumatique de régulation de pression (1) située sur le tracé d'une conduite de gaz dont il est possible de faire varier le passage automatiquement au moyen de la soupape de régulation de pression (1) en fonction de la pression différentielle entre une pression de référence et une ou plusieurs pressions de gaz appliquées à au moins une entrée (11) de la soupape de régulation de pression (1), une membrane de régulation (2) étant prévue dans la soupape de régulation de pression (1), à laquelle est appliquée, d'une part, la pression de référence et, d'autre part, la pression du gaz ou les pressions de gaz ainsi qu'un ressort de régulation (5), ce par quoi, en cas de modification de la pression différentielle entre les zones adjacentes à la membrane de régulation (2), la membrane de régulation (2) subit un déplacement et la membrane de régulation (2) elle-même ou un corps de fermeture (2') actionné par la membrane de régulation (2) augmente ou réduit le passage par une section d'écoulement d'évacuation (3) de la soupape de régulation de pression (1) et une structure (30) de la soupape de régulation de pression (1), adjacente à la section d'écoulement d'évacuation (3) côté membrane, constitue une butée (31) pour la membrane de régulation (2) ou pour le corps de fermeture (2') actionné par la membrane de régulation (2) dans la position de fermeture de celle-ci,
**caractérisée en ce que**
- dans la soupape de régulation de pression (1) est située au moins une avant-butée (4) de manière telle que, en cas de déplacement de la membrane de régulation (2) dans le sens de la fermeture, la membrane de régulation (2) ou le corps de fermeture (2') actionné par la membrane de régulation (2) parvient tout d'abord en contact avec l'avant-butée (4) et
- étant donné un mouvement supplémentaire de la membrane de régulation (2) dans le sens de la fermeture, la membrane de régulation (2) ou le corps de fermeture (2') actionné par la membrane de régulation (2) réduisent alors davantage encore le passage moyennant une déformation élastique souple ou une déformation élastique souple supplémentaire et, dans une position finale, parviennent également en contact avec la butée (31).

2. Soupape de régulation de pression selon la revendication 1, **caractérisée en ce que** la membrane de régulation (2) est une membrane en élastomère et/ou **en ce que** le corps de fermeture (2') est un corps en élastomère ou présente une couche en élastomère.

3. Soupape de régulation de pression selon la revendication 1 ou 2, **caractérisée en ce que** l'avant-butée (4) est réalisée et/ou maintenue de manière élastique souple.

4. Soupape de régulation de pression selon la revendication 1, 2 ou 3, **caractérisée en ce que** l'avant-butée (4) est constituée par au moins une tige (40) qui est située dans la butée (31), de préférence concentriquement par rapport à celle-ci.

5. Soupape de régulation de pression selon la revendication 1, 2 ou 3, **caractérisée en ce que** l'avant-butée (4) est constituée par une couronne de tiges (40) situées radialement en dehors de la butée (31), de préférence concentriquement par rapport à celle-Cl.

6. Soupape de régulation de pression selon la revendication 1, 2 ou 3, **caractérisée en ce que** l'avant-butée (4) est située radialement en dehors de la butée (31) et est réalisée annulairement ou en forme de segment annulaire, de préférence concentriquement par rapport à celle-ci.

7. Soupape de régulation de pression selon l'une des revendications précédentes, **caractérisée en ce que** l'avant-butée (4) est reliée à un boîtier (10) de la soupape de régulation de pression (1) ou est réalisée d'une seule pièce.

8. Soupape de régulation de pression selon l'une des revendications précédentes, **caractérisée en ce que** la membrane de régulation (2) est renforcée par un corps de support de membrane (23).

9. Soupape de régulation de pression selon la revendication 8, **caractérisée en ce que** le corps de support de membrane (23) est une pièce individuelle préfabriquée et **en ce que** le reste de la membrane de régulation (2) est injecté autour du corps de support de membrane (23).

10. Soupape de régulation de pression selon la revendication 8, **caractérisée en ce que** le corps de support de membrane (23) est une pièce individuelle préfabriquée et **en ce qu'**il est relié à la membrane de régulation (2) côté ressort de régulation, en particulier associé à celle-ci ou enclenché dans celle-ci, ou **en ce qu'**il constitue une pièce mobile et est pressé contre la membrane de régulation (2) au moyen du ressort de régulation (5) côté ressort de régulation.

11. Soupape de régulation de pression selon l'une des revendications précédentes, **caractérisée en ce que** sont formés ou montés, sur le côté de la membrane de régulation (2) tourné vers la butée (31), un ou plusieurs éléments (22) qui coopèrent avec l'avant-butée (4).

12. Soupape de régulation de pression selon la revendication 11, **caractérisée en ce que** les éléments (22) sont des saillies réalisées d'une seule pièce avec ou reliées à un corps de support de membrane (23) qui constitue une partie de la membrane de régulation (2).

13. Soupape de régulation de pression selon l'une des revendications 1 à 7, **caractérisée en ce que** la membrane de régulation (2) ou le corps de fermeture (2'), en leur zone de surface coopérant avec l'avant-butée (4), sont réalisés avec un épaississement ou une couche ou un insert (24).

14. Soupape de régulation de pression selon l'une des revendications 1 à 7, **caractérisée en ce que** la membrane de régulation (2) ou le corps de fermeture (2'), en leur zone de surface coopérant avec l'avant-butée (4), sont réalisés avec une réduction de l'épaisseur ou un affaiblissement du matériau.

15. Soupape de régulation de pression selon l'une des revendications précédentes, **caractérisée en ce que** l'avant-butée (4) est réalisée, côté frontal, sous forme arrondie ou lenticulaire ou bombée ou conique ou étagée.

16. Soupape de régulation de pression selon la revendication 4 et l'une des revendications 7 à 15, **caractérisée en ce que** la tige (40) située dans la butée (31) est réalisée avec un diamètre extérieur qui va se rétrécissant dans le sens de l'écoulement du gaz du point de vue d'un observateur dont le regard traverse la butée.

17. Soupape de régulation de pression selon l'une des revendications précédentes, **caractérisée en ce que** l'avant-butée (4) et/ou la butée (31) et/ou la zone de surface de la membrane de régulation (2) qui coopère avec l'avant-butée (4) et/ou la butée (31) est/sont pourvues d'une couche anti-adhésive et/ou d'une couche de protection contre l'usure.

18. Soupape de régulation de pression selon l'une des revendications 7 à 17, **caractérisée en ce que** le boîtier (10), y compris la butée (31) et l'avant-butée (4), est une pièce en matière plastique moulée par injection en une seule pièce ou une pièce en métal léger moulée sous pression en une seule pièce.

19. Soupape de régulation de pression selon l'une des revendications précédentes, **caractérisée en ce que** la soupape de régulation de pression (1) est une soupape de régulation de pression de carter de vilebrequin pour la régulation de la pression de gaz dans le carter de vilebrequin d'un moteur à combustion interne et **en ce que** la soupape de régulation de pression (1) est située sur le tracé d'une conduite de ventilation de carter de vilebrequin.

20. Soupape de régulation de pression selon la revendication 19, **caractérisée en ce que** la soupape de régulation de pression (1) est située, conjointement avec d'autres composants du moteur à combustion interne, dans un module reliable au moteur à combustion interne.

21. Soupape de régulation de pression selon la revendication 20, **caractérisée en ce que** les autres composants du module sont des dispositifs pour la séparation de brouillard d'huile du gaz de ventilation de carter de vilebrequin du moteur à combustion interne et/ou pour filtrer l'huile de lubrification et/ou le carburant du moteur à combustion interne.

22. Soupape de régulation de pression selon la revendication 19, 20 ou 21, **caractérisée en ce que** la soupape de régulation de pression (1) ou le module comprenant la soupape de régulation de pression (1) sont intégrés dans un couvre-culasse du moteur à combustion interne.

23. Soupape de régulation de pression selon la revendication 1, **caractérisée en ce que** l'avant-butée (4) est constituée par au moins une structure d'avant-butée (42) située dans la section d'écoulement d'évacuation (3), plane côté membrane ou corps de fermeture et perforée.

24. Soupape de régulation de pression selon la revendication 23, **caractérisée en ce que** la structure d'avant-butée (42) est réalisée d'une seule pièce avec la structure (30) de la soupape de régulation de pression (1) qui constitue la butée (31).

25. Soupape de régulation de pression selon la revendication 23, **caractérisée en ce que** la structure d'avant-butée (42) est réalisée sous la forme d'une ou de plusieurs pièces individuelles et est reliée à la structure (30) de la soupape de régulation de pression (1) qui constitue la butée (31).

26. Soupape de régulation de pression selon l'une des revendications 23 à 25, **caractérisée en ce que** la membrane de régulation (2) ou le corps de fermeture (2') actionné par la membrane de régulation (2) sont de forme convexe sur leur côté tourné vers la structure d'avant-butée (42) ou sont déformables pour prendre la forme convexe à l'application d'une pression différentielle.

27. Soupape de régulation de pression selon l'une des revendications 23 à 26, **caractérisée en ce que** la membrane de régulation (2) est une membrane en élastomère, sans corps de support au moins dans sa zone coopérant avec la structure d'avant-butée (42).

28. Soupape de régulation de pression selon l'une des revendications 23 à 27, **caractérisée en ce que** la structure d'avant-butée (42) est plane sur son côté tourné vers la membrane de régulation (2) ou le corps de fermeture (2').

29. Soupape de régulation de pression selon l'une des revendications 23 à 27, **caractérisée en ce que** la structure d'avant-butée (42) est convexe sur son côté tourné vers la membrane de régulation (2) ou le corps de fermeture (2').

30. Soupape de régulation de pression selon l'une des revendications 23 à 29, **caractérisée en ce que** la structure (30) d'avant-butée (42) s'étend, dans le sens axial de la structure constituant la butée (31), dans l'intérieur de celle-ci.

31. Soupape de régulation de pression selon la revendication 30, **caractérisée en ce que** la longueur, sur laquelle la structure d'avant-butée (42) s'étend axialement, équivaut à au moins 25 % d'un diamètre intérieur libre de la structure (30) qui constitue la butée (31).

32. Soupape de régulation de pression selon la revendication 31, **caractérisée en ce que** la longueur, sur laquelle la structure d'avant-butée (42) s'étend axialement, équivaut à un pourcentage allant de 50 % à plus de 100 % du diamètre intérieur libre de la structure (30).

33. Soupape de régulation de pression selon l'une des revendications 23 à 32, **caractérisée en ce que** les perforations (43), dans la structure d'avant-butée (42), présentent respectivement une longueur axiale qui est grande par rapport au diamètre libre respectif des perforations (43).

34. Soupape de régulation de pression selon la revendication 33, **caractérisée en ce que** les perforations (43), dans la structure d'avant-butée (42), présentent chacune une longueur axiale qui équivaut à au moins 5 fois le diamètre libre des perforations respectives (43).

35. Soupape de régulation de pression selon la revendication 34, **caractérisée en ce que** les perforations (43), dans la structure d'avant-butée (42), présentent chacune une longueur axiale qui équivaut à 10 à 20 fois le diamètre libre des perforations respectives (43).

36. Soupape de régulation de pression selon l'une des revendications 23 à 35, **caractérisée en ce que** les perforations (43), dans la structure d'avant-butée (42), présentent une surface totale qui équivaut à un pourcentage compris entre 20 % et 80 % de la surface de la structure (30) qui constitue la butée (31).

37. Soupape de régulation de pression selon l'une des revendications 23 à 36, **caractérisée en ce que** la structure (30) qui constitue la butée (31) et la structure d'avant-butée (42) prévue dedans, ont un contour extérieur de forme ronde, elliptique, ovale, ovoïde ou polygonale.

38. Soupape de régulation de pression selon l'une des revendications 23 à 37, **caractérisée en ce que** la structure d'avant-butée (42) a la forme d'un réseau constitué de parois planes et lisses (44.1) qui se croisent ou de parois radiales et concentriques (44.2, 44.3) qui se croisent.

39. Soupape de régulation de pression selon l'une des revendications 23 à 37, **caractérisée en ce que** la structure d'avant-butée (42) a la forme d'une grille constituée de parois planes et lisses (45), parallèles entre elles ou de parois concentriques entre elles.

40. Soupape de régulation de pression selon l'une des revendications 23 à 37, **caractérisée en ce que** la structure d'avant-butée (42) a la forme d'un corps en nid d'abeilles (46) ondulé, en forme de couches ou enroulé.

41. Soupape de régulation de pression selon la revendication 40, **caractérisé en ce que** le corps en nid d'abeilles enroulé (46) ou la structure d'avant-butée (42) sont fixés autour d'un mandrin central (32).

42. Soupape de régulation de pression selon la revendication 41, **caractérisé en ce que** le mandrin (32) est un corps massif, imperméable au fluide de passage.

43. Soupape de régulation de pression selon la revendication 41, **caractérisé en ce que** le mandrin (32) présente une structure en nid d'abeilles ou de canaux dans son sens axial.

44. Soupape de régulation de pression selon la revendication 41, **caractérisé en ce que** le mandrin (32) est réalisé d'une seule pièce avec le boîtier (10).

45. Soupape de régulation de pression selon l'une des revendications 23 à 41, **caractérisée en ce que** la structure d'avant-butée (42) a la forme d'un lit composé de plusieurs tiges (47) ou segments parallèles, espacés les uns des autres et oblongs, dont les extrémités libres sont tournées vers la membrane de régulation (2) ou le corps de fermeture (2').

46. Soupape de régulation de pression selon l'une des revendications 23 à 45, **caractérisée en ce que** les perforations (43), dans la structure d'avant-butée (42), ont respectivement une section de forme ronde, elliptique, ovale, polygonale, en forme de fente, de secteur de cercle ou de secteur d'anneau de cercle.

47. Soupape de régulation de pression selon l'une des revendications 23 à 46, **caractérisée en ce que** les perforations (43), dans la structure d'avant-butée (42), ont toutes la même section.

48. Soupape de régulation de pression selon l'une des revendications 23 à 46, **caractérisée en ce que** les perforations (43), dans la structure d'avant-butée (42), ont au moins deux sections différentes.

49. Soupape de régulation de pression selon la revendication 48, **caractérisée en ce que** les perforations (43), dans la structure d'avant-butée (42), vues dans le sens radial de celle-ci, sont plus grandes à l'intérieur et plus petites à l'extérieur.

50. Soupape de régulation de pression selon l'une des revendications 23 à 49, **caractérisée en ce que** le corps de fermeture (2'), sur son côté tourné vers la structure d'avant-butée (42), porte une couche (26') élastique souple et/ou compressible dans le sens axial.

51. Soupape de régulation de pression selon l'une des revendications 23 à 50, **caractérisée en ce que** celle-ci est réalisée, côté sortie, avec un espace collecteur de liquide (15), dans lequel peut être collecté, dans une zone collectrice de liquide (15'), au moins le liquide qui, au niveau de la structure d'avant-butée (42), est séparé du courant de gaz qui passe par la soupape de régulation de pression (1).

52. Soupape de régulation de pression selon la revendication 51, **caractérisée en ce que** l'espace collecteur de liquide (15) se présente sous la forme d'un espace de turbulence de section ronde qui constitue un deuxième étage de séparation, dans lequel des gouttelettes de liquide qui, derrière la structure d'avant-butée (42), sont encore contenues dans le courant de gaz qui passe par la soupape de régulation de pression (1), peuvent en être séparées par force centrifuge.

53. Soupape de régulation de pression selon la revendication 52, **caractérisée en ce que** l'espace collecteur de liquide (15), en sa partie supérieure en position de montage, se présente sous la forme d'un cyclone avec une admission de gaz tangentielle (15.1), une sortie de gaz propre (15.2) qui part axialement vers le haut et une sortie de liquide (15.3) qui va vers le bas et débouche dans la zone collectrice de liquide (15') située en dessous du cyclone.

54. Soupape de régulation de pression selon l'une des revendications 51 à 53, **caractérisée en ce que** la zone collectrice de liquide (15') est reliée à une conduite d'évacuation de liquide ou de retour pour le liquide par l'intermédiaire d'une soupape (16), de préférence une soupape de retenue à commande par pression différentielle, comme une soupape à lamelle(s).

55. Soupape de régulation de pression selon l'une des revendications 23 à 54, **caractérisée en ce que** la structure d'avant-butée (42) et/ou la membrane de régulation (2) ou le corps de fermeture (2') est/sont équipés d'un dispositif de chauffage.

56. Soupape de régulation de pression selon l'une des revendications 23 à 55, **caractérisée en ce que**, pour un observateur qui regarde dans le sens de l'écoulement du gaz, un pré-séparateur qui intercepte des impuretés grossières du courant de gaz, de préférence un pré-filtre (61) et/ou un cyclone ou un séparateur à plaques déflectrices ou à lamelles (60), est situé devant la structure d'avant-butée (42).

57. Soupape de régulation de pression selon l'une des revendications 23 à 56, **caractérisée en ce que** des éléments de guidage d'écoulement (15.4) sont situés dans le récipient collecteur d'huile (15, 15').

58. Soupape de régulation de pression selon la revendication 57, **caractérisée en ce que** les éléments de guidage d'écoulement (15.4) se présentent sous la forme de parois de guidage disposées concentriquement les unes par rapport aux autres et présentent une section circulaire ou en forme de segment de cercle.

59. Soupape de régulation de pression selon l'une des revendications 57 à 58, **caractérisée en ce que** les éléments de guidage d'écoulement (15.4) présentent des perforations qui sont situées de manière décalée les unes par rapport aux autres dans le sens radial.

60. Soupape de régulation de pression selon l'une des revendications 23 à 59, **caractérisée en ce que** la soupape de régulation de pression est intégrée dans un module pour nettoyer les gaz de ventilation de carter de vilebrequin et/ou dans le couvre-culasse d'un moteur à combustion interne.

61. Soupape de régulation de pression selon l'une des revendications 23 à 60, **caractérisée en ce que** la chambre inférieure (13) est une chambre à turbulence de section ronde, dans laquelle l'admission de gaz (11) est située tangentiellement et la colonne de gaz peut être mise en rotation.
